(19) Europäisches Patentamt
European Patent Office
Office européen des brevets

(11) **EP 2 622 536 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **11763677.9**

(22) Anmeldetag: **29.09.2011**

(51) Int Cl.:
**G06K 7/10** *(2006.01)* **G06K 19/06** *(2006.01)*

(86) Internationale Anmeldenummer:
**PCT/EP2011/066993**

(87) Internationale Veröffentlichungsnummer:
**WO 2012/041967 (05.04.2012 Gazette 2012/14)**

(54) **VORRICHTUNGEN UND VERFAHREN ZUR ERFASSUNG VON OPTISCHEN BARCODES**

APPARATUSES AND METHODS FOR DETECTING OPTICAL BARCODES

DISPOSITIFS ET PROCÉDÉS POUR DÉTECTER DES CODES-BARRES OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2010 EP 10186031**

(43) Veröffentlichungstag der Anmeldung:
**07.08.2013 Patentblatt 2013/32**

(73) Patentinhaber:
• **Roche Diagnostics GmbH**
**68305 Mannheim (DE)**
Benannte Vertragsstaaten:
**DE**
• **F.Hoffmann-La Roche AG**
**4070 Basel (CH)**
Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(72) Erfinder:
• **HENSEL, Uwe**
**68519 Viernheim (DE)**
• **SCHMELZEISEN-REDEKER, Guenther**
**64653 Lorsch (DE)**

(74) Vertreter: **Herzog, Fiesser & Partner Patentanwälte PartG mbB Patentanwälte Dudenstrasse 46 68167 Mannheim (DE)**

(56) Entgegenhaltungen:
**EP-A2- 0 180 283    EP-A2- 0 379 017 EP-A2- 0 492 326**

**Beschreibung**

Gebiet der Erfindung

Die Erfindung betrifft einen Barcodeleser zur Erfassung eines mit einem bewegten Träger verbundenen optischen Barcodes. Weiterhin betrifft die Erfindung eine Vorrichtung zur Übertragung mindestens einer Information, welche einen erfindungsgemäßen Barcodeleser sowie einen Träger mit einem optischen Barcode umfasst. Weiterhin betrifft die Erfindung einen Barcode, insbesondere zur Markierung eines Verbrauchsartikels, insbesondere eines analytischen Testelements zum Einsatz in einer erfindungsgemäßen Vorrichtung, sowie eine Verwendung der Vorrichtung zur Übertragung Verbrauchsmittelspezifischer Informationen von medizinischen Verbrauchsmitteln auf medizinische Geräte. Schließlich betrifft die Erfindung ein Verfahren zur Erfassung eines mit einem bewegten Träger verbundenen optischen Barcodes. Derartige Vorrichtungen und Verfahren können insbesondere im Bereich der medizinischen Diagnostik eingesetzt werden, um Verbrauchsmittel-spezifische Informationen von medizinischen Verbrauchsmitteln wie beispielsweise Teststreifen, Lanzetten, Testelementen oder ähnlichen medizinischen Verbrauchsmitteln auf medizinische Geräte zu übertragen, beispielsweise medizinische Geräte, welche für den Nachweis eines oder mehrerer Analyte in einer Körperflüssigkeit eingerichtet sind. Auch andere Einsatzgebiete der vorliegenden Erfindung sind jedoch grundsätzlich denkbar.

Stand der Technik

Zum Zweck einer Identifizierung bestimmter Produkte oder auch zum Zweck einer Datenspeicherung, insbesondere geringer Informationsmengen, ist aus dem Stand der Technik allgemein die Verwendung von Barcodes, beispielsweise eindimensionaler oder zweidimensionaler Barcodes bekannt. Beispielsweise sind Barcodes bekannt, welche entweder direkt auf die zu identifizierenden oder zu kennzeichnenden Produkte aufgebracht werden, beispielsweise mittels entsprechender Drucktechniken oder auch anderer Techniken, beispielsweise Lasertechniken. Alternativ oder zusätzlich können die Barcodes jedoch auch mittels entsprechender Klebetechniken separat aufgebracht werden, beispielsweise über Barcode-Etiketten.

Ein wichtiges Ausführungsbeispiel, auf welches sich die vorliegende Erfindung insbesondere beziehen kann, auf welches die vorliegende Erfindung jedoch nicht beschränkt ist, sind medizinische Verbrauchsartikel. Derartige medizinische Verbrauchsartikel werden beispielsweise in der medizinischen Diagnostik eingesetzt und können beispielsweise als Einweg-Verbrauchsartikel ausgestaltet sein. Beispiele derartiger Verbrauchsartikel sind Lanzetten zur Erzeugung eines Einstichs in einer Hautpartie eines Benutzers, insbesondere zum Zweck der Generierung einer Probe einer Körperflüssigkeit des Benutzers. Alternativ oder zusätzlich können die Verbrauchsmittel jedoch auch beispielsweise Testelemente umfassen, also Elemente, welche zum Nachweis einer Eigenschaft einer Probe eingesetzt werden. Beispielsweise kann es sich bei dieser Eigenschaft um eine Konzentration eines oder mehrerer Analyte in der Körperflüssigkeit handeln. Zu diesem Zweck können die Verbrauchsartikel, welche beispielsweise als Teststreifen, Teströhrchen, Testbänder oder ähnliche Arten von Verbrauchsartikeln ausgestaltet sein können, insbesondere ein oder mehrere Testfelder umfassen. Diese Testfelder umfassen in der Regel eine oder mehrere Testchemien, welche spezifisch mindestens eine nachweisbare Eigenschaft bei Anwesenheit des nachzuweisenden Analyten ändern. Beispielsweise kann es sich hierbei um eine elektrochemisch oder optisch nachweisbare Eigenschaft handeln, wie beispielsweise einen Farbumschlag. Derartige Testelemente sind aus dem Stand der Technik grundsätzlich bekannt. Diese Testelemente können beispielsweise zum qualitativen und/oder quantitativen Nachweis von Blutglucose, Lactat, Cholesterin, Koagulationswerten oder ähnlichen Parametern der Probe eingesetzt werden.

Bei medizinischen Verbrauchsartikeln, insbesondere im Bereich der medizinischen Diagnostik, muss in der Regel mindestens eine Information über den Verbrauchsartikel in ein mit dem Verbrauchsartikel zusammenwirkendes medizinisches Gerät eingelesen werden. Nach dem Stand der Technik erfolgt dies in der Regel manuell oder über elektronische Übertragungsverfahren, wie beispielsweise so genannte ROM Keys, welche einer Packung der Verbrauchsmittel beigefügt sind und welche beim erstmaligen Verwenden der Verbrauchsmittel in das medizinische Gerät eingegeben werden. Auch andere Arten der Datenübertragung sind jedoch grundsätzlich möglich. Die übertragenen Daten können beispielsweise Informationen dazu enthalten, wie das medizinische Gerät mit den Verbrauchsartikeln zusammenwirkt und/oder wie die Verbrauchsartikel zu verwenden sind. Beispielsweise kann es sich hierbei um Kalibrationsinformationen, chargenspezifische Daten oder ähnliche Daten handeln, da üblicherweise beispielsweise Teststreifen von Charge zu Charge unterschiedliche Eigenschaften aufweisen, die bei der Verwendung der Verbrauchsartikel und insbesondere einer Auswertung von Messwerten, die mittels dieser Verbrauchsartikel gewonnen wurden, zu berücksichtigen sind.

Aus dem Stand der Technik sind zahlreiche verschiedene Arten von Barcodes bekannt. Dabei kann es sich um einfache eindimensionale Barcodes, welche auch als Strichcodes bezeichnet werden, handeln, oder, alternativ oder zusätzlich, auch um mehrdimensionale Barcodes, beispielsweise so genannte Data Matrix Codes. Auf verschiedene Möglichkeiten wird unten noch näher eingegangen.

Barcodes werden üblicherweise über handgeführte oder motorische Durchzugssysteme oder mittels bewegter spiegelabgelenkter Laserstrahlen (Scanner) eingelesen. Derartige Lesesysteme werden vorzugsweise bei eindimensionalen Barcodes verwendet. Für die über deutlich mehr Informationen verfügenden zweidimensionalen oder mehrdimensionalen Barcodes werden in der Regel Kamerasysteme oder auch Spiegel-Scanner eingesetzt. Auch ist die Verwendung von CCD-Zeilensystemen mittels motorischer Vorbeiführung der Gegenstände und Güter senkrecht zu der CCD-Zeile vor allem in Produktionsabläufen und/oder Fließbandverfahren bekannt. Zur Decodierung und zum Auslesen der Informationen dieser mittels Kamerasystemen oder beispielsweise CCD-Zeilen angelieferten Teil-Bilder mehrdimensionaler Barcodes müssen in der Regel hohe Anforderungen sowohl an den Bewegungsablauf des Scannens bzw. Vorbeiführens der Artikel als auch an die verwendeten Computersysteme gestellt werden. Insbesondere müssen in der Regel Hochgeschwindigkeits-Computersysteme eingesetzt werden. Um eine Ortsauflösung der im Barcode enthaltenen Teilmodule, also der binären Informationsträger, zu ermöglichen, wird eine im Code untergebrachte Geschwindigkeitsinformation in Form von relativ definierten Abstandsverhältnissen der Teilmodule bei eindimensionalen Barcodes bzw. Taktspuren bei zweidimensionalen Barcodes verwendet. Derartige Barcodes werden auch als "Self-clocked Barcodes" bezeichnet. Alle bisher verwendeten Barcodes gehen jedoch von einer präzisen Unidirektionalität des Bewegungsprozesses aus, in welchem der Artikel mit dem Barcode an dem Barcodeleser vorbeigeführt wird. Bei eindimensionalen Barcodes wird zwar häufig eine Unidirektionalitätsverletzung erkannt. Bei einer derartigen Erkennung eines so genannten "Bad Scan" ist jedoch in der Regel ein erneuter Scanversuch erforderlich. Spiegelgeführte oder Kamera-gestützte Scansysteme bei zweidimensionalen Barcodes sorgen in vielen Fällen selbsttätig für eine Geschwindigkeitskonstanz und Unidirektionalität.

Aus EP 0 180 283 A2 ist eine Leseeinrichtung für vorbeibewegte, mit einem Datenträger versehene Transportgüter oder Behälter bekannt. Die Leseeinrichtung umfasst einen Lesekopf, der in einer Informationsspur des Datenträgers vorhandene Informationen abtasten kann. Weiterhin ist eine Taktspur vorgesehen, die mittels zweier Sensoren abgetastet wird. Die beiden Sensoren und sind gegeneinander versetzt angeordnet. Mittels dieser Anordnung kann unter anderem eine Bewegungsrichtung des Barcodes erkannt werden und entsprechend ein Auslesen eines Informationsgehalts in ein Schieberegister erfolgen.

Aus EP 0 379 017 A2 ist eine Einrichtung zum Identifizieren von längs einer Bahn bewegten Gegenständen bekannt. Beispielsweise kann es sich um Transportwagen handeln, die mit einem Informationsträger versehen sind. Der Informationsträger umfasst drei Reihen von Löchern. Dabei dienen eine obere Reihe und eine untere Reihe als Informationsreihen, in welchen die kodierte Information vorhanden ist. Die oberen und unteren Reihen sind komplementär, so dass in den übereinander liegenden Löchern der Reihen jeweils ein Loch gesetzt ist. Ist beispielsweise das obere Loch vorhanden, so bedeutete dies, dass an dieser Stelle der darzustellenden Binärzahl eine 1 sitzt, während ein Loch in der unteren Reihe eine 0 repräsentiert. Die mittlere Reihe ist hingegen derart ausgestaltet, dass in dieser jeweils unabhängig von der jeweiligen Information sämtliche Löcher vorhanden sind. Die Markierungen der zweiten Reihe sind gegenüber den Markierungen der ersten und der dritten Reihe versetzt angeordnet. Jeweils eine Reihe ist einem ortsfest angeordnetes Abtastelement zugeordnet. Weiterhin wird ein entsprechender Algorithmus zur Informationserkennung beschrieben. Unter anderem wird hierbei auch eine Flankenerkennung offenbart.

Aus EP 0 492 326 A2 ist ein Testträger-Analysesystem zur Analyse eines Bestandteils einer Körperflüssigkeit bekannt. Unter anderem sind dabei ein Testträger und ein Codeträger vorgesehen.

Sowohl motorisch betriebene Barcodeleser als auch manuell betriebene Barcodeleser können jedoch nach wie vor zu irregulären Bedingungen führen, bei welchen die Anforderungen an eine Geschwindigkeitskonstanz und an eine Unidirektionalität verletzt sind. Beispielsweise können bei motorisch betriebenen Barcodelesern mechanische Widerstände auftreten, welche zu einem Rucken des Antriebssystems führen können. Sollte die Transportrichtung verletzt werden, können auch hierbei Bad Scans auftreten. Manuell betriebene Barcodeleser, bei welchen die mit dem Barcode versehenen Artikel manuell an dem Barcodeleser vorbeigeführt werden, sind in Bezug auf Geschwindigkeitskonstanz zwar vergleichsweise stabil, ein zitternder Bediener des Systems würde jedoch unter Umständen eine Unidirektionalitäts-Anforderung ebenfalls nicht erfüllen.

Aufgabe der Erfindung

Es ist daher eine Aufgabe der vorliegenden Erfindung, Verfahren und Vorrichtungen bereitzustellen, welche die Nachteile der oben beschriebenen, bekannten Verfahren und Vorrichtungen zumindest weitgehend vermeiden. Insbesondere soll ein Barcodeleser, insbesondere für den Einsatz in einem medizinischen Gerät, vorgeschlagen werden, welcher einfach und mit kleinem Bauraum zu realisieren ist und zuverlässig auch in manuell geführten Applikationen eingesetzt werden kann.

Offenbarung der Erfindung

Diese Aufgabe wird gelöst durch die Erfindung mit den Merkmalen der unabhängigen Patentansprüche. Vorteilhafte Weiterbildungen der Erfindung, welche einzeln oder in beliebiger Kombination realisierbar sind, sind in den abhängigen Patentansprüchen dargestellt.

In einem ersten Aspekt wird ein Barcodeleser zur Erfassung eines mit einem bewegten Träger verbundenen Barcodes beschrieben. Unter einem

Barcode wird dabei allgemein ein optisch oder optoelektronisch auslesbarer Informationsträger bezeichnet, welcher eine Mehrzahl von optisch detektierbaren Modulen aufweist, die mindestens zwei verschiedene optisch detektierbare Zustände einnehmen können. Unter einem Modul ist dabei jeweils ein zwei- oder dreidimensionaler Bereich des Barcodes zu verstehen, dessen optisch wahrnehmbare Eigenschaften die mindestens zwei voneinander unterscheidbaren Zustände einnehmen können. Beispielsweise kann es sich dabei um definierte zweidimensionale Bereiche auf einer Oberfläche des Trägers handeln oder auch um dreidimensionale Bereiche innerhalb eines Materials des Trägers. Wichtige Beispiele, auf welche die Anmeldung jedoch nicht beschränkt ist, sind so genannte Strichcodes oder Balkencodes, also eindimensionale Barcodes, bei welchen die Module aus einer Abfolge von Strichen bestehen, die mindestens zwei verschiedene Werte (beispielsweise "Weiß" und "Schwarz") annehmen können. Alternativ oder zusätzlich können auch zweidimensionale Barcodes verwendet werden, beispielsweise so genannte Data Matrix Codes, bei denen Module in zwei Richtungen aufgetragen sind und beispielsweise zu einer Matrix angeordnet sind. In diesem Fall können die Module beispielsweise als Quadrate oder Rechtecke ausgestaltet sein. Auch andere Ausgestaltungen sind jedoch grundsätzlich möglich. Bezüglich möglicher Barcodes kann beispielsweise auf übliche Handelsstrichcodes nach EAN (European Article Number), UPC (Universal Product Code) oder ähnliche Codes verwiesen werden. Auch andere bekannte Normen für Barcodes sind anwendbar. Bezüglich zweidimensionaler Barcodes kann beispielsweise auf Data Matrix Codes, QR-Codes, Codes nach PDF-Standard oder ähnliche Codes verwiesen werden. Dabei können orthogonale Achsensysteme oder auch beispielsweise Achsensysteme mit Polarkoordinaten eingesetzt werden, wobei zweidimensionale Codes mit orthogonalem Achsensystem im Rahmen der vorliegenden Erfindung bevorzugt sind. Die kleinste Informationseinheit der Barcodes sind die Module. Unter den Modulen ist dabei eine Fläche oder ein Raum des Gesamtbereichs der Barcodes zu verstehen, welcher die mindestens zwei optisch detektierbaren Zustände annehmen kann. Bei binären Barcodes, wie sie im Rahmen der vorliegenden Erfindung bevorzugt sind, können diese mindestens zwei Zustände binär sein, d.h. es kann ein erster Zustand oder ein zweiter Zustand eingenommen werden. Auch andere Ausgestaltungen sind jedoch grundsätzlich möglich, also Ausgestaltungen, bei welchen mehr als zwei Zustände möglich sind, was beispielsweise im Rahmen so genannter Graustufen-Codes realisierbar ist.

Bei der optisch wahrnehmbaren Eigenschaft, die die mindestens zwei Zustände einnehmen kann, kann es sich um verschiedene Arten optischer Eigenschaften handeln. Beispielsweise kann es sich hierbei um eine Reflektivität, eine Farbe, eine Fluoreszenz, eine Transparenz oder eine andere Art von optischen Eigenschaften oder eine Kombination der genannten und/oder anderer Eigenschaften handeln. Diese optisch wahrnehmbare Eigenschaft, welche die mindestens zwei Zustände annehmen kann, kann beispielsweise unmittelbar in dem Träger eingebracht sein, beispielsweise in einem Material und/oder einer Oberfläche des Trägers, oder kann als zusätzliches Markierungsmaterial beispielsweise auf den Träger aufgebracht sein. Als Beispiel ist hierbei auf das Aufdrucken einer Farbe auf eine Oberfläche des Trägers zu verweisen, wodurch beispielsweise die Reflektivität und/oder die Transparenz der Trägeroberfläche und/oder eine Fluoreszenzeigenschaft der Trägeroberfläche verändert werden. Dieses zusätzliche Markierungsmaterial kann beispielsweise auf den Träger aufgedruckt, aufgespritzt, aufgetropft oder auch mittels eines separaten Trägerelements, beispielsweise einer Klebefolie, auf den Träger aufgebracht werden. Alternativ kann auch der Träger selbst verändert werden, beispielsweise durch Bestrahlung, beispielsweise mittels eines Lasers, mittels dessen der Barcode unmittelbar auf den Träger oder wiederum auf ein mit dem Träger verbundenes Markierungsmaterial aufgebracht oder in dieses eingebracht wird. Verschiedene Ausgestaltungen sind möglich.

Bei dem Träger kann es sich grundsätzlich um einen beliebigen Träger handeln. Besonders bevorzugt ist es, wenn der Träger im vorliegenden Fall ein medizinischer Verbrauchsartikel oder ein Teil eines medizinischen Verbrauchsartikels ist oder mit einem medizinischen Verbräuchsartikel verbunden ist. Unter einem medizinischen Verbrauchsartikel ist dabei grundsätzlich ein beliebiger Artikel zu verstehen, welcher im Rahmen der Medizin oder Medizintechnik benötigt wird, insbesondere als Hilfsmaterial, beispielsweise in der Therapeutik und/oder Diagnostik. Dabei kann es sich grundsätzlich beispielsweise um ein diagnostisches und/oder therapeutisches Hilfsmittel handeln und/oder um eine Verpackung eines derartigen Hilfsmittels, welche selbst als Verbrauchsartikel bezeichnet werden kann. Ohne Ausschluss möglicher anderer Arten von Verbrauchsmitteln ist hierbei insbesondere auf diagnostische Hilfsmittel zu verweisen, beispielsweise Testelemente wie Teststreifen, Testbänder, Lanzetten oder ähnliches. Beispielsweise kann es sich hierbei um Einzel-Teststreifen handeln, welche eingerichtet sind, um mindestens eine Eigenschaft einer Probe zu analysieren, beispielsweise um einen qualitativen und/oder quantitativen Nachweis mindestens eines Analyten in einer Probe einer Körperflüssigkeit durchzuführen. Diesbezüglich kann beispielsweise auf bekannte optische und/oder elektrochemische Teststreifen verwiesen werden. Verschiedene Ausführungsbeispiele werden unten noch näher genannt.

Unter einem Barcodeleser ist im Rahmen der vorliegenden Erfindung allgemein eine Vorrichtung zu verstehen, welche eingerichtet ist, um den Barcode zumindest insoweit auszulesen als dass die Informationen des Barcodes in elektrische Signale oder Speicherzustände eines Datenspeichers des Barcodelesers umgesetzt werden. Dementsprechend weist der Barcodeleser zumindest eine Vorrichtung auf, welche eingerichtet ist, um die Eigenschaften der Module des Barcodes, welche die mindestens zwei Zustände einnehmen können, qualitativ oder vorzugsweise quantitativ zu erfassen. Beispielsweise kann es sich bei diesen Vorrichtungen, wie unten noch näher erläutert wird, um Vorrichtungen mit einem optischen Emitter zur Emission mindestens einer elektromagnetischen Strahlung, vorzugsweise Licht im sichtbaren und/oder infraroten und/oder ultravioletten Spektralbereich, und/oder einem optischen Detektor zum Empfang elektromagnetischer Strahlung, vorzugsweise wiederum Licht im infraroten und/oder sichtbaren und/oder ultravioletten Spektralbereich, handeln. Allgemein soll im Rahmen der vorliegenden Erfindung unter einer "optischen" Eigenschaft eine Eigenschaft verstanden werden, welche mittels elektromagnetischer Strahlung, vorzugsweise Licht im sichtbaren und/oder ultravioletten und/oder infraroten Spektralbereich, wahrnehmbar ist oder welche auf derartigem Licht basiert.

Der Barcodeleser weist mindestens einen optischen Barcode-Detektor zur mindestens eindimensionalen Erfassung von Informations-Modulen des Barcodes auf. In anderen Worten soll der Barcode eine Mehrzahl von Informations-Modulen umfassen, welche mittels mindestens eines optischen Barcode-Detektors des Barcodelesers erfassbar sind. Unter Informations-Modulen des Barcodes werden dabei die eigentlichen Informationsträger des Barcodes verstanden, in welchen die Information des Barcodes in verschlüsselter Form abgelegt ist. Beispielsweise kann der Barcode-Detektor, wie unten noch näher exemplarisch ausgeführt wird, wie auch optional die anderen, noch näher zu erläuternden Detektoren des Barcodelesers, mindestens ein optisch sensitives Element umfassen, beispielsweise eine Photodiode, eine Photozelle, einen CCD-Chip, einen Phototransistor oder ähnliche optisch sensitive Elemente, welche beispielsweise eine Intensität oder Veränderungen einer Intensität auftreffender elektromagnetischer Strahlung, insbesondere Licht im sichtbaren und/oder infraroten und/oder ultravioletten Spektralbereich, detektieren können. Dabei können die Detektoren ein oder mehrere optisch sensitive Elemente umfassen. Beispielsweise können, wie unten noch näher ausgeführt wird, eindimensionale Detektor-Zeilen mit einer Mehrzahl von in einer Zeile angeordneten optisch sensitiven Elementen bzw. optisch sensitiven Flächen verwendet werden, beispielsweise CCD-Zeilen. Auch zweidimensionale Arrays sind grundsätzlich möglich sowie grundsätzlich auch andere Ausgestaltungen der Detektoren.

Unter einer zumindest eindimensionalen Erfassung von Informations-Modulen des Barcodes soll dabei verstanden werden, dass bei einer Bewegung des Barcodes relativ zu dem Barcodeleser mindestens ein Detektor des Barcode-Detektors in einer zeitlichen Abfolge nacheinander Informationen aufnimmt, vorzugsweise mehrere Detektoren gleichzeitig, beispielsweise sensitive Elemente einer Detektorzeile oder eines Detektor-Arrays wie beispielsweise einer Detektor-Matrix des Barcode-Detektors.

Der Barcodeleser umfasst weiterhin mindestens einen optischen Taktspur-Detektor zur Erfassung von Taktspur-Modulen einer Taktspur des Barcodes. Unter einer Spur ist dabei eine Mehrzahl von aufeinanderfolgenden Modulen zu verstehen, welche nacheinander in einer geraden oder auch gekrümmten Linie in dem Barcode angeordnet sind und welche nicht gleichzeitig als Informations-Module des Barcodes dienen, sondern welche ausschließlich dem Zweck einer Taktung dienen, wenn der Barcode relativ zu dem Barcodeleser bewegt wird. Unter einer Taktung wird dabei eine Synchronisation von aktuell ausgelesenen Informationen des Barcodelesers, die aus den Informations-Modulen aktuell ausgelesen werden, mit einer räumlichen Anordnung innerhalb des Barcodes verstanden, beispielsweise ein zeilenweises Weitertakten zum Zuordnen von Zeileninformationen zu einer bestimmten Zeile des Barcodes, beispielsweise innerhalb eines Speichers des Barcodelesers.

Weiterhin weist der Barcodeleser mindestens einen optischen Referenz-Detektor zur Erfassung mindestens einer Referenz-Information des Barcodes auf. Der Barcodeleser ist eingerichtet, beispielsweise mittels einer entsprechenden Auswertevorrichtung, um aus mindestens einem Signal des Taktspur-Detektors und mindestens einem Signal des Referenz-Detektors auf eine Bewegungsrichtung des Trägers zu schließen. Beispielsweise kann eine Auswertevorrichtung vorgesehen sein, welche aktuelle Signale des Taktspur-Detektors mit Signalen des Referenz-Detektors vergleicht und entsprechend der möglichen auftretenden Fälle auf eine Bewegungsrichtung des Trägers schließt. So kann beispielsweise aus einem Signal des Taktspur-Detektors, insbesondere einer Änderung eines Signalpegels des Taktspur-Detektors, allgemein auf eine Bewegung geschlossen werden, woraus wiederum beispielsweise auf ein Weitertakten einer aktuell von dem Barcode-Detektor ausgelesenen Information geschlossen werden kann und/oder wobei eine Weitertaktung veranlasst werden kann, beispielsweise zum Zweck einer getakteten Datenspeicherung. Aus der zusätzlichen Information des Referenz-Detektors kann dann, insbesondere in Zusammenschau mit dem Signal des Taktspur-Detektors, zusätzlich geschlossen werden, ob das Weitertakten in einer positiven oder in einer negativen Richtung erfolgt oder zu erfolgen hat. Diese Auswertung der Signale kann beispielsweise mittels einer entsprechenden Elektronik implementiert werden, beispielsweise mittels einer Vergleichselektronik und/oder einer elektronischen Tabelle und/oder eines oder mehrerer Diskriminatoren. Alternativ oder zusätzlich kann die optionale Auswertungsvorrichtung auch beispielsweise eine Datenverarbeitungsvorrichtung umfassen, welche die Signale, insbesondere die aktuellen Signale, des TaktspurDetektors und/oder des Referenz-Detektors oder aus diesen Signalen abgeleitete Sekundärsignale verarbeiten und auswerten kann. Insbesondere kann die Auswertevorrichtung eingerichtet sein, um die Signale des Taktspur-Detektors und/oder des Referenz-Detektors, insbesondere die aktuellen Signale, oder aus diesen Signalen abgeleitete Sekundärsignale, mittels mindestens eines datenverarbeitenden Algorithmus auszulesen und/oder zumindest teilweise auszuwerten.

Der Barcodeleser kann insbesondere eingerichtet sein, um mindestens eine durch die Taktspur bedingte Signal-Änderung in dem Signal des Taktspur-Detektors zu erfassen, insbesondere eine positive oder eine negative Flanke in einem optischen und/oder elektrischen Signal. Beispielsweise kann dies durch eine Ableitung des Signals des Taktspur-Detektors erfolgen, welche beispielsweise mit einem oder mehreren Schwellwerten verglichen wird. Derartige Flanken-Detektoren sind aus der Elektronik allgemein bekannt. Beispielsweise kann auf diese Weise auch ein Vorzeichen der Flanke erkannt werden. Derartige Flanken treten beispielsweise bei binären Schwarz-Weiß-Barcodes bei einem Übergang von einem schwarzen Modul zu einem weißen Modul (positive Flanke in einem Reflexionssignal) oder umgekehrt (negative Flanke in einem Reflexionssignal) auf.

Dabei werden vorzugsweise koinzidente Signale des Taktspur-Detektors und des Referenz-Detektors miteinander verglichen, um aus diesen auf eine Bewegungsrichtung des Trägers zu schließen. Unter koinzidenten Signalen sind dabei im Rahmen der vorliegenden Erfindung Signale zu verstehen, welche gleichzeitig aufgenommen werden. Neben einer absoluten Gleichzeitigkeit sind dabei auch Toleranzen möglich, beispielsweise Abweichungen in einem zeitlichen Absolutwert, welche vorzugsweise bei nicht mehr als 200 $\mu$s, vorzugsweise bei nicht mehr als 100 $\mu$s und besonders bevorzugt bei nicht mehr als 50 $\mu$s liegen.

Der Barcodeleser kann insbesondere eingerichtet sein, um aus einem Vorzeichen einer von dem Taktspur-Detektor erfassten Signal-Änderung und aus einem Absolutwert des Signals des Referenz-Detektors, insbesondere einem koinzidenten Signal des Referenz-Detektors, auf die Bewegungsrichtung des Trägers relativ zu dem Barcodeleser zu schließen. Liegen beispielsweise binäre Informationen in den Modulen vor, so können grundsätzlich beispielsweise vier verschiedene Fälle auftreten: So kann beispielsweise eine positive Flanke im Signalpegel des Signals des Referenz-Detektors auftreten, gepaart mit einem positiven Signalpegel ("Weiß" oder "1 ") oder gepaart mit einem negativen Signalpegel ("Schwarz" oder "0"). Alternativ kann auch eine negative Flanke auftreten im Signal des Taktspur-Detektors, gepaart mit positiven oder negativen Signalen im Absolutwert des Signals des Referenz-Detektors. Von diesen vier Möglichkeiten können beispielsweise jeweils zwei einer ersten Bewegungsrichtung des Trägers relativ zum Barcodeleser entsprechen, und die anderen zwei einer zweiten Bewegungsrichtung, beispielsweise einer entgegengesetzten Bewegungsrichtung. Dies wird dadurch realisiert, dass der Referenz-Detektor Signale aufnimmt, welche bei einer Bewegung des Barcodes relativ zum Barcodeleser eine Periodizität aufweisen, die gegenüber einer Periodizität der Signale des Taktspur-Detektors phasenverschoben sind. Diese Phasenverschiebung kann dadurch realisiert werden, wie unten noch näher erläutert wird, dass der Taktspur-Detektor in einem Ortsraum um eine Phase von $2 \cdot H$ oder $n \cdot 2 \cdot H$ verschobene Signale der Taktspur selbst aufnimmt, beispielsweise indem, was vorliegend nicht beansprucht wird, der Referenz-Detektor räumlich gegenüber dem Taktspur-Detektor um eine entsprechende Distanz versetzt ist (beispielsweise parallel zur Bewegungsrichtung) und/oder, was vorliegend beansprucht wird, dass eine separate Referenzspur des Barcodes vermessen wird, welche dieselbe Periodizität (oder ein ganzzahliges Vielfaches) aufweist wie die Taktspur selbst, jedoch gegenüber der Taktspur phasenverschoben ist um einen von $n \cdot 2 \cdot H$ abweichenden Phasenversatz, bezogen auf eine Modulhöhe H der Module in Bewegungsrichtung. Die mindestens eine optionale Referenzspur ist vorzugsweise parallel zur mindestens einen Taktspur ausgerichtet, beispielsweise indem die Referenzspur und die Taktspur beide parallel zur Bewegungsrichtung ausgerichtet sind. Beispiele werden unten noch näher erläutert.

Dementsprechend kann der Barcodeleser beispielsweise eingerichtet sein, um:

- bei Erkennung einer negativen Flanke im Signal des Taktspur-Detektors und einem ersten Signalpegel des Signals des Referenz-Detektors oder einer positiven Flanke im Signal des Taktspur-Detektors und einem zweiten Signalpegel des Signals des Referenz-Detektors auf eine erste Bewegungsrichtung zu schließen und

- bei Erkennung einer positiven Flanke im Signal des Taktspur-Detektors und dem ersten Signalpegel des Signals des Referenz-Detektors oder einer negativen Flanke im Signal des Taktspur-Detektors und dem zweiten Signalpegel des Signals des Referenz-Detektors auf eine der ersten Bewegungsrichtung entgegengesetzte zweite Bewegungsrichtung zu schließen.

Die Bewegungsrichtung kann insbesondere eingesetzt werden, um beim Abspeichern der aus den Informations-Modulen des Barcodes ausgelesenen Informationen ein Weitertakten zu bewirken. So kann der Barcodeleser beispielsweise einen Datenspeicher umfassen, wobei der Barcodeleser eingerichtet ist, um in Zeilen des Barcodes enthaltene Informationen auszulesen und in dem Datenspeicher jeweils mit einem der Zeile entsprechenden Adresszähler zu speichern. Der Barcodeleser kann insbesondere eingerichtet sein, um entsprechend der erkannten Bewegungsrichtung den Adresszähler zu inkrementieren oder zu dekrementieren. Derartige Ausgestaltungen sind insbesondere bei eindimensionalen Barcodes (in diesem Fall enthält eine Zeile des Datenspeichers jeweils genau einen Wert) oder bei zweidimensionalen, rechteckigen Barcodes (in diesem Fall enthält eine Zeile des Datenspeichers eine Mehrzahl von Informationen, entsprechend der Anzahl der Module in einer Zeile des Barcodes) bevorzugt. Beispielsweise kann der Barcode ein rechteckiges Feld von Matrix-förmigen Modulen aufweisen, wobei beispielsweise eine Soll-Bewegungsrichtung des Barcodes bzw. des Trägers relativ zu dem Barcodeleser eine y-Richtung definiert, und eine Richtung senkrecht zu dieser Soll-Bewegungsrichtung eine x-Richtung. Eine Zeile des Barcodes ist dann die Menge der Informations-Module des Barcodes, welche die gleiche y-Koordinate aufweisen. Das rechteckige Feld ist also vorzugsweise mit einer Seite parallel zur Soll-Bewegungsrichtung ausgerichtet. Wie unten noch näher beschrieben wird, kann die tatsächliche Bewegungsrichtung oder Ist-Bewegungsrichtung von der Soll-Bewegungsrichtung abweichen, wobei jedoch vorzugsweise der Barcodeleser derart eingerichtet ist, dass diese Abweichung nicht mehr als 20°, insbesondere nicht mehr als 10°, besonders bevorzugt nicht mehr als 5° beträgt. Insofern wird bei der folgenden Beschreibung, ohne Beschränkung weiterer möglicher Ausgestaltungen, zwischen der Soll-Bewegungsrichtung und der Ist-Bewegungsrichtung nicht mehr unterschieden, und es wird davon ausgegangen, dass die y-Achse parallel zur Bewegungsrichtung ausgerichtet ist. Werden Abweichungen der Bewegungsrichtung beschrieben, so sind Winkelabweichungen zwischen der Ist-Bewegungsrichtung und der Soll-Bewegungsrichtung gemeint.

Weiterhin wird unter dem Ausdruck " in Bewegungsrichtung" grundsätzlich eine Richtung parallel zur Bewegungsrichtung verstanden. Unter einem Schluss auf eine Bewegungsrichtung kann jedoch im Rahmen der vorliegenden Erfindung insbesondere ein Schluss auf ein Vorzeichen der Bewegung verstanden werden, also eine Information darüber, ob die Bewegung in positiver oder in negativer y-Richtung erfolgt. Aus diesem Vorzeichen kann beispielsweise auf eine vorzunehmende Dekrementierung oder Inkrementierung einer Adressinformation geschlossen werden, wie unten noch näher ausgeführt wird.

Der optische Taktspur-Detektor kann als separater Taktspur-Detektor ausgestaltet sein, welcher von dem Barcode-Detektor verschieden ist. Alternativ oder zusätzlich kann der Taktspur-Detektor jedoch auch ganz oder teilweise Bestandteil des Barcode-Detektors sein, d.h. in dem Barcode-Detektor enthalten sein. So kann beispielsweise ein Teil des Barcode-Detektors als Taktspur-Detektor verwendet werden. Analoges gilt auch für den Referenz-Detektor, welcher ebenfalls vorzugsweise als separater Detektor ausgestaltet sein kann. Alternativ kann der Referenz-Detektor jedoch auch wiederum ganz oder teilweise Bestandteil des Barcode-Detektors sein, beispielsweise indem ein Teil des Barcode-Detektors als Referenz-Detektor eingesetzt wird. Vorzugsweise handelt es sich jedoch bei dem Taktspur-Detektor und dem Referenz-Detektor um getrennte, versetzt zueinander angeordnete Detektoren. Insbesondere kann der Referenz-Detektor in einer Richtung senkrecht zur Bewegungsrichtung neben dem Taktspur-Detektor angeordnet sein.

Diese Ausgestaltung ist besonders günstig, wenn Barcodes verwendet werden, welche, wie unten noch näher ausgeführt wird, parallel zur Bewegungsrichtung ausgerichtet, neben der mindestens einen Taktspur, mindestens eine Referenzspur umfassen, welche als Richtungsspur eingesetzt werden kann und welche getrennt von dem Referenz-Detektor ausgelesen werden kann. Wie oben ausgeführt, kann es sich bei dieser Referenzspur beispielsweise um eine zweite Taktspur handeln, welche beispielsweise dieselbe Periodizität aufweist wie die Taktspur, welche jedoch eine Phasenverschiebung gegenüber der Taktspur aufweist. Unter einer " zweiten Taktspur" ist dabei eine Spur zu verstehen, welche in gleicher Weise ausgestaltet ist wie die mindestens eine tatsächlich als Taktspur verwendete Spur, wobei jedoch diese mindestens eine zusätzliche Spur nicht als Taktspur sondern als Referenzspur verwendet wird. Letztendlich kann der Barcode in diesem Fall derart ausgestaltet sein, dass dieser mindestens zwei Taktspuren umfasst, wobei mindestens eine der mindestens zwei Taktspuren als eigentliche Taktspur für die Takt verwendbar ist oder verwendet wird und wobei mindestens eine weitere der mindestens zwei Taktspuren als Referenzspur verwendbar ist oder verwendet wird. Auch andere Ausgestaltungen sind jedoch grundsätzlich möglich. Alternativ oder zusätzlich zu einer Ausgestaltung des Referenz-Detektors mit einem Versatz senkrecht zur Bewegungsrichtung neben dem Taktspur-Detektor ist auch eine Ausgestaltung des Referenz-Detektors möglich, bei welcher dieser in einer Richtung parallel zur Bewegungsrichtung gegenüber dem Taktspur-Detektor versetzt angeordnet ist, was vorliegend jedoch nicht separat beansprucht wird. Insbesondere kann ein Versatz um einen positiven oder negativen Betrag $\Delta$ erfolgen, wobei der Versatz $\Delta$ von einem ganzzahligen Vielfachen einer Modulhöhe der Module des Barcodes in Bewegungsrichtung abweicht. Insbesondere kann ein Versatz gewählt werden, der einem nicht-geradzahligen Vielfachen einer halben Modulhöhe der Taktspur-Module und/oder Referenzspur-Module in Bewegungsrichtung entspricht. Letztere Ausgestaltung eines in Bewegungsrichtung versetzten Referenz-Detektors kann insbesondere gewählt werden, wenn lediglich eine Taktspur eingesetzt wird. In diesem Fall kann der Referenz-Detektor dieselbe Taktspur im Ortsraum phasenversetzt auslesen, wobei der Phasenversatz vorzugsweise von einem ganzzahligen Vielfachen von $2 \cdot H$ abweichen sollte. Auch in diesem Fall kann beispielsweise aus einem Flanken-Signal des Taktspur-Detektors und einem absoluten Signalpegel des Referenz-Detektors auf eine Bewegungsrichtung geschlossen werden. Der räumliche Versatz weicht vorzugsweise von einem geradzahligen Vielfachen einer halben Modulhöhe ab.

Entsprechend dieser möglichen Ausgestaltungen kann die optische Referenz-Information des Barcodes, welche von dem Referenz-Detektor ausgelesen wird, auf verschiedene Weisen ausgestaltet sein. So kann beispielsweise als optische ReferenzInformation eine optische Information einer Referenzspur des Barcodes gewählt werden, also beispielsweise eine lokal am Ort des Referenz-Detektors (bzw. bei mehreren Referenz-Detektoren an den Orten dieser Referenz-Detektoren) vorhandene optische Eigenschaft der Referenzspur. Alternativ oder zusätzlich kann jedoch auch, wie oben ausgeführt, die mindestens eine Taktspur des Barcodes ausgelesen werden. So kann also eine optische Information der Taktspur des Barcodes in einem vorgegebenen Versatz zu einer aktuell von dem Taktspur-Detektor ausgelesenen optischen Information der Taktspur als optische Information der Referenzspur genutzt werden, was vorliegend jedoch nicht beansprucht wird. Insbesondere kann dabei ein Versatz in einer Richtung parallel zur Bewegungsrichtung des Trägers relativ zum Barcodeleser gewählt werden, insbesondere ein von einem ganzzahligen Vielfachen einer Modulhöhe der Taktspur abweichender Versatz.

Wie oben dargestellt, kann der Träger auf verschiedene Weisen ausgestaltet sein. Beispielsweise kann dieser Träger selbst ein Verbrauchsartikel sein, kann Bestandteil eines Verbrauchsartikels sein oder kann mit einem Verbrauchsartikel verbunden sein. Auch andere Ausgestaltungen sind jedoch grundsätzlich möglich. In vielen Fällen ist es dabei günstig, wenn der Barcodeleser selbst eine Aufnahme umfasst, welche eingerichtet ist, um den Träger vollständig oder teilweise aufzunehmen. Insbesondere kann es sich dabei um einen Schlitz handeln, in welchen der Träger ganz oder teilweise einführbar ist, um eine Schiene, in welche der Träger ganz oder teilweise einführbar ist, oder um eine andere Art der Aufnahme. Insbesondere kann die Aufnahme eingerichtet sein, um eine Bewegung des Trägers in der Aufnahme zu ermöglichen, vorzugsweise eine Bewegung lediglich in einer Richtung parallel zu der Bewegungsrichtung. Dabei sind jedoch auch leichte Winkeltoleranzen grundsätzlich möglich, beispielsweise Winkeltoleranzen von vorzugsweise nicht mehr als 20°, insbesondere nicht mehr als 10° und besonders bevorzugt von nicht mehr als 5° oder sogar 3° oder weniger. Derartige Toleranzen können mit gängigen Schienen oder Schlitzen problemlos bewerkstelligt werden, insbesondere in dem Fall, in welchem der Träger optional streifenförmig ausgestaltet ist, beispielsweise als Teststreifen mit einem Barcode. Die Aufnahme kann insbesondere derart eingerichtet sein, dass der Träger in der Aufnahme bewegbar ist, vorzugsweise manuell. Dementsprechend kann die Aufnahme beispielsweise rein passiv ausgestaltet sein, also ohne Aktuatoren, welche eine Bewegung des Trägers relativ zu dem Barcodeleser aktiv herbeiführen würden. Beispielsweise kann dies in Form eines Schlitzes oder einer Schiene erfolgen, welche derart ausgestaltet ist, dass nach wie vor ein manueller Zugriff auf den Träger in der Aufnahme möglich ist. Alternativ zu einer rein manuellen Bewegbarkeit können jedoch gleichwohl in einer anderen Ausgestaltung ein oder mehrere Aktuatoren vorgesehen sein, welche eine Bewegung des Trägers relativ zu dem Barcodeleser aktiv bewirken. Beispielsweise kann der Barcodeleser ganz oder teilweise als Scanner ausgestaltet sein, wobei durch eine manuelle oder automatische Relativbewegung des Trägers und des Barcodelesers oder eines Teils desselben, beispielsweise des Barcode-Detektors, der Barcode über den Barcode-Detektor oder umgekehrt, der Barcode ausgelesen werden kann.

Die Aufnahme ist also grundsätzlich eingerichtet, um eine Bewegung des Trägers relativ zu dem Barcodeleser zu ermöglichen. Diese Bewegung erfolgt vorzugsweise eindimensional, wobei jedoch gleichwohl auch andere Bewegungen möglich sind. Vorzugsweise ist eine lineare Bewegung entlang einer geraden Bewegungsrichtung, also einer Soll-Bewegungsrichtung, gegeben. Auch gekrümmte Bewegungen sind jedoch grundsätzlich denkbar.

Allgemein ist diesbezüglich darauf zu verweisen, dass eine Bewegung des Trägers relativ zu dem Barcodeleser insbesondere eine Bewegung des Trägers und damit des Barcodes relativ zu dem Barcode-Detektor umfassen kann. Unter einer relativen Bewegung des Trägers relativ zu dem Barcodeleser ist dabei eine Bewegung in mindestens einem Koordinatensystem zu verstehen, beispielsweise einem Koordinatensystem, in welchem der Träger und/oder der Barcode ruhen oder in einem Koordinatensystem, in welchem der Barcodeleser oder ein Teil desselben, beispielsweise der Barcode-Detektor, ruhen oder in einem Koordinatensystem, in welchem sowohl der Träger als auch der Barcodeleser bewegt sind. So kann die Relativbewegung derart ausgestaltet sein, dass der Träger und/oder der Barcode sich bewegen, während der Barcodeleser oder ein Teil desselben, beispielsweise der Barcode-Detektor, ruhen. Alternativ kann die Relativbewegung auch derart ausgestaltet sein, dass der Träger und/oder der Barcode ruhen, während der Barcodeleser oder ein Teil desselben, beispielsweise der Barcode-Detektor, sich bewegen. Wiederum alternativ kann die Relativbewegung auch derart ausgestaltet sein, dass sowohl der Träger und/oder der Barcode als auch der Barcodeleser oder ein Teil desselben, beispielsweise der Barcode-Detektor, sich bewegen, wobei beispielsweise ein Abstand zwischen dem Barcode und dem Barcodeleser und/oder dem Barcode-Detektor durch die Bewegung verändert werden kann.

Der Barcodeleser ist vorzugsweise derart eingerichtet, dass während der Bewegung des Trägers in der Aufnahme der Barcode mittels des Barcodelesers ausgelesen werden kann.

Das Auslesen kann beispielsweise durch einen Benutzer initiiert werden, beispielsweise durch Betätigen mindestens eines Knopfes oder Schalters oder einer anderen Art von Betätigungselement. Alternativ oder zusätzlich kann das Auslesen auch automatisch initiiert werden, beispielsweise wenn der Träger mit dem Barcode in eine Aufnahme eingebracht wird, beispielsweise eingeschoben worden. Beispielsweise kann die Aufnahme mindestens einen Schalter aufweisen, wobei bei dem Einbringen oder nach dem Einbringen der Schalter durch den Träger und/oder ein den Träger umfassendes Testelement betätigt wird. Durch dieses Betätigen können beispielsweise die Relativbewegung und/oder das Auslesen des Barcodes initiiert werden.

Weitere mögliche Ausgestaltungen des vorgeschlagenen Barcodelesers betreffen die Ausgestaltung der verschiedenen Detektoren. Insbesondere können einer oder mehrere der Detektoren, also der Barcode-Detektor, der Taktspur-Detektor oder der Referenz-Detektor oder eine beliebige Kombination dieser Detektoren, derart ausgestaltet sein, dass diese paarweise oder allesamt auf ein oder mehrere gemeinsame optische Sensorelemente zurückgreifen. So kann beispielsweise der Barcodeleser mindestens ein optisches Sensorelement umfassen, beispielsweise eine Sensorzeile, insbesondere eine CCD-Zeile, wobei der Taktspur-Detektor und der Referenz-Detektor eingerichtet sind, um das optische Sensorelement zu verwenden. Beispielsweise kann der Taktspur-Detektor einen ersten Abschnitt einer Sensorzeile verwenden, beispielsweise einer CCD-Zeile, und der Referenz-Detektor einen weiteren Abschnitt. Weiterhin kann optional auch der Barcode-Detektor einen Abschnitt dieser Sensorzeile einsetzen. Verschiedene Ausgestaltungen sind möglich. Die gemeinsame Nutzung eines optischen Sensorelements durch mehrere der Detektoren des Barcodelesers kann beispielsweise durch geeignete optische Umlenkelemente erfolgen, wie beispielsweise einen oder mehrere Spiegel, Prismen oder ähnliche Umlenkelemente, so dass beispielsweise optische Signale entsprechend auf das Sensorelement gelenkt werden können.

Neben dem Barcodeleser in einer oder mehreren der oben beschriebenen Ausgestaltungen wird weiterhin eine Vorrichtung zur Übertragung mindestens einer Information vorgeschlagen, welche mindestens einen Barcodeleser gemäß einer oder mehreren der oben beschriebenen Ausgestaltungen umfasst. Weiterhin umfasst die Vorrichtung mindestens einen Träger mit mindestens einem Barcode, beispielsweise mit den oben beschriebenen, den Träger betreffenden Merkmalen. Bei diesem Barcode kann es sich beispielsweise um einen Barcode mit den oben beschriebenen, den Barcode betreffenden Merkmalen handeln.

Der Barcode umfasst eine Mehrzahl von Informations-Modulen sowie mindestens eine Taktspur. Bezüglich der möglichen Ausgestaltungen der Taktspur kann auf die obige Beschreibung verwiesen werden. Wie unten noch näher ausgeführt wird, umfasst der Barcode zusätzlich mindestens eine Referenzspur, oder die Taktspur selbst kann, wie oben ausgeführt, gleichzeitig als Referenzspur verwendet werden, was vorliegend jedoch nicht beansprucht wird. Unter mindestens einer " zusätzlichen" Referenzspur ist dabei mindestens eine Referenzspur zu verstehen, welche getrennt von der mindestens einen Taktspur ausgebildet ist. Beispielsweise kann die mindestens eine Referenzspur neben der mindestens einen Taktspur verlaufen, wobei die Referenzspur beispielsweise unmittelbar an die mindestens eine Taktspur angrenzen kann oder auch getrennt von der mindestens einen Taktspur ausgebildet sein kann, beispielsweise durch eine Beabstandung. Insbesondere kann die mindestens eine Referenzspur parallel zu der mindestens einen Taktspur verlaufen. Beispielsweise kann die mindestens eine optionale Referenzspur parallel versetzt zu der mindestens einen Taktspur sein. Weiterhin weist die mindestens eine Referenzspur dieselbe Periodizität auf wie die mindestens eine Taktspur. Die mindestens eine Referenzspur weist eine Periodizität auf, welche phasenverschoben ist gegenüber einer Periodizität der mindestens einen Taktspur.

Die Vorrichtung ist optional derart eingerichtet, dass der Träger in mindestens einer Bewegungsrichtung manuell relativ zu dem Barcodeleser bewegbar ist. Zu diesem Zweck kann die Vorrichtung beispielsweise, wie oben ausgeführt, mindestens eine Aufnahme zum Aufnehmen des Trägers umfassen. Bezüglich der möglichen Ausgestaltungen der Aufnahme kann auf die obige Beschreibung verwiesen werden. Die Aufnahme kann insbesondere derart eingerichtet sein, dass eine manuelle Bewegung des Trägers relativ zu dem Barcodeleser ermöglicht ist. Auch andere Ausgestaltungen sind jedoch grundsätzlich möglich.

Bei dem Träger kann es sich insbesondere um einen medizinischen Verbrauchsartikel, einen Teil eines medizinischen Verbrauchsartikels oder um ein mit einem medizinischen Verbrauchsartikel verbundenes Trägerelement handeln. Insbesondere kann es sich um ein analytisches Testelement, beispielsweise einen Teststreifen, zum Nachweis mindestens eines Analyten in einer Körperflüssigkeit handeln. Auch andere Ausgestaltungen sind jedoch möglich, insbesondere die oben beschriebenen Ausgestaltungen.

Die Taktspur kann insbesondere parallel zu der Bewegungsrichtung, also zu der Soll-Bewegungsrichtung, angeordnet sein. Die Taktspur kann insbesondere eine Mehrzahl von periodisch alternierenden Taktspur-Modulen aufweisen, wobei die alternierenden Taktspur-Module eingerichtet sind, um beim Passieren des Taktspur-Detektors in dem Taktspur-Detektor alternierend mindestens zwei unterschiedliche Signalpegel zu erzeugen. Eine Wiederholfrequenz der Taktspur-Module in der Bewegungsrichtung kann insbesondere einer Wiederholfrequenz der Informations-Module des Barcodes in der Bewegungsrichtung entsprechen. In anderen Worten können beispielsweise die Modulhöhe und/oder ein Modul-Pitch in Bewegungsrichtung für die Taktspur und die Informations-Module des Barcodes übereinstimmen. Ist eine zusätzliche Referenzspur vorhanden, so kann auch diese dieselbe Wiederholfrequenz aufweisen wie die Taktspur und/oder die Informations-Module des Barcodes. Grundsätzlich sind jedoch allgemein auch andere Ausgestaltungen möglich, beispielsweise indem die Taktspur eine Wiederholfrequenz in Bewegungsrichtung aufweist, welche ein ganzzahliges Vielfaches der Wiederholfrequenz der Informations-Module des Barcodes ist oder ähnliches.

Der Barcode kann insbesondere derart ausgestaltet sein, dass die Informations-Module in mindestens einem Informationsfeld des Barcodes angeordnet sind. Beispielsweise kann dieses Informationsfeld als rechteckiges Feld mit Zeilen und Spalten von Informations-Modulen ausgestaltet sein, wobei die Spalten beispielsweise parallel zu der Bewegungsrichtung ausgerichtet sind. Auch andere Ausgestaltungen sind jedoch grundsätzlich möglich. Die Taktspur kann dann separat von dem Informationsfeld ausgestaltet sein, beispielsweise getrennt von dem Informationsfeld, oder kann auch ganz oder teilweise in dem Informationsfeld enthalten sein. Insbesondere kann eine Randspalte des Informafionsfelds, parallel zur Bewegungsrichtung, auch als Taktspur eingesetzt werden.

Alternativ oder zusätzlich zur Verwendung mindestens einer Randspalte des Informationsfelds als Taktspur und/oder als optionale Referenzspur können die Taktspur und/oder die optionale Referenzspur auch ins Innere des Barcodes verlegt sein. So können beispielsweise die Taktspur und/oder die Referenzspur derart ausgestaltet sein, dass sich senkrecht zur Bewegungsrichtung beidseitig jeweils mindestens eine Spalte mit Informations-Modulen des Informationsfelds anschließt. Insbesondere können die Taktspur und/oder die Referenzspur in einer mittleren Spalte des Barcodes angeordnet sein oder einer Spalte des Barcodes, welche vorzugsweise nicht mehr als fünf und besonders bevorzugt nicht mehr als zwei Modulbreiten von der Mitte des Barcodes entfernt angeordnet ist. Die Anordnung der Taktspur und/oder der Referenzspur im Inneren des Barcodes, vorzugsweise in der Mitte des Barcodes, bietet, wie unten noch näher ausgeführt wird, den Vorteil einer höheren Robustheit bei einem Winkelversatz des Barcodes relativ zur Bewegungsrichtung.

Weiterhin kann das Informationsfeld optional derart ausgestaltet sein, dass dieses mindestens eine Randzeile und/oder mindestens eine Randspalte umfasst, wobei die Module der Randzeile und/oder Randspalte eingerichtet sind, um in dem Barcodeleser einen einheitlichen Signalpegel zu erzeugen. Beispielsweise können eine rein weiße oder rein schwarze Randzeile und eine rein weiße oder eine rein schwarze Randspalte eingesetzt werden. Diese Randzeilen bzw. Randspalten können einerseits als Start-Stopp-Signale eingesetzt werden oder können auch für eine Kalibration von Signalpegeln eingesetzt werden.

Wie oben ausgeführt, weist der Barcode weiterhin mindestens eine Referenzspur auf, welche getrennt von der Taktspur ausgebildet ist. Auch die Referenzspur ist vorzugsweise parallel zu der Bewegungsrichtung angeordnet. Die Referenzspur kann beispielsweise eine Mehrzahl von periodisch alternierenden Referenzspur-Modulen aufweisen, wobei die alternierenden Referenzspur-Module eingerichtet sind, um bei Passieren des Referenz-Detektors in dem Referenz-Detektor alternierend mindestens zwei unterschiedliche Signalpegel zu erzeugen. Die Periodizität der Referenzspur ist dabei derart, dass diese die gleiche Wiederholfrequenz wie die Taktspur aufweist. Die Periodizität der Referenzspur ist jedoch phasenverschoben gegenüber der Periodizität der Taktspur, vorzugsweise um ein nicht-geradzahliges Vielfaches von $H/2.$

Die Module des Barcodes, also die Informations-Module und/oder die Module der Taktspur und/oder die Module der optionalen Referenzspur, können allgemein in Bewegungsrichtung eine Modulhöhe und senkrecht zur Bewegungsrichtung eine Modulbreite aufweisen. Beispielsweise können die Module des Barcodes und/oder die Module der optionalen Referenzspur und/oder die Module der Taktspur eine rechteckige Gestalt aufweisen, wobei die Seitenlänge der Rechtecke in Bewegungsrichtung die Modulhöhe ist und wobei die Seitenlänge der Rechtecke senkrecht zur Bewegungsrichtung die Modulbreite ist. Die Rechtecke können quadratisch oder auch nichtquadratisch sein.

Die Modulhöhe der Module des Barcodes, also eines oder mehrerer der Module ausgewählt aus der Gruppe bestehend aus den Informations-Modulen, den Modulen der Taktspur und den Modulen der Referenzspur, kann gleich zu der Modulbreite sein, kann jedoch insbesondere auch die Modulbreite übersteigen, vorzugsweise um mindestens einen Faktor 1,2, insbesondere um mindestens einen Faktor 1,5 oder sogar mindestens einen Faktor 2. Wie unten noch näher ausgeführt wird, kann durch diese längliche Ausgestaltung der Module auch eine Verkippung der Soll-Bewegungsrichtung zur Ist-Bewegungsrichtung, beispielsweise durch einen verkippt auf den Träger aufgebrachten

Barcode und/oder durch eine Verkippung der Bewegungsrichtung einer relativen Bewegung zwischen Träger und Barcodeleser zu den Spalten des Barcodes bzw. zur Taktspur und/oder Referenzspur, toleriert werden, da nach wie vor, trotz Verkippung, sichergestellt werden kann, dass bei einem zeilenweisen Auslesen trotz der Verkippung noch ein Lesevorgang in derselben Zeile erfolgt.

Neben dem oben beschriebenen Barcodeleser und der oben beschriebenen Vorrichtung in einer oder mehreren der dargestellten optionalen Ausgestaltungen wird weiterhin ein Barcode vorgeschlagen. Der Barcode kann insbesondere Bestandteil eines Verbrauchsartikels sein, insbesondere eines medizinischen Verbrauchsartikels. Ein derartiger Verbrauchsartikel mit mindestens einem Träger und mindestens einem erfindungsgemäßen Barcode kann dementsprechend selbst Gegenstand der vorliegenden Erfindung sein. Insbesondere kann es sich bei dem Verbrauchsartikel um ein analytisches Testelement zum Nachweis mindestens eines Analyten in einer Körperflüssigkeit handeln. Das analytische Testelement umfasst beispielsweise mindestens eine Testchemie zum Nachweis des Analyten. Unter einer Testchemie ist dabei eine Substanz zu verstehen, welche bei Anwesenheit des mindestens einen nachzuweisenden Analyten spezifisch mindestens eine nachweisbare Eigenschaft, beispielsweise eine physikalisch und/oder chemisch nachweisbare Eigenschaft, insbesondere eine elektrochemisch und/oder optisch nachweisbare Eigenschaft, ändert. Das analytische Testelement umfasst insbesondere mindestens einen Träger, beispielsweise einen streifenförmigen oder bandförmigen Träger, und mindestens einen mit dem Träger verbundenen Barcode. Das analytische Testelement ist vorzugsweise eingerichtet, um in einer Vorrichtung gemäß einer oder mehreren der oben beschriebenen Ausgestaltungen eingesetzt zu werden.

Der Barcode umfasst eine Mehrzahl von Informations-Modulen. Weiterhin umfasst der Barcode mindestens eine Taktspur zur Taktung eines Auslesens der Informations-Module mittels mindestens eines Barcodelesers. Zwischen dem Barcode und dem Barcodeleser erfolgt eine Relativbewegung in einer Bewegungsrichtung. Diese Relativbewegung ist derart ausführbar, dass sich grundsätzlich eines oder beide der Elemente Barcode und Barcodeleser bewegen können, also der Barcode, der Barcodeleser oder der Barcode und der Barcodeleser. Unter einer Taktung ist dabei eine Zuordnung mindestens eines aktuell ausgelesenen, durch die Informations-Module bedingten Signals, beispielsweise eines Barcode-Detektors, zu einer Ortsinformation in einer Bewegungsrichtung, beispielsweise in Form eines Adresszählers, zu verstehen. Der Barcode umfasst weiterhin mindestens eine von der Taktspur getrennt ausgestaltete Referenzspur. Die Referenzspur weist gegenüber der Taktspur einen Phasenversatz auf. Bezüglich der weiteren möglichen Ausgestaltungen des erfindungsgemäßen Barcodes kann auf die obige Beschreibung verwiesen werden. Dementsprechend weist der Barcode mindestens eine Taktspur mit den oben beschriebenen Merkmalen auf und zusätzlich mindestens eine Referenzspur. Für weitere mögliche Ausgestaltungen kann auf die obige Beschreibung verwiesen werden.

In einem weiteren Aspekt wird dementsprechend ein Verbrauchsartikel vorgeschlagen, welcher insbesondere als medizinischer Verbrauchsartikel ausgestaltet sein kann. Insbesondere kann es sich dabei um einen medizinischen Verbrauchsartikel gemäß der obigen Beschreibung handeln. Der Verbrauchsartikel kann somit grundsätzlich beliebige Artikel umfassen, welche mit einem Barcode gekennzeichnet werden können. Der Verbrauchsartikel umfasst mindestens einen Träger und mindestens einen mit dem Träger verbundenen Barcode, beispielsweise gemäß der obigen Beschreibung. Der Barcode umfasst eine Mehrzahl von Informations-Modulen. Weiterhin umfasst der Barcode mindestens eine Taktspur zur Taktung eines Auslesens der Informations-Module mittels eines relativ zu dem Barcode in einer Bewegungsrichtung bewegten Barcodelesers. Beispielsweise kann es sich dabei um einen Barcodeleser gemäß einer oder mehreren der oben beschriebenen Ausgestaltungen handeln. Der Barcode umfasst weiterhin mindestens eine von der Taktspur getrennt ausgestaltete Referenzspur, wobei die Referenzspur gegenüber der Taktspur einen Phasenversatz aufweist. Für weitere mögliche Ausgestaltungen der Taktspur, der Referenzspur oder weiterer Bestandteile des Barcodes kann auf die obige Beschreibung verwiesen werden.

Neben dem oben dargestellten Barcodeleser der beschriebenen Vorrichtung und dem analytischen Testelement wird weiterhin die Verwendung einer Vorrichtung gemäß einer der beschriebenen Ausgestaltungen zur Übertragung von Verbrauchsartikel-spezifischen Informationen von mindestens einem medizinischen Verbrauchsartikel auf ein mit dem medizinischen Verbrauchsartikel zusammenwirkendes medizinisches Gerät, insbesondere ein medizinisches Messgerät und/oder Therapiegerät, vorgeschlagen. Unter Verbrauchsartikel-spezifischen Informationen sind dabei Informationen zu verstehen, welche mindestens eine Eigenschaft des medizinischen Verbrauchsartikels charakterisieren. Insbesondere kann es sich hierbei um chargenspezifische Informationen handeln, welche beispielsweise für eine Auswertung einer mittels des medizinischen Verbrauchsartikels durchgeführten Messung heranzuziehen sind und/oder welche eine vorgesehene Verwendung des Verbrauchsartikels betreffen. Alternativ oder zusätzlich können die Verbrauchsartikel-spezifischen Informationen jedoch auch Informationen über eine Art oder mindestens eine andere Eigenschaft des Verbrauchsartikels umfassen, beispielsweise einen Hersteller, eine Dosierung, ein Verfallsdatum, einen Typ des medizinischen Verbrauchsartikels oder andere Arten von Informationen oder Kombinationen der genannten und/oder anderer Informationen. Bei dem medizinischen Messgerät kann es sich insbesondere um ein Messgerät handeln, welches eingerichtet ist, um mindestens einen Körperzustand eines Benutzers und/oder mindestens einen Zustand einer Probe qualitativ und/oder quantitativ zu erfassen. Insbesondere kann es sich um ein diagnostisches Messgerät handeln, welches eingerichtet ist, um mindestens einen Analyten qualitativ oder quantitativ in einer Probe, insbesondere einer Probe einer Körperflüssigkeit, nachzuweisen. Bei dem mindestens einen Analyten kann es sich beispielsweise um mindestens einen Metaboliten handeln. Alternativ oder zusätzlich kann das medizinische Gerät jedoch auch mindestens eine Medikationsvorrichtung umfassen oder als Medikationsvorrichtung ausgestaltet sein. Der medizinische Verbrauchsartikel kann in diesem oder auch in anderen Aspekten der vorliegenden Erfindung beispielsweise ein Medikament oder Therapeutikum sein oder ein derartiges Medikament oder Therapeutikum umfassen, oder kann beispielsweise eine Verpackung eines derartigen Medikaments oder Therapeutikum sein oder Bestandteil einer derartigen Verpackung. Die Verbrauchsartikel-spezifische Information kann beispielsweise eine Dosierung, eine Verwendungsinformation, ein Verfallsdatum oder ähnliche Informationen umfassen.

In einem weiteren Aspekt der vorliegenden Erfindung wird ein Verfahren zur Erfassung eines mit einem bewegten Träger verbundenen optischen Barcodes vorgeschlagen. Insbesondere kann dieses Verfahren unter Verwendung eines Barcodelesers und/oder einer Vorrichtung gemäß einer oder mehreren der oben beschriebenen Ausgestaltungen durchgeführt werden. Dementsprechend kann bezüglich möglicher Ausgestaltungen des Verfahrens auf die obige Beschreibung verwiesen werden. Bei dem vorgeschlagenen Verfahren werden zumindest eindimensional Informations-Module des bewegten Barcodes erfasst. Weiterhin werden mittels mindestens eines Taktspur-Detektors Taktspur-Module einer Taktspur des Barcodes erfasst. Weiterhin wird mindestens eine ReferenzInformation des Barcodes mittels mindestens eines Referenz-Detektors erfasst. Aus mindestens einem Signal des Taktspur-Detektors und mindestens einem Signal des Referenz-Detektors wird auf eine Bewegungsrichtung des Trägers geschlossen.

Bezüglich weiterer möglicher Ausgestaltungen des Verfahrens kann auf die obige Beschreibung verwiesen werden. Insbesondere kann der Referenz-Detektor eingerichtet sein, um ein optisches Signal zu empfangen, welches ausgewählt ist aus: einem optischen Signal der Taktspur in einem vorgegebenen räumlichen Versatz zu dem Taktspur-Detektor, insbesondere einem Versatz parallel zur Bewegungsrichtung; einem optischen Signal einer von der Taktspur getrennten Referenzspur mit einem Modulversatz zu der Taktspur, also beispielsweise einer zur Taktspur phasenverschobenen Referenzspur. Mittels des oben beschriebenen Barcodelesers, der Vorrichtung, des Barcodes, der Verwendung und des Verfahrens lässt sich insbesondere ein handbetriebener Zugleser und/oder Durchzugleser bzw. Longitudinalleser für zweidimensionale Barcodes realisieren, für welche konstante Zuggeschwindigkeit, aber auch koordinierte Bewegungsabläufe, insbesondere eine Unidirektionalität des Auslesens der Daten, vorausgesetzt werden. Die vorgestellte Lösung ermöglicht es insbesondere, handbetriebene Durchzug-, Zugoder Schubleser sowohl für eindimensionale als auch für zweidimensionale Barcodes zu realisieren, bei denen auf koordinierte Bewegungsabläufe im Wesentlichen verzichtet werden kann. Die Erfindung ist besonders vorteilhaft, jedoch nicht ausschließlich anwendbar bei Gütern, bei denen eine Dimension deutlich größer ist als deren andere Dimensionen, wie beispielsweise bei analytischen Teststreifen. Die Erfindung ist jedoch auch anwendbar zur Zuverlässigkeitserhöhung anders realisierter Barcode-ScanSysteme.

Vor allem für zweidimensionale Barcodes lässt sich erfindungsgemäß ein preiswertes, einfach zu realisierendes zweidimensionales Barcode-Lesesystem bereitstellen. Die oben beschriebenen optionalen Maßnahmen können dabei alternativ oder kumulativ eingesetzt werden. So kann beispielsweise als Referenzspur eine zweite, zusätzliche Taktspur (Clock-Track) eingesetzt werden. Diese kann mit der eigentlichen Taktspur wechselwirken. Die Referenzspur kann beispielsweise in ihrer Geometrie völlig identisch zur eigentlichen Taktspur ausgestaltet sein, ist jedoch gegenüber dieser phasenversetzt angeordnet.

Wird eine Taktspur verwendet, bei welcher sich Module mit einem ersten Signallevel und Module mit einem zweiten Signallevel (binäre Taktspur) abwechseln, so kann beispielsweise eine Phasenverschiebung um ein halbes Modul vorliegen, was einer Phasenverschiebung um 90° der Periodizität der Taktspur entspricht. Insbesondere durch ein diskriminierendes Koinzidenzverfahrens, bei welchem die Signale des Taktspur-Detektors und des Referenz-Detektors verglichen werden, kann dabei realisiert werden, dass jeder Zustandswechsel der beiden Spuren oder zumindest einige der Zustandswechsel dieser beiden Spuren sowohl zur Bestimmung einer Ortsauflösung als auch zur Bestimmung einer Bewegungsrichtung herangezogen werden. Derartige Verfahren sind grundsätzlich beispielsweise aus der Technik der Wegmessgeber oder Rotationsgeber in der mechanischen Messtechnik bekannt. Nicht bekannt ist hingegen die erfindungsgemäß vorgeschlagene Verwendung dieses Prinzips bei der Decodierung von eindimensionalen oder auch mehrdimensionalen Barcodes. Im vorliegenden Fall kann dieses Prinzip insbesondere als Teil-Algorithmus eines Barcode-Decodier-Algorithmus verwendet werden.

Weiterhin kann eine Änderung der geometrischen Anordnung des optischen Scansystems und im weiteren Verlauf eine Entfernung der eingeführten Referenzspur, beispielsweise einer Richtungsspur, erfolgen. Da zweidimensionale Barcodes gemäß dem Stand der Technik häufig bereits über eine Taktspur verfügen und in vielen Fällen zumindest mit einem optischen Zeilensensor mit einer Mehrheit von lichtempfindlichen Elementen (Pixeln) abgetastet werden, kann, was vorliegend nicht beansprucht wird, auf die zusätzliche Referenzspur oder Richtungsspur verzichtet werden, sofern ein zweiter, zusätzlicher Sensor mit einem räumlichen Versatz oder Phasenversatz im Ortsraum zu dem Taktspur-Detektor angeordnet wird, beispielsweise mit einem Phasenversatz von 90° über der schon bestehenden Taktspur. Der Barcode-Detektor und/oder der Taktspur-Detektor und/oder der Referenz-Detektor oder einige oder alle dieser Detektoren können optional als so genannte Contact-Image-Sensoren (CIS) ausgestaltet sein. Dies bedeutet, dass die Detektoren praktisch unmittelbar auf dem Barcode aufliegen können oder in einem Abstand von maximal 5 mm von dem Barcode angeordnet sein können. Beispielsweise können derartige CIS-Sensoren in Form einer CCD-Zeile erreicht werden, gegebenenfalls in Kombination mit einem oder mehreren Umlenkelementen, beispielsweise einem oder mehreren zweigeteilten Spiegeln und/oder Prismen.

Werden, wie vorliegend nicht beansprucht, herkömmliche Barcodes verwendet, bei welchen eine Taktspur vorhanden ist, jedoch keine zusätzliche Referenzspur, so dass die Taktspur selbst doppelt genutzt wird, als eigentliche Taktspur und als Referenzspur, so hat dies zusätzlich den Vorteil, dass handelsübliche Kamera-Scanner einsetzbar sind und lediglich ein Auswertungsalgorithmus erfindungsgemäß angepasst werden muss. Dies kann insbesondere dann erfolgen, wenn bestimmte Regeln für die Gestaltung des Barcodes eingehalten werden, beispielsweise die Verwendung von so genannten Quiet-Zones, also Zonen, welche keine Module enthalten.

Die oben beschriebene, vorliegend nicht beanspruchte Ausgestaltung, dass ein gegenüber dem Takt-Detektor räumlich versetzter Referenz-Detektor eingesetzt wird, insbesondere ein in Bewegungsrichtung um ein nicht-geradzahliges Vielfaches einer halben Modulhöhe versetzter Referenz-Detektor, wodurch die Takt-Spur zusätzlich auch als Referenz-Spur einsetzbar ist, hat verschiedene weitere Vorteile. So lassen sich beispielsweise zweidimensionale Detektoren einsetzen, beispielsweise einfache optische Feldsensoren mit einer Mehrzahl von optischen Zeilensensoren. Weiterhin lassen sich CCD-Kameras mit zweidimensionalem CCD-Array einsetzen. In diesem Fall kann beispielsweise ein Zeilensensor oder ein Teil dieses Zeilensensors als Takt-Detektor eingesetzt werden, und eine andere Zeile oder ein Teil einer anderen Zeile des Detektors als Referenz-Detektor, beispielsweise eine Zeile mit einem Phasenabstand von $(n \cdot 360°) + 90°$, also einem resultierenden Phasenabstand von 90°, und/oder, bezogen auf den Ortsraum, beispielsweise mit einem Phasenabstand von $(n \cdot 2 \cdot H) + 1/2\,H$. Je nach Breite des verwendeten Barcodes, insbesondere des zweidimensionalen Barcodes, werden an den verwendeten optischen Feld-Sensor nur geringe Anforderungen bezüglich dessen Auflösung gestellt. Wird der zweidimensionale Barcode (hier beispielsweise die gesamte Region) zum Beispiel auf die Länge verteilt, so kann schon ein einfacher Maus-Sensor verwendet werden, wie er üblicherweise in optischen Computer-Mäusen eingesetzt wird.

Erfindungsgemäß ist weiterhin eine Stabilisierung gegenüber Winkelversatzfehlern möglich. Da jeder Zugleser und/oder Schubleser in der Regel über eine Führung des zu scannenden Verbrauchsartikels verfügt, ist es erforderlich, dass diese Führung auch ein ausreichendes Spiel (Headroom) aufweist. Dies führt jedoch in der Regel zu einem Winkelversatz zwischen der Bewegungsrichtung und den Spaltenrichtungen bzw. der Richtung der Taktspur des Barcodes relativ zur Bewegungsrichtung. Auch Fehler beim Aufbringen des Barcodes auf den Träger, beispielsweise Druckfehler, können einen derartigen Winkelversatz bewirken. Durch Änderung der Geometrie des Barcodes, dergestalt, dass die einzelnen Module in Longitudinal-Richtung, also parallel zur Soll-Bewegungsrichtung, in die Länge gezogen werden, kann eine justierbare Stabilität gegen einen gewissen Winkelversatzbetrag erreicht werden. Je länger die Module sind (größere Modulhöhe), desto größer darf der Winkelversatz sein.

Weiterhin lässt sich erfindungsgemäß ein einfaches, flaches Scansystem realisieren. Dies kann insbesondere erreicht werden durch Verwendung von Contact-Image-Sensoren (CIS), beispielsweise in Form einer oder mehrerer CCD-Zeilen, deren Abbildung beispielsweise im Bereich von 0,5 bis 0,7 mm realisierbar ist.


Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente.

Im Einzelnen zeigen:

Figur 1 ein erstes Ausführungsbeispiel einer erfindungsgemäßen Erweiterung eines zweidimensionalen Barcodes mit einer Taktspur und einer als Richtungsspur ausgestalteten Referenzspur;

Figur 2 ein zweites Ausführungsbeispiel der erfindungsgemäßen Erweiterung eines eindimensionalen Barcodes mit einer Taktspur und einer Richtungsspur in Form einer zusätzlichen Referenzspur;

Figuren 3a bis 3c eine grafische Darstellung von Signalpegeln und Veränderungen von Signalpegeln;

Figur 4 eine Zustandsänderung einer Taktspur und einer Referenzspur in Bezug auf die Taktspur;

Figuren 5a bis 5d verschiedene Koinzidenzen von Signalen der Taktspur und der Referenzspur und deren Umsetzung in eine Inkrementierung bzw. Dekrementierung eines Adresszählers;

Figur 6 eine schematische Darstellung eines Einlesens von Informationen eines zweidimensionalen Barcodes;

Figuren 7a bis 7o eine Sequenz von Zustandsänderungen eines zweidimensionalen Barcodes beim Einlesevorgang und die entsprechende Übertragung der Informationen in einen Datenspeicher;

Figur 8 einen zweidimensionalen Data Matrix Code, welcher vorliegend nicht beansprucht wird, welcher bereits eine Taktspur enthält, dem jedoch eine zusätzliche Referenzspur hinzugefügt wurde;

Figur 9 einen gegenüber der Ausgestaltung in Figur 8 um 180° gedrehten Barcode, welcher vorliegend ebenfalls nicht beansprucht wird, bei welchem eine Ruhezone und ein L-Finder des Barcodes als Weißwert- und Schwarzwert-Referenz eingesetzt werden können;

Figur 10 eine ebenfalls nicht beanspruchte Abwandlung des Barcodes gemäß Figur 9, wobei die Taktspur um ein Modul erweitert ist und bei welchem mittels eines zusätzlichen Referenz-Detektors die Taktspur selbst als Referenzspur genutzt werden kann;

Figur 11 eine ebenfalls nicht beanspruchte alternative Ausgestaltung des Barcodes gemäß Figur 10, wobei die Taktspur in lateraler Richtung zur Leserichtung verlängert wurde;

Figuren 12a und 12b ein vorliegend nicht beanspruchtes Ausführungsbeispiel eines Barcodelesers in Form eines optischen Kontaktlesers mit einem zusätzlichen, phasenverschobenen Sensor als Referenz-Detektor;

Figur 13    einen Barcode und einen Barcodeleser in Form eines optischen Flächensensors, aus welchem zwei phasenverschobene Zeilen benutzt werden, was vorliegend ebenfalls nicht beansprucht wird;

Figur 14    eine Erläuterung der Problematik von Lesefehlern, wenn der Barcode und dessen Träger mit einem Winkelversatz in einen Barcodeleser eingeschoben werden;

Figur 15    eine Lösung des Winkelversatzproblems gemäß Figur 14 durch Verlängerung der Codemodule des Barcodes in Schub- oder Zug-Richtung;

Figur 16    ein Ausführungsbeispiel einer erfindungsgemäßen Vorrichtung in Form eines medizinischen Messgeräts mit einem medizinischen Verbrauchsartikel in Form eines Teststreifens; und

Figur 17    ein zu Figur 15 alternatives erfindungsgemäßes Ausführungsbeispiel eines Barcodes mit innenliegender Taktspur und innenliegender Referenzspur.

Ausführungsbeispiele

Wie oben dargestellt, besteht ein Gedanke der vorliegenden Erfindung darin, einen Barcode derart auszulesen, dass zwei gegeneinander phasenversetzte und vorzugsweise koinzidente Signale eines Taktspur-Detektors und eines Referenz-Detektors verglichen werden. Dabei kann es sich entweder um Signale handeln, welche mittels derselben Taktspur, jedoch räumlich phasenversetzt zueinander aufgenommen wurden (was vorliegend zwar offenbart, aber nicht separat beansprucht wird), oder um Signale einer Taktspur und einer separaten, phasenverschobenen Referenzspur des Barcodes. Auch Kombinationen dieser Möglichkeiten oder andere Ausgestaltungen, mittels derer die phasenversetzten Signale erzeugt werden können, sind denkbar.

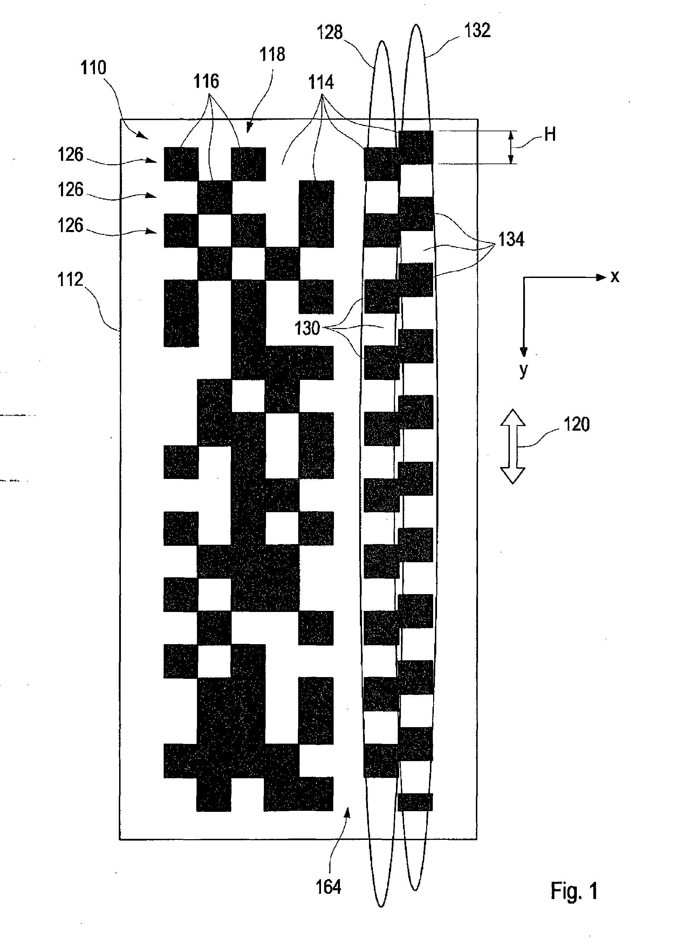

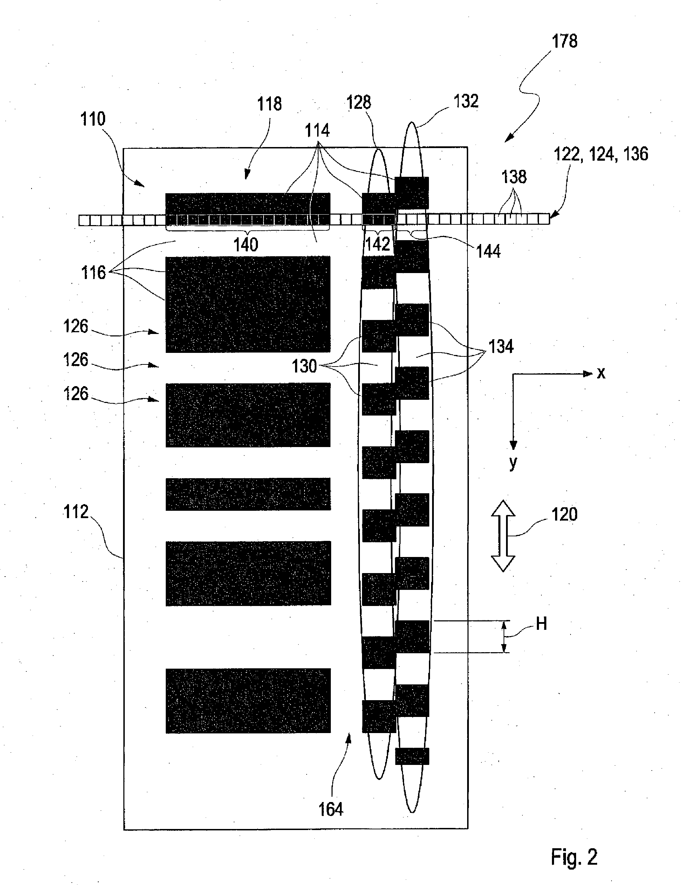

In den Figuren 1 und 2 sind exemplarisch Ausführungsbeispiele zweier verschiedener Ausgestaltungen von optischen Barcodes 110 dargestellt. Die Barcodes 110 können beispielsweise jeweils auf einem Träger 112 aufgebracht sein oder auf andere Weise mit dem Träger 112 verbunden sein, beispielsweise in diesen eingebracht sein. Bei dem Träger kann es sich beispielsweise um einen Träger eines Teststreifens, beispielsweise aus Papier, einem Schichtmaterial, Kunststoff oder einem anderen Material handeln.

Die Barcodes 110 weisen jeweils als Informationsträger so genannte Module 114 auf. Bei einem Modul 114 handelt es sich grundsätzlich um einen beliebigen Bereich des Barcodes 110, beispielsweise ein vorgegebenes Rechteck, ein Quadrat, oder, bei dreidimensionalen Barcodes (was grundsätzlich auch möglich ist), um einen vorgegebenen Raumbereich, wobei diese Bereiche jeweils mindestens zwei optisch messbare Zustände einnehmen können. In den dargestellten, binären Barcodes, bei welchen die Zustände beispielsweise eine Reflektivität einer Oberfläche der Barcodes 110 betreffen, sind dies die Zustände "Schwärz", d.h. niedrige Reflektivität, und "Weiß", d.h. hohe Reflektivität. Diesen beiden Zuständen können willkürlich die numerischen Informationen "0" und "1" zugewiesen werden.

Die Barcodes 110 umfassen jeweils eine Mehrzahl von Informations-Modulen 116, welche in einem Informationsfeld 118 des Barcodes 110 angeordnet sind. In den in den Figuren 1 und 2 dargestellten Barcodes 110 sind die Informationsfelder 118 als rechteckige Felder ausgestaltet, mit einer Breite entlang einer x-Richtung und einer Länge entlang einer y-Richtung, wobei die y-Richtung im Idealfall parallel zu einer Bewegungsrichtung 120 des Trägers 112 relativ zu einem in Figur 2 lediglich angedeuteten und in Figur 1 nicht dargestellten Detektor 122 eines Barcodelesers 124 ausgerichtet ist. Die yRichtung stellt also vorzugsweise eine Soll-Bewegungsrichtung dar, welche jedoch, wie unten noch näher ausgeführt wird, auch von einer tatsächlichen Bewegungsrichtung oder Ist-Bewegungsrichtung abweichen kann.

Während der eindimensionale Barcode gemäß Figur 2 pro y-Koordinate, d.h. pro Zeile, lediglich ein Informations-Modul 116 aufweist, weist der zweidimensionale Barcode gemäß Figur 1 für jede y-Koordinate in dem Informationsfeld 118 eine Mehrzahl von nebeneinander angeordneten Informations-Modulen 116 auf, d.h. mehrere Informations-Module 116 pro Zeile 126. Module 114 mit gleicher y-Koordinate werden im Folgenden als "Zeile" bezeichnet, und Module gleicher x-Koordinate als "Spalte".

Weiterhin weist der Barcode 110 in den Ausführungsbeispielen gemäß den Figuren 1 und 2 jeweils eine Taktspur 128 auf. Diese Taktspur 128 ist parallel zur y-Richtung ausgerichtet und weist in y-Richtung vorzugsweise dieselbe Periodizität, d.h. dieselbe Wiederholfrequenz der Module 114 auf wie die Informations-Module 116. Dementsprechend umfasst die Taktspur 128 in den dargestellten Ausführungsbeispielen ebenfalls Taktspur-Module 130, welche wiederum mindestens zwei Zustände einnehmen können. In dem dargestellten, binären Ausführungsbeispiel sind dies wieder die Zustände "Schwarz" und "Weiß". Bei den dargestellten Ausführungsbeispielen ist die Taktspur in y-Richtung wiederum periodisch ausgestaltet, so dass sich jeweils periodisch Taktspur-Module 130 mit gleicher Information wiederholen, also in diesem Ausführungsbeispiel schwarze und weiße Taktspur-Module 130 abwechseln.

Die Taktspur 128 ist dabei vorzugsweise gegenüber den Zeilen 126 der Informations-Module 116 nicht phasenverschoben. Dies bedeutet, dass die Taktspur-Module 130 jeweils die gleiche y-Koordinate aufweisen wie korrespondierende InformationsModule 116 einer korrespondierenden Zeile 126.

Weiterhin weisen die Barcodes 110 gemäß den Ausführungsbeispielen in den Figuren 1 und 2 zusätzlich eine Referenzspur 132 auf, welche auch als Richtungsspur bezeichnet werden kann, da mit Hilfe der in dieser Referenzspur 132 enthaltenen Informationen beispielsweise eine aktuelle Richtung der Bewegung bestimmt werden kann. Die Referenzspur 132 ist ihrerseits parallel zur y-Richtung angeordnet und weist ihrerseits Referenzspur-Module 134 auf, welche wiederum mindestens zwei Zustände einnehmen können. In den dargestellten, binären Beispielen sind dies wiederum genau zwei Zustände, nämlich ein "schwarzer" und ein "weißer" Zustand. Die Periodizität der Referenzspur-Module 134 ist dabei vorzugsweise wiederum identisch zur Periodizität der Informations-Module 116 und ist identisch zur Periodizität der Taktspur-Module 130 in y-Richtung, und die Referenzspur-Module 134 weisen in y-Richtung vorzugsweise dieselbe Modulhöhe (in Figur 1 mit H bezeichnet) auf wie die Taktspur-Module 130 und/oder die Informations-Module 116. Die Referenzspur 132 ist jedoch gegenüber der Taktspur 128 und gegenüber den Informations-Modulen 116 phasenverschoben. Dies bedeutet, dass die Mitte der Referenzspur-Module 134 in ihrer yKoordinate von den Mitten der Taktspur-Module 130 abweicht, beispielsweise um eine halbe Modulhöhe H. In dem in den Figuren 1 und 2 dargestellten Ausführungsbeispiel ist beispielsweise die Mitte der schwarzen Referenzspur-Module 134 jeweils um eine halbe Modulhöhe H zu kleineren y-Koordinaten hin verschoben. Dies wird unten noch näher ausgeführt.

In Figur 2 ist symbolisch ein Detektor 122 als Teil eines Barcodelesers 124 dargestellt, relativ zu welchem der Träger 112 mit dem Barcode 110 bewegt wird. In dem dargestellten Ausführungsbeispiel ist der Detektor 122 exemplarisch als Ganzes als Zeilendetektor 136 ausgestaltet und kann beispielsweise eine optische Sensorzeile mit einzelnen optischen Sensoren 138 umfassen. Auch andere Ausgestaltungen sind jedoch grundsätzlich möglich, beispielsweise indem der Detektor 124 als Flächendetektor mit in zwei Dimensionen angeordneten optischen Sensoren 138 ausgestaltet ist, beispielsweise in Form eines Detektors, welcher üblicherweise in einer Computer-Maus eingesetzt wird. Die optischen Sensoren 138 können beispielsweise als CCD-Sensoren ausgestaltet sein, so dass der Zeilendetektor 136 beispielsweise eine CCD-Sensorzeile umfassen kann. Auch andere Ausgestaltungen sind jedoch grundsätzlich möglich.

In dem dargestellten Ausführungsbeispiel werden diejenigen optischen Sensoren 138 des Zeilendetektors 136, an welchem bei Bewegung des Trägers 112 in Bewegungsrichtung 120 die Informations-Module 116 vorbeigeführt werden, als Barcode-Detektor 140 bezeichnet. Diejenigen optischen Sensoren 138, welche bei Bewegung des Trägers 112 die Taktspur 128 erfassen, werden als Taktspur-Detektor 142 bezeichnet, und diejenigen optischen Sensoren 138, welche die Referenzspur 132 erfassen, als Referenz-Detektor 144. Diese Detektoren 140, 142 und 144 können, wie in Figur 2 gezeigt, exemplarisch als getrennte Detektoren ausgebildet sein. Alternativ können jedoch auch zwei dieser Detektoren zusammengefasst ausgebildet sein, so dass beispielsweise, wie unten noch näher erläutert wird, der Taktspur-Detektor 142 in den Barcode-Detektor 140 integriert wird.

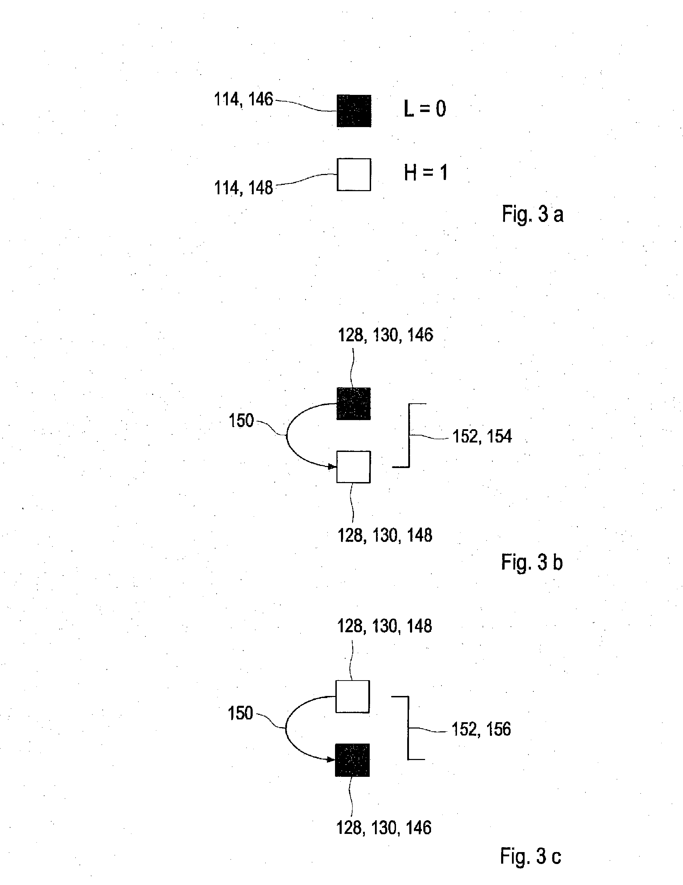

Anhand der Figuren 3a bis 3c werden im Folgenden verschiedene Begriffsdefinitionen bei der Informationsspeicherung und Informationswiedergabe in den Barcode 110 und in den Modulen 114 erläutert. Wie oben dargestellt, handelt es sich exemplarisch bei dem Barcode 110 um einen binären Barcode. Dementsprechend sind beispielsweise Module 114 möglich, welche eine niedrige Reflexion aufweisen und welche in den Figuren 3a bis 3c als "Low"-Module 146 bezeichnet werden, und Module 114, welche eine hohe Reflektivität aufweisen und dementsprechend in den Figuren 3a bis 3c als "High"-Module 148 bezeichnet werden. Beispielsweise können die Low-Module 146 als "Null" interpretiert werden, und die High-Module 148 als "Eins". Dies ist in Figur 3a exemplarisch dargestellt.

In den Figuren 3b und 3c ist das Signal des Taktspur-Detektors 142 bei einem Übergang von einem Low-Modul 146 zu einem High-Modul 148 (Figur 3b) bzw. bei einem Übergang von einem High-Modul 148 zu einem Low-Modul 146 (Figur 3c) dargestellt. Der Zustandswechsel ist dabei in den Figuren 3a und 3b symbolisch mit der Bezugsziffer 150 bezeichnet. Ein derartiger Zustandswechsel tritt bei einer Bewegung des Trägers 112 in Bewegungsrichtung 120 zwangsläufig auf, wenn der Taktspur-Detektor 142 einen Übergang zwischen zwei Modulen 130 der Taktspur 128 passiert. Der Taktspur-Detektor 142 detektiert, wie auch die anderen Detektoren 140, 144, in diesem Ausführungsbeispiel vorzugsweise reflektiertes Licht des Barcodes 110. Auch andere optische Signale können jedoch grundsätzlich detektiert werden, wie oben ausgeführt wurde. Entsprechend des Zustandswechsels 150 tritt beim Übergang eine Änderung in der Intensität des reflektierten Lichts auf, welcher in einer Übergangsflanke 152 im Signal des Taktspur-Detektors 142 resultiert. Diese Übergangsflanke ist bei dem Übergang gemäß Figur 3b als positive Flanke 154 ausgestaltet, und bei dem Übergang gemäß Figur 3c als negative Flanke 156.

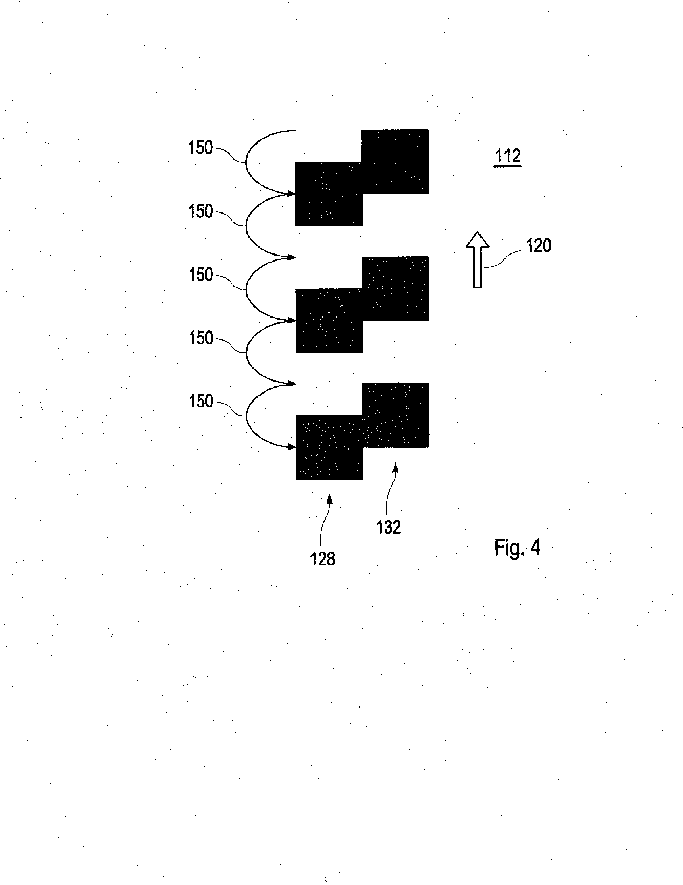

In Figur 4 ist eine Abfolge von Zustandswechseln 150 bei einer Bewegung des Trägers 112 relativ zum Zeilendetektor 136 (in Figur 4 nicht dargestellt) bezüglich der Taktspur 128 dargestellt. Dabei ist ein Zustandswechsel 150 jeweils ein Übergang von einem Low-Modul 146 zu einem High-Modul 148 oder umgekehrt.

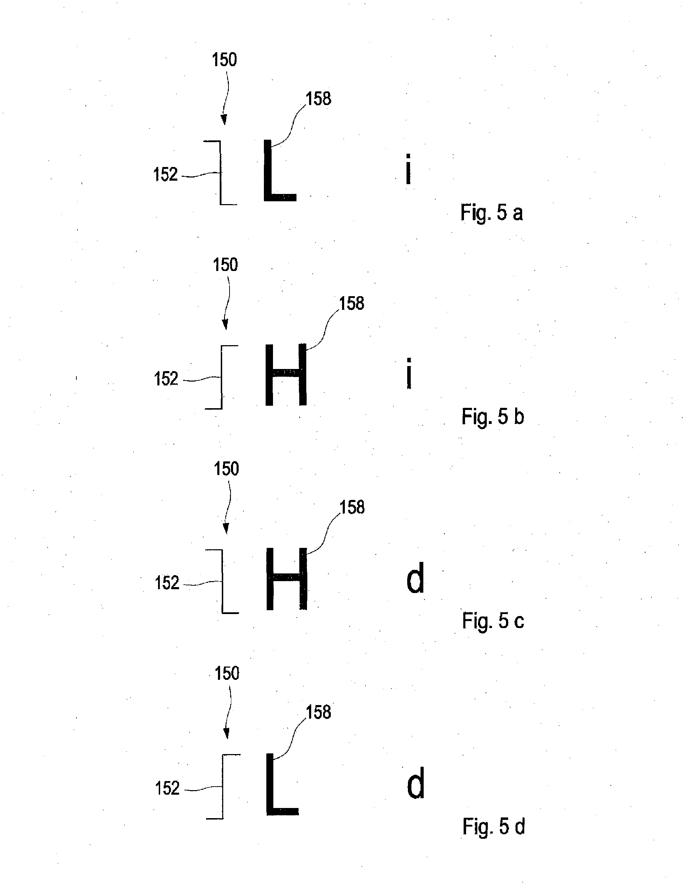

In den Figuren 5a bis 5d ist ein Ausführurigsbeispiel eines erfindungsgemäßen Verfahrens erläutert, wie mittels der Signale des Taktspur-Detektors 142 und des Referenz-Detektors 144 auf die Bewegungsrichtung 120, d.h. auf das Vorzeichen der Bewegung des Trägers 112 relativ zum Barcodeleser 124 und dort insbesondere relativ zum Detektor 122, beispielsweise relativ zum Zeilendetektor 136, geschlossen werden kann. Ziel des Verfahrens ist es, nacheinander Informationen der Zeilen 126 des Barcodes 110, insbesondere des Informatiansfelds 118, auszulesen, und korrekten Adressen, d.h. Speicherplätzen mit korrekter Zeilenzähler-Adresse, in einem Datenspeicher zuzuordnen, so dass beispielsweise anschließend der Inhalt des Informationsfelds 118 korrekt als Funktion eines Zeilenzählers in einem Datenspeicher abgelegt werden kann. Der Zeilenzähler gibt dabei beispielsweise die Absolutkoordinate der Zeile 126 auf der yAchse oder einen zu diesem Wert äquivalenten Zähler wieder. Auch andere Ausgestaltungen sind jedoch grundsätzlich möglich.

Dargestellt in den Figuren 5a bis 5d ist jeweils auf der linken Seite das Signal des Taktspur-Detektors 142. Exemplarisch wird dabei in dem gezeigten Algorithmus nicht der Absolutwert dieses Signals ausgewertet, sondern eine Veränderung dieses Signals, hier symbolisiert durch eine Übergangsflanke 152. Daneben ist mit großem Buchstaben "L" bzw. "H" jeweils ein Zustand der Referenzspur 132 dargestellt, welcher in den Figuren 5a bis 5d mit der Bezugsziffer 158 bezeichnet ist. Insbesondere kann es sich hierbei um einen Absolutwert eines Signals des Referenz-Detektors 144 oder eines daraus abgeleiteten Signals handeln. Insbesondere werden dabei koinzidente Signale des Referenz-Detektors 144 und des Taktspur-Detektors 142 betrachtet, also Signale, welche im Wesentlichen gleichzeitig auftreten im Sinne der obigen Definition.

Gemäß den Figuren 5a bis 5d können dabei verschiedene koinzidente Signale auftreten. Erfolgt ein Zustandswechsel 150 auf der Taktspur 128, d.h. passiert der TaktspurDetektor 142 eine Grenze zwischen zwei Taktspur-Modulen 130, so können folgende Koinzidenzen auftreten:

Figur 5a: Übergang von High nach Low (also negative Flanke) und Zustand der Referenzspur 132 Low bzw. Null. Dies bedeutet, wie anhand der Figur 1 leicht erklärbar ist, dass in dem dargestellten Ausführungsbeispiel gemäß den Figuren 1 und 2, bei welchem die Referenzspur-Module 134 gegenüber den Taktspur-Modulen 130 nach oben verschoben sind, beispielsweise um einen Betrag, der nicht mehr als eine Modulhöhe, vorzugsweise genau eine halbe Modulhöhe H, beträgt, sich der Träger 112 relativ zum Detektor 122 nach oben bewegt. Insofern kann die Adresse des Datenspeichers, in den der informative Anteil des Barcodes 110 gespeichert wird; also der Inhalt der Informations-Module 116 der zum jeweiligen Taktspur-Modul 130 gehörenden Zeile, also der Zeilenzähler, inkrementiert werden und danach der informative Anteil des Barcodes 110 der zugehörigen Zeile in diesen Speicher geschrieben werden. Die Inkrementierung ist dabei in den Figuren 5a bis 5d jeweils mit einem kleinen i gekennzeichnet, und eine Dekrementierung des Zeilenzählers mit d.

Figur 5b: Übergang von Low nach High (also eine positive Flanke), und der Zustand der Referenzspur 132 ist High bzw. Eins. In diesem Fall kann der Zeifenzähler inkrementiert werden (i), und danach der informative Anteil des Barcodes 110 in den Speicher geschrieben werden.

Figur 5c: Übergang von High nach Low (also negative Flanke), und der Zustand der Referenzspur 132 ist High bzw. Eins. In diesem Fall kann der Zeilenzähler dekrementiert werden (d) und danach der informative Anteil des Barcodes 110 in den Speicher geschrieben werden.

Figur 5d: Übergang von Low nach High (also positive Flanke), und der Zustand der Referenzspur 132 ist Low bzw. Null. In diesem Fall kann der Zeilenzähler dekrementiert werden (d) und danach der informative Anteil des Barcodes 110 in den Speicher geschrieben werden.

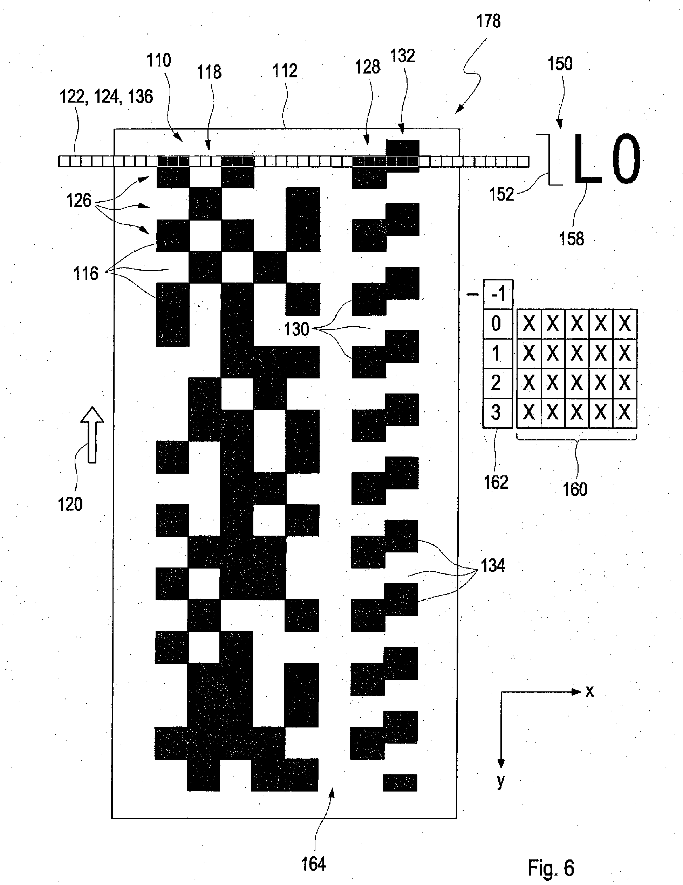

Dieses Funktionsprinzip soll anhand einer exemplarischen Darstellung in Figur 6 nochmals erläutert werden. Wiederum dargestellt ist hierbei ein Träger 112, auf welchem ein Barcode 110 aufgebracht ist, welcher exemplarisch analog zu Figur 1 ausgestaltet ist. Der Träger 112 wird dabei in einer Bewegungsrichtung 120, welche auch als Vorschubrichtung bezeichnet werden kann, relativ zum Detektor 122 des Barcodelesers 124 verschoben. Weiterhin dargestellt ist ein Datenspeicher 160, in welchen die in den Informations-Modulen 116 des Informationsfeldes 118 des Barcodes 110 enthaltenen Informationen, welche mittels des Detektors 122 ausgelesen werden, abgespeichert werden sollen, und zwar jeweils unter einer Adresse 162, welche der jeweiligen Zeile 126 entspricht und welche somit auch als Zeilenzähler bezeichnet werden kann. Entsprechend weist der Datenspeicher 160 für jeden Wert der Adresse 162 in dem dargestellten Ausführungsbeispiel fünf Speicherplätze auf, da in jeder Zeile 126 in dem dargestellten Ausführungsbeispiel exemplarisch fünf Informations-Module 116 vorgesehen sind. Exemplarisch startet in dem Ausführungsbeispiel gemäß Figur 6 die Adresse 162 mit einem Anfangs-Wert -1. Auch andere Ausgestaltungen sind jedoch selbstverständlich möglich.

Der Barcode 110 auf dem Träger 112 kann beispielsweise mittels eines Zeilendetektors 136 ausgelesen werden. Auch andere Ausgestaltungen sind möglich, wobei auf die obige Beschreibung verwiesen werden kann. Die Taktspur 128 sorgt für die notwendigen Zustandswechsel 150, welche durch das Symbol der Übergangsflanke 152 dargestellt sind. Der nach oder koinzident einem Zustandswechsel der Taktspur 128 gelesene Zustand 158 der Referenzspur 132 ist ebenfalls in Figur 6 dargestellt, genauso wie der Zustand der Adresse 162 des Datenspeichers 160, in welchen der informative Anteil des Barcodes 110 eingelesen wird.

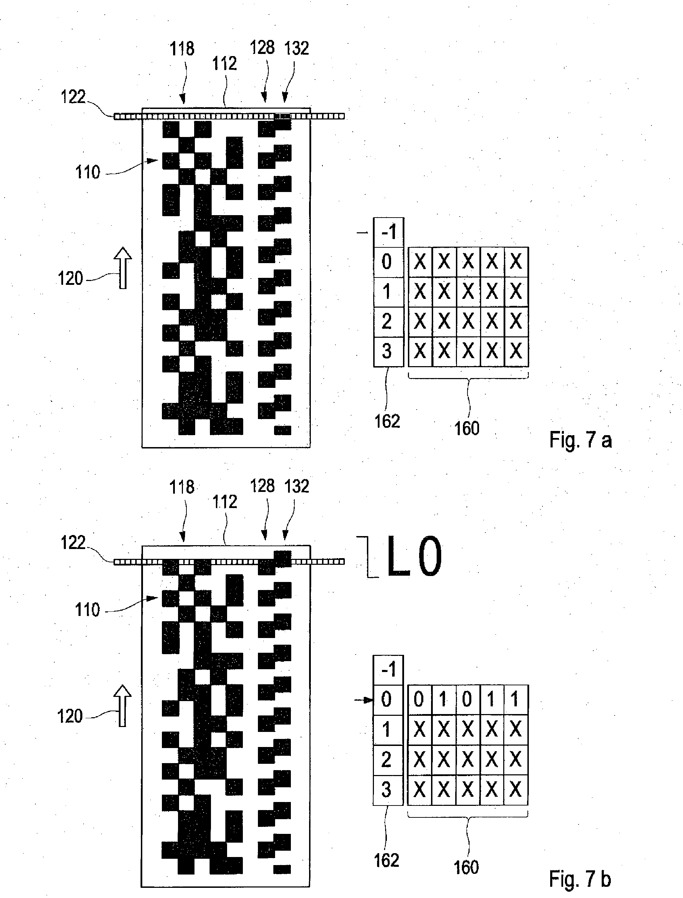

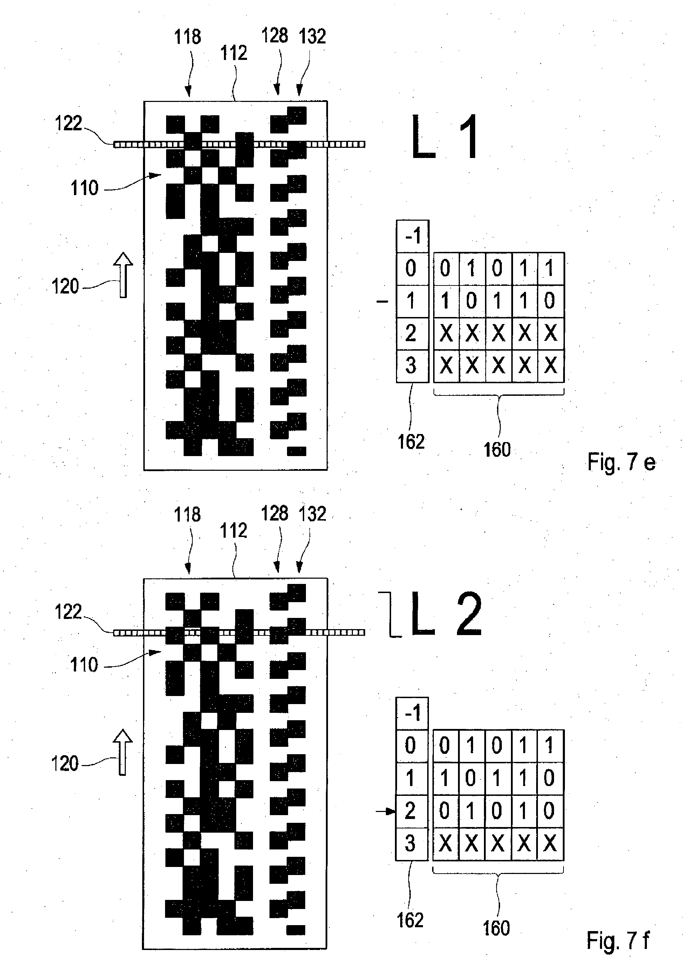

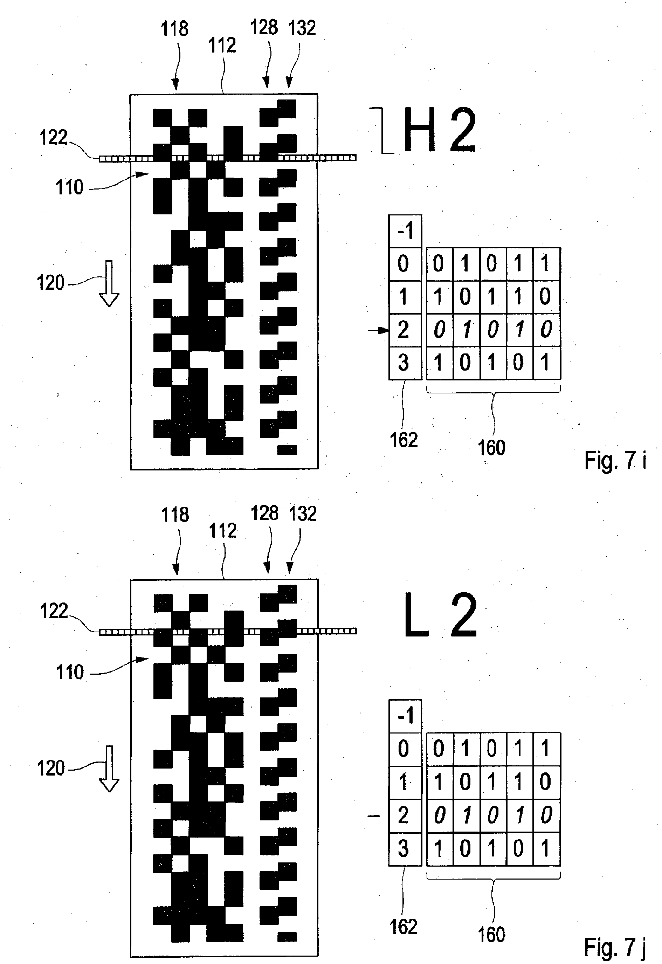

In den Figuren 7a bis 7o ist anhand einer Sequenz von Zustandsänderungen der Ablauf eines Einleseprogramms beschrieben. Dabei wird in den Figuren 7a bis 7h der Träger 112 des Barcodes 110 nach oben in den Figuren transportiert, relativ zum Detektor 122. In den Figuren 7i bis 7o wird der Träger 112 hingegen nach unten transportiert, d.h. ein Richtungswechsel ist in Figur 7e erfolgt.

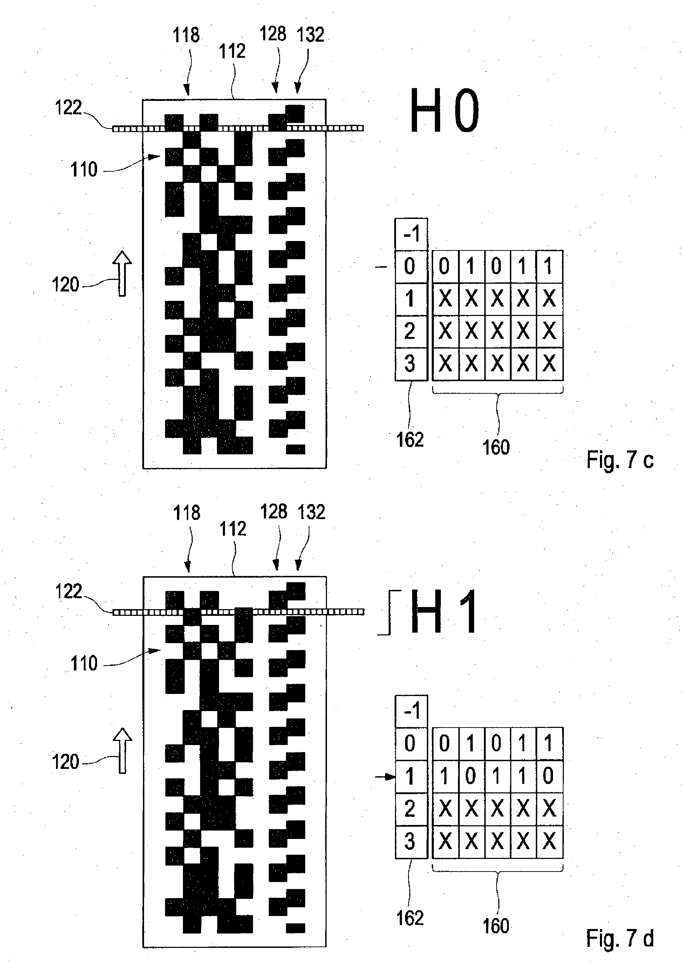

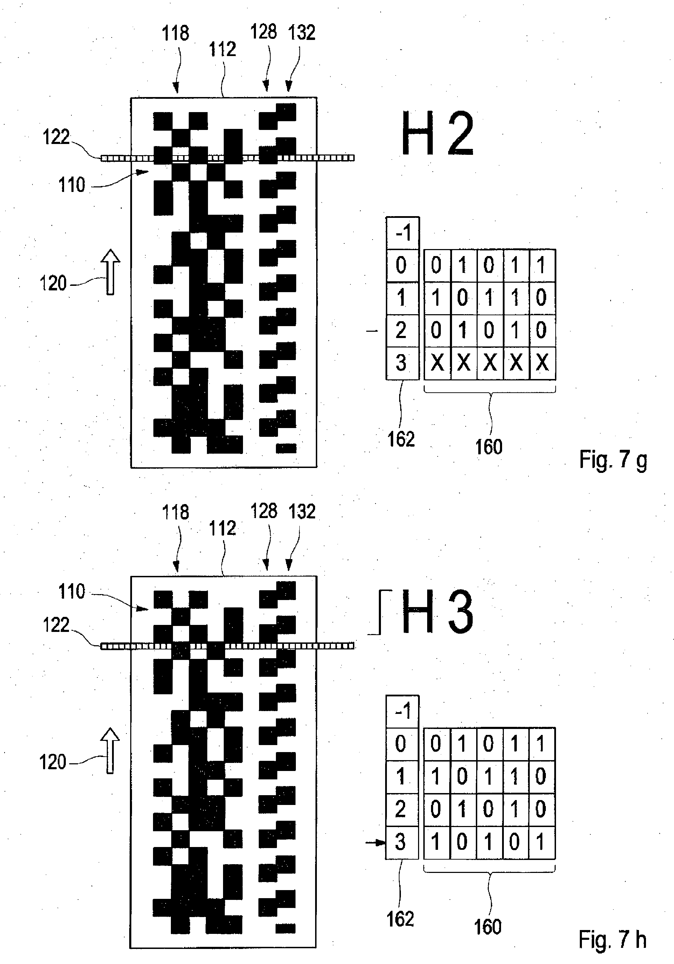

Ausgangspunkt ist beispielsweise ein Preset (voreingestellter Wert) der Adresse 162, also des Zeilenzählers, auf einen Wert -1, wie in Figur 7a dargestellt. In Figur 7b wird eine negative Flanke erreicht, bei gleichzeitigem Low-Wert der Referenzspur 132, twodurch der Zeilenzähler 162 um 1 auf den Wert 0 erhöht wird, und die entsprechenden Informationen der aktuellen Zeile in die diesem Wert 0 zugeordnete Zeile des Datenspeichers 160 eingelesen werden. In Figur 7c bewegt sich der Träger 112 weiter, ohne dass ein Zustandswechsel auftritt. In Figur 7d wird ein neuer Zustandswechsel erreicht, in diesem Fall eine positive Flanke im Signal des Taktspur-Detektors 142, begleitet von einem High-Wert des Signals des Referenz-Detektors 144. Wiederum wird dementsprechend der Zeilenzähler inkrementiert auf den Wert 1, und die anschließend, bis zu einem erneuten Zustandswechsel eingelesenen Informationen des Barcode-Detektors 140 werden in der diesem Wert 1 zugeordneten Zeile des Datenspeichers 160 abgelegt. In Figur 7e ist ein Zustand dargestellt, in dem wiederum kein Zustandswechsel 150 im Signal des Taktspur-Detektors 142 auftritt. In Figur 7f tritt dann eine negative Flanke auf, begleitet von einem Zustand Low, was wiederum zu einer Inkrementierung und einem Einlesen in eine entsprechende Zeile führt. In Figur 7g tritt kein weiterer Zustandswechsel auf. In Figur 7h tritt wiederum eine positive Flanke auf, begleitet von einem Zustand "High" des Referenz-Detektors 144, was wiederum zu einer Inkrementierung des Zeilenzählers 162 und einem Einlesen der Informationen des Barcode-Detektors 140 in die entsprechende Zeile des Datenspeichers 160 führt.

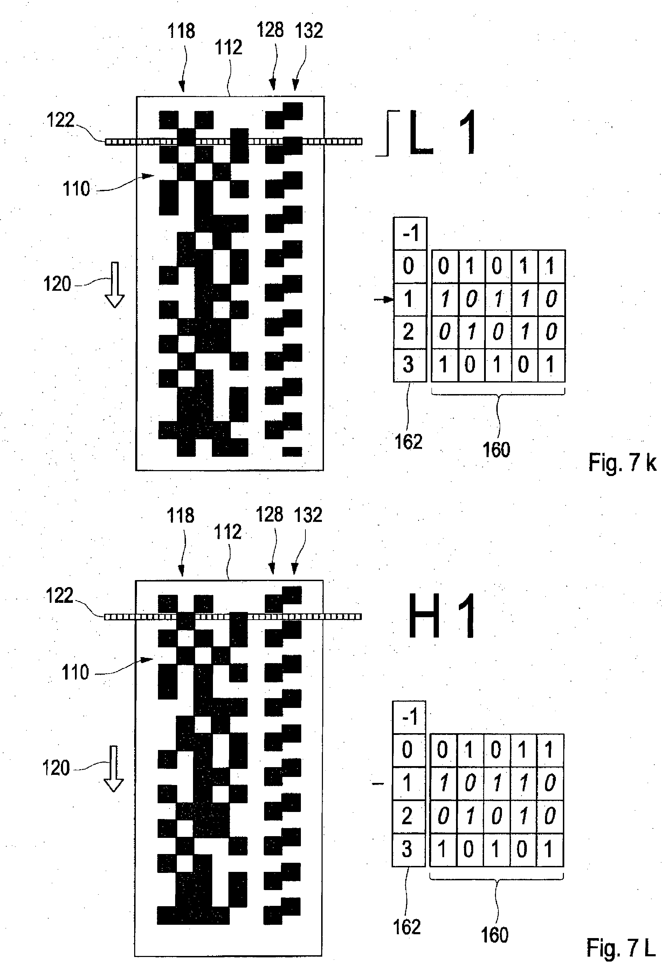

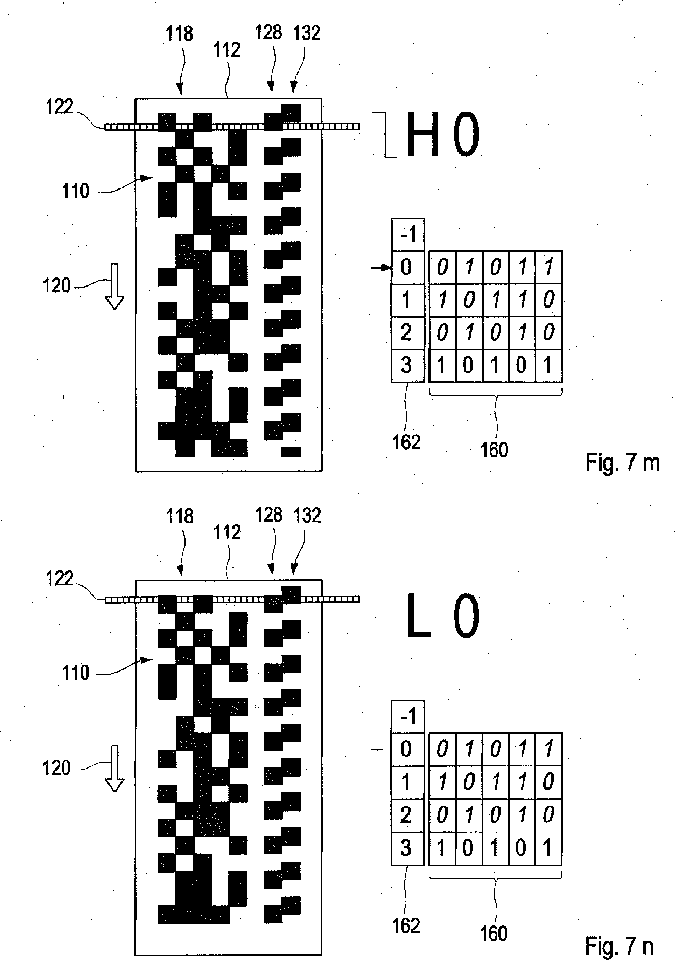

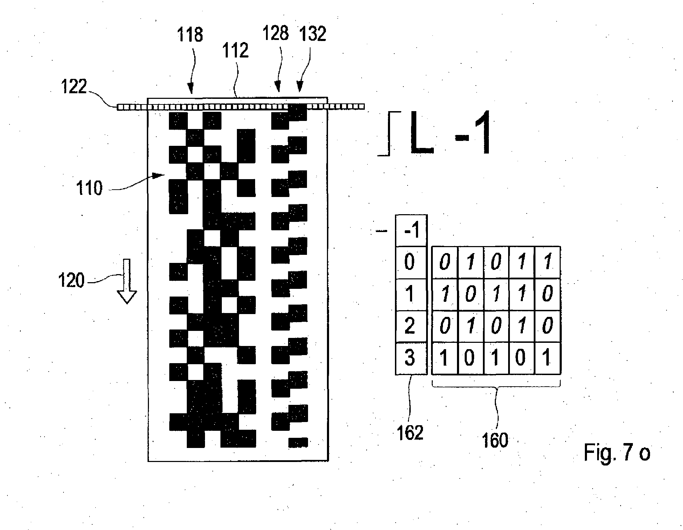

Wie oben ausgeführt, tritt zwischen den Figuren 7h und 7i in dem dargestellten exemplarischen Beispiel einer Sequenz plötzlich wiederum eine negative Flanke im Signal des Taktspur-Detektors 142 auf, begleitet von einem Zustand High (H) im Signal des Referenz-Detektors 144. Wie oben ausgeführt, führt dies zur Erkennung eines Richtungswechsels, also einer Umkehr der Vorschub- oder Bewegungsrichtung 120. Dementsprechend wird der Zeilenzähler 162 dekrementiert statt weiter inkrementiert. Die dann eingelesenen Informationen des Barcode-Detektors 140 können entweder verworfen werden oder können für eine Korrektheits-Betrachtung der bereits eingelesenen Zeile im Datenspeicher 160 (in Figur 7i kursiv dargestellt) führen. Auf diese Weise kann eine Überprüfung stattfinden. In Figur 7j ist wiederum kein Zustandswechsel im Signal des TaktspurDetektors 142 zu verzeichnen, so dass die Adresse 162 des Zeilenzählers unverändert belassen wird. In Figur 7k tritt wiederum eine positive Flanke, begleitet von einem Low-Wert auf, was zu einer weiteren Dekrementierung des Zeilenzählers 162 führt, wobei der dabei oder daraufhin, bis zu einem nächsten Zustandswechsel 150, eingelesene Informationsgehalt des Barcode-Detektors 140 wieder für eine Überprüfung der bereits abgespeicherten Daten dieser Zeile im Datenspeicher 160 genutzt werden kann. In Figur 7l tritt wiederum kein Zustandswechsel auf. In Figur 7m tritt eine negative Flanke, begleitet von einem High-Wert auf, was zu einer weiteren Dekrementierung des Zeilenzählers 162 führt. In Figur 7n tritt kein weiterer Zustandswechsel auf, und in Figur 7o wiederum eine positive Flanke, begleitet von einem Low-Wert, was zu einer weiteren Dekrementierung der Adresse 162 auf den Preset-Wert -1 führt. Auf diese Weise kann, bei erneutem Erreichen des Preset-Wertes im Zeilenzähler 162, beispielsweise wiederum darauf geschlossen werden, dass der Anfang des Barcodes 110 erreicht ist.

In den Ausführungsbeispielen gemäß den Figuren 1 und 2 sind das Informationsfeld 118 und die Taktspur 128 bzw. die Referenzspur 132 exemplarisch durch eine Ruhezone 164 voneinander getrennt. Unter einer Ruhezone 164 wird dabei allgemein eine Beabstandung verstanden, so dass die Taktspur 128 bzw. die Referenzspur 132 nicht unmittelbar an die Informations-Module 116 des Informationsfeldes 118 angrenzen. Dies ist jedoch nicht notwendigerweise der Fall, so dass die Taktspur 128 und/oder die Referenzspur 132 auch ganz oder teilweise räumlich in das Informationsfeld 118 integriert werden können. Nach wie vor sollten die Taktspur 128 und optional auch die Referenzspur 132 jedoch in Bewegungsrichtung 120 Taktspur-Module 130 und optional Referenzspur-Module 134 aufweisen, welche einen alternierenden Informationsgehalt aufweisen, beispielsweise abwechselnd schwarze und weiße Module bzw. Low- und High-Module, vorzugsweise mit derselben Periodizität wie die Informations-Module 116 des Informationsfeldes 118.

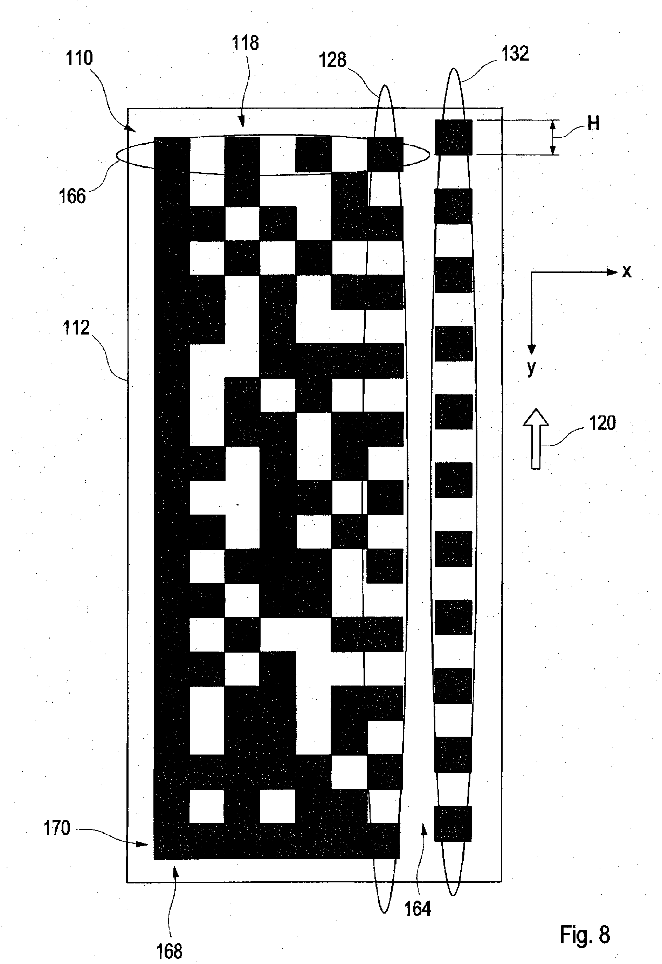

In manchen herkömmlichen zweidimensionalen Barcodes ist bereits eine Taktspur 128 enthalten, auch wenn eine oder mehrere zusätzliche Referenzspuren 132, die vorzugsweise parallel zur Taktspur 128 ausgerichtet sind, bislang noch nicht bekannt sind. Die Figuren 8 bis 11 zeigen verschiedene Ausführungsbeispiele von Barcodes 110, bei denen eine Taktspur 128 in ein Informationsfeld 118 des Barcodes 110 integriert ist. Diese Barcodes gemäß den Figuren 8 bis 11 werden vorliegend lediglich offenbart und nicht separat beansprucht. Exemplarisch kann dies am Beispiel so genannter "Data Matrix"-Barcodes verdeutlicht werden.

So zeigt Figur 8 ein Ausführungsbeispiel, bei welchem in dem Informationsfeld 118 bereits eine Taktspur 128 als äußerste Spalte enthalten ist, mit denselben Eigenschaften wie die Taktspur 128 beispielsweise in dem Ausführungsbeispiel gemäß Figur 1. Weiterhin ist, was im Rahmen der vorliegenden Erfindung nicht weiter berücksichtigt werden soll, optional noch eine zusätzliche Taktspur 166 in x-Richtung vorhanden. Weiterhin ist auf der der Taktspur 128 gegenüberliegenden Längsseite in y-Richtung die äußerste Spalte optional vollständig mit Low-Werten belegt, so dass ein Längsbalken 168 entsteht. In analoger Weise kann auf dem der zusätzlichen Taktspur 166 gegenüberliegenden Ende des Informationsfeldes 118 die letzte Zeile des Informationsfelds 118 vollständig mit Low-Werten belegt werden, so dass ein Querbalken 170 entsteht. Der Längsbalken 168 und der Querbalken 170 bilden zusammen ein "L". Die Ruhezone 164 und das L oder Teile des Ls, beispielsweise lediglich der Längsbalken 168 oder der Querbalken 170, können für einen Schwarz-Weiß-Abgleich eingesetzt werden und/oder für eine Positionierung eines Detektors 122.

Zu diesem Informationsfeld 118 ist bei dem Ausführungsbeispiel gemäß Figur 8 lediglich die Referenzspur 132 hinzugefügt. Diese Referenzspur ist grundsätzlich beispielsweise ausgestaltet wie in dem Ausführungsbeispiel gemäß Figur 1 gezeigt und weist vorzugsweise dieselbe Periodizität in y-Richtung auf wie die Module der Taktspur 128, ist jedoch gegenüber dieser Taktspur 128 phasenverschoben, beispielsweise um ein nicht-geradzahliges Vielfaches der halben Modulhöhe H. Beispielsweise kann es sich hierbei wiederum um eine Phasenverschiebung um eine halbe Modulhöhe H handeln oder um ein ungeradzahliges Vielfaches einer halben Modulhöhe. Die als Richtungsspur wirkende Referenzspur 132, welche sich in y-Richtung, also parallel zur optimalen Bewegungsrichtung 120 erstreckt, ist in diesem Ausführungsbeispiel wiederum derart zu dem Barcode 110 hinzugefügt, dass die Ruhezone 164 zwischen dem Informationsfeld 118 mit der Taktspur 128 und der Referenzspur 132 erhalten bleibt. Dies bietet unter anderem den Vorteil, dass der dargestellte Barcode 110 noch von handelsüblichen Lesern gelesen werden kann, optional auch ohne Verwendung des vorgeschlagenen Verfahrens.

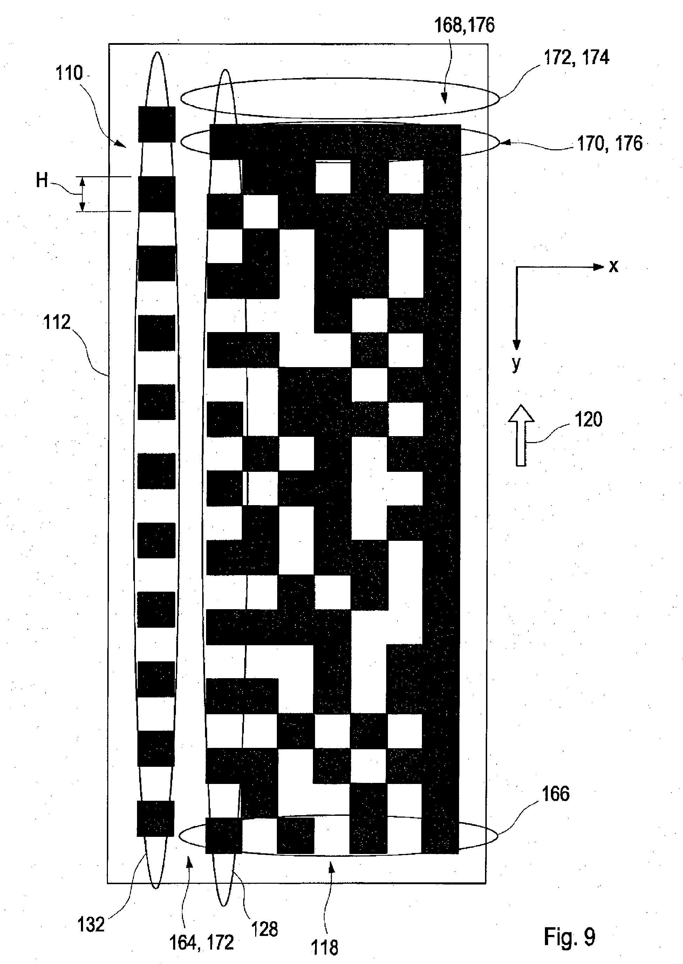

In Figur 9 ist ein Ausführungsbeispiel dargestellt, bei welchem der zweidimensionale Barcode 110 grundsätzlich dem Barcode 110 gemäß Figur 8 entspricht, wohingegen der Träger 112 mit dem Barcode 110 jedoch um 180° gegenüber dem Ausführungsbeispiel in Figur 8 gedreht ist. Die Vorschubrichtung, also die Bewegungsrichtung 120, verbleibt hingegen dieselbe. Dies bedeutet, dass der Barcode 110 in umgekehrter Reihenfolge eingelesen wird. In diesem Fall kann insbesondere die Ruhezone 164 als Weißwert-Referenz 172 genutzt werden. Alternativ oder zusätzlich kann eine weitere Ruhezone 174 oberhalb des Querbalkens 170 als Weißwert-Referenz 172 eingesetzt werden. Der Querbalken 170 selbst kann als Schwarzwert-Referenz 176 eingesetzt werden. Alternativ oder zusätzlich kann auch der Längsbalken 168 als Schwarzwert-Referenz 176 eingesetzt werden. Die Weißwert-Referenz 172 und die Schwarzwert-Referenz 176 können bei der Auswertung eingesetzt werden, um optische Signale, die von diesen Referenzen stammen (beispielsweise Reflexionssignale von an diesen Bereichen reflektierten Lichtstrahlen), zu kalibrieren und/oder zu eichen. So können beispielsweise Absolutwert-Level von "High"-Signalen bzw. "Low"-Signalen festgelegt werden oder deren Verhältnisse. Dies kann beispielsweise genützt werden, um entsprechende Schwellwerte zu setzen, mittels derer bei entsprechenden Messungen Low-Module 146 bzw. High-Module 148 durch Vergleich von Signalpegeln mit diesen Schwellwerten erkannt werden können. Auch bei dem Ausführungsbeispiel gemäß Figur 9 kann der Barcode 110 von handelsüblichen Lesern eingelesen werden.

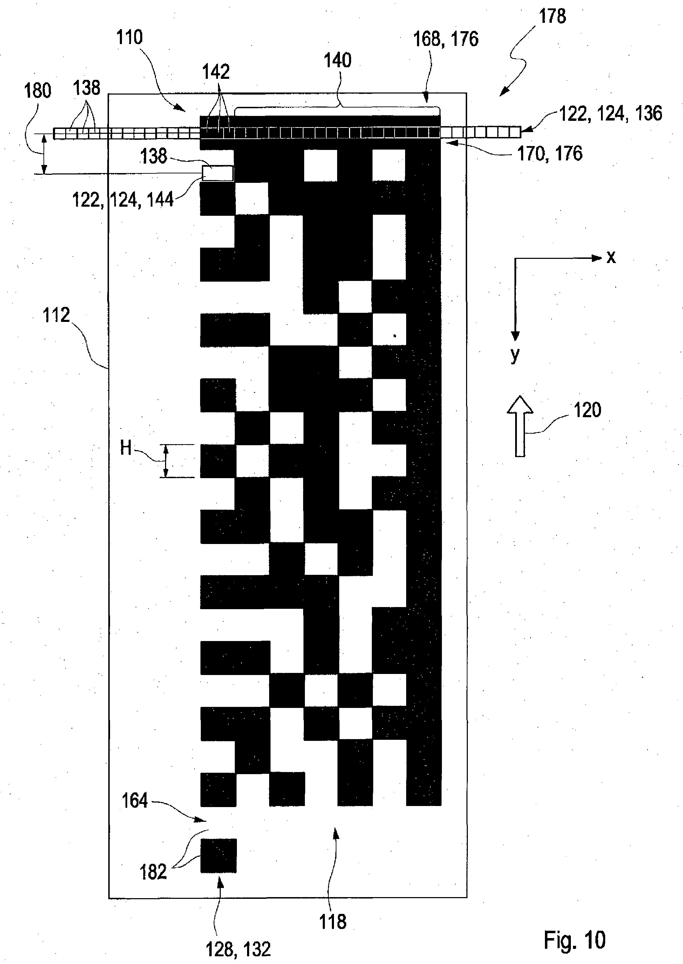

In Figur 10 ist ein weiteres Ausführungsbeispiel eines Barcodes 110 dargestellt. In diesem Ausführungsbeispiel kann exemplarisch der Barcode 110 im Wesentlichen einem handelsüblichen zweidimensionalen Barcode entsprechen. Wiederum ist ein Informationsfeld 118 vorgesehen, welches exemplarisch analog zu dem Informationsfeld 118 gemäß dem Ausführungsbeispiel in Figur 9 ausgestaltet ist. Auch andere Ausgestaltungen sind jedoch grundsätzlich möglich.

Wiederum weist der Barcode 110 ein Informationsfeld 118 auf. Exemplarisch ist eine Taktspur 128 in dieses Informationsfeld 118 integriert. Auch eine getrennte Ausbildung der Taktspur 128, beispielsweise analog zum Ausführungsbeispiel in Figur 1, ist jedoch grundsätzlich möglich, mit einer optionalen Ruhezone 164 zwischen dem Informationsfeld 118 und der Taktspur 128.

Im Unterschied zu den vorhergehenden Ausgestaltungen weist der Barcode 110 gemäß Figur 10 jedoch keine separate Referenzspur 132 auf. Stattdessen wird die zweite, oben genannte Möglichkeit zur Erzeugung phasenversetzter Taktspur- und Referenz-Signale umgesetzt, nämlich die Möglichkeit der Verwendung der Taktspur 128 selbst als Referenzspur 132, unter Verwendung eines gegenüber dem Taktspur-Detektor 142 in yRichtung räumlich versetzten Referenz-Detektors 144. Dementsprechend ist in Figur 10 exemplarisch und stark schematisiert eine Vorrichtung 178 zur Übertragung mindestens einer Information dargestellt, in einer ähnlichen Darstellung wie bereits zuvor in Figur 2 oder in Figur 6, welche einen Barcodeleser 124 sowie einen Träger 112 mit einem Barcode 110 umfasst.

Bei dem Barcode 110 ist, wie oben ausgeführt, keine separate Referenzspur 132 vorgesehen, sondern die Taktspur 128 wird gleichzeitig als Referenzspur 132 eingesetzt. Dabei wird eine Phasenverschiebung zwischen Taktspur-Signalen und ReferenzspurSignalen dadurch erreicht, dass der Referenz-Detektor 144 um einen Versatz 180 in yRichtung gegenüber dem Taktspur-Detektor 142 räumlich versetzt ist. Dies kommt einer Phasenverschiebung im Ortsraum gleich. Die Phasenverschiebung kann beispielsweise ein nicht-geradzahliges Vielfaches der Modulhöhe H sein, beispielsweise ein Versatz $\Delta = n \cdot 2 \cdot H + \frac{1}{2} \cdot H$. Dementsprechend ergibt sich eine Phasenverschiebung beispielsweise von 90°, bezogen auf eine Periode $P = 2 \cdot H$. Dabei ist n eine ganze Zahl.

Bei Erreichen des Endes des Barcodes 110, also des unteren Endes in Figur 10, tritt dabei bei herkömmlichen Barcodes 110 möglicherweise das Problem auf, dass die Taktspur 128 zu kurz ausgestaltet ist. Aus diesem Grund wird vorzugsweise bei diesem oder auch bei anderen Ausführungsbeispielen eines erfindungsgemäßen Barcodes 110, bei welchen die Taktspur 128 gleichzeitig auch als Referenzspur 132 eingesetzt wird, mit räumlich gegenüber dem Taktspur-Detektor 142 versetztem Referenz-Detektor 144, die Taktspur 128 in Bewegungsrichtung 120 über das Informationsfeld 118 hinaus verlängert, indem ein oder mehrere zusätzliche Taktmodule 182 vorgesehen werden, die in y-Richtung über die räumliche Begrenzung des Informationsfelds 118 hinausragen. Dies kann auch derart realisiert werden, dass die Forderung nach einer Ruhezone 164 von mindestens einem Modul um das Informationsfeld 118 herum erfüllt werden kann. Deshalb kann auch bei der Ausgestaltung gemäß Figur 10 der Barcode 110 grundsätzlich von handelsüblichen Detektoren 122 eingelesen werden.

Der räumliche Versatz zwischen dem Referenz-Detektor 144 und dem Takfispur-Detektor 142 in y-Richtung kann grundsätzlich auf verschiedene Weisen realisiert werden. Dies ist in Figur 10 angedeutet. Dabei kann beispielsweise wiederum ein Zeilendetektor 136 eingesetzt werden. Dies kann beispielsweise, wie auch in den anderen Ausführungsbeispielen, dadurch realisiert werden, dass ein zweidimensionales Detektorfeld mit zweidimensional angeordneten optischen Sensoren 138 eingesetzt wird, von welchem lediglich eine Zeile als Zeilendetektor 136 eingesetzt wird. Auch die Verwendung eines reinen einzeiligen Detektors ist jedoch grundsätzlich möglich. Zur Realisierung des in y-Richtung versetzten Referenz-Detektors 144 kann dann ein weiterer Detektor, beispielsweise ein einzelner, räumlich versetzter Detektor eingesetzt werden. Alternativ oder zusätzlich können jedoch auch ein oder mehrere optische Sensoren 138 einer von der Zeile des Zeilendetektors 136 verschiedenen zweidimensionalen Sensoranordnung eingesetzt werden.

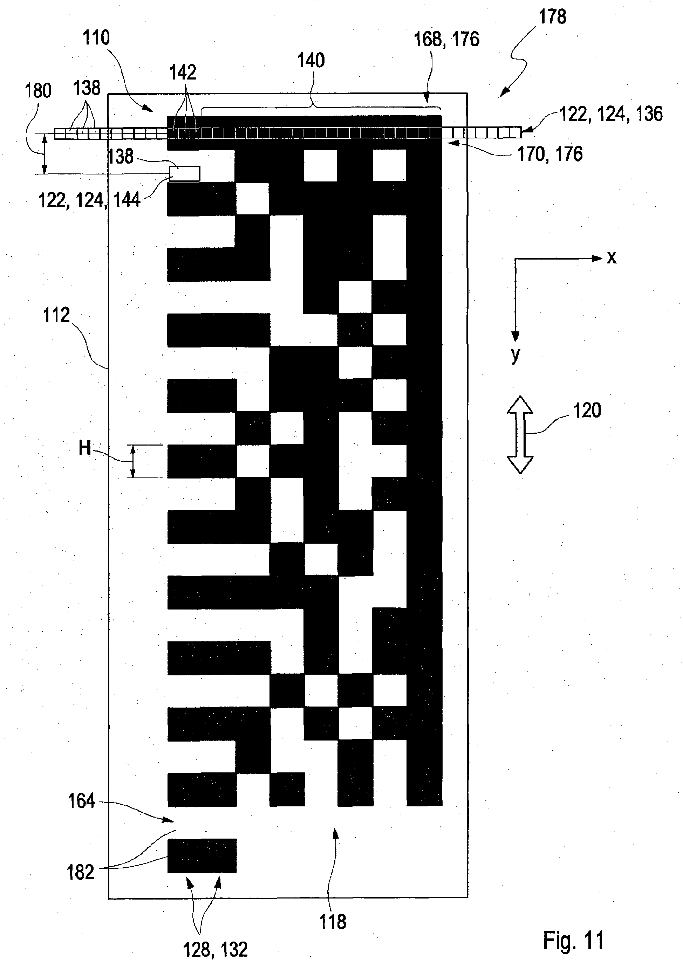

Bei dem Ausführungsbeispiel gemäß Figur 10 ist der Referenz-Detektor 144 exemplarisch lediglich in y-Richtung gegenüber dem Taktspur-Detektor 142 versetzt. Dies ist jedoch nicht notwendigerweise der Fall, wie exemplarisch anhand der Figur 11 gezeigt ist. Hier ist der mindestens eine Referenz-Detektor nicht nur in y-Richtung um den Versatz 180 versetzt, sondern auch exemplarisch um ein Modul in x-Richtung. Dabei kann die Taktspur 128, wie in Figur 11 dargestellt, optional auch in x-Richtung verbreitert werden, beispielsweise um ein zusätzliches Modul.

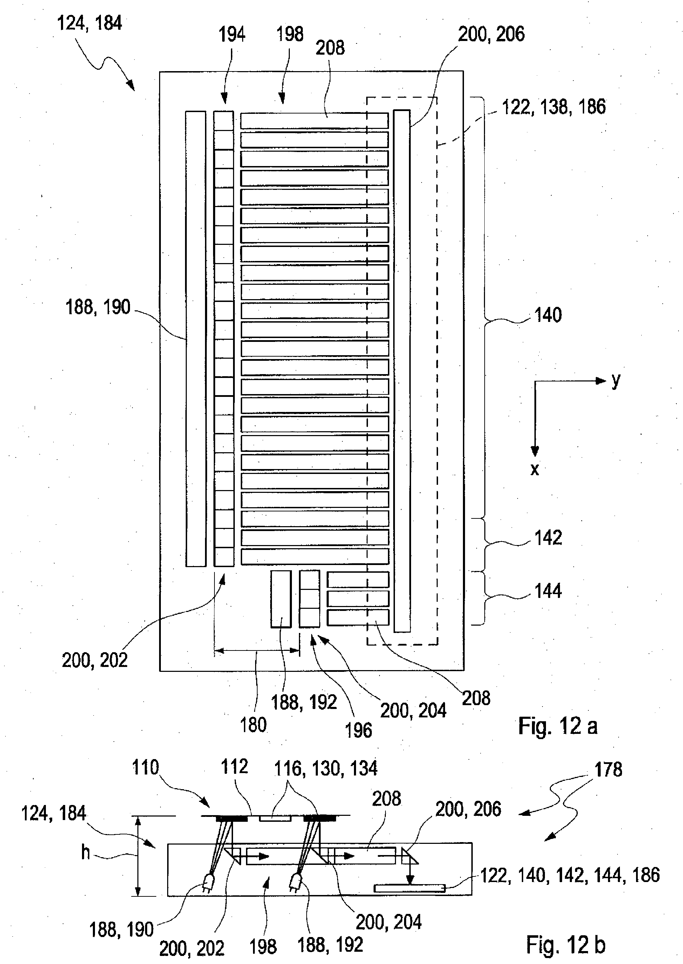

In den Figuren 12a und 12b ist ein vorliegend nicht beanspruchtes Ausführungsbeispiel eines Barcodelesers 124 in einer Draufsicht (Figur 12a) bzw. einer Ansicht von der Seite (Figur 12b) gezeigt, welches beispielsweise in der Vorrichtung 178 gemäß Figur 11 eingesetzt werden kann. Der Barcodeleser 124 kann in diesem Ausführungsbeispiel insbesondere als optischer Kontaktleser 184 ausgestaltet sein, so dass der Träger 112 mit dem Barcode 110 und dem Barcodeleser 124 (siehe Figur 12b) gemeinsam eine Höhe h aufweisen kann, welche beispielsweise maximal 10 mm, vorzugsweise maximal 5 mm, beträgt.

In dem in den Figuren 12a und 12b dargestellten Ausführungsbeispiel ist gezeigt, dass alle Detektoren 140, 142 und 144, sofern eine geeignete Optik verwendet wird, auch ganz oder teilweise bauteilidentisch ausgestaltet werden können. In diesem Ausführungsbeispiel nutzen die Detektoren 140, 142 und 144 exemplarisch ein und dieselbe Sensorzeile 186 eines Detektors 122. Diese Sensorzeile 186 kann wiederum, analog zu beispielsweise Figur 11, mehrere in den Figuren 12a und 12b nicht dargestellte optische Sensoren 138 umfassen, beispielsweise mindestens ein optischer Sensor 138 pro Modul 116 bzw. 130 bzw. 134 des Barcodes 110. Vorzugsweise ist die Modulbreite der Module in x-Richtung ein ganzzahliges Vielfaches der Breite der optischen Sensoren 138, was auch grundsätzlich für alle anderen Ausführungsbeispiele gelten kann.

Der als optischer Kontaktleser 184 ausgestaltete Barcodeleser 124 weist in dem in den Figuren 12a und 12b dargestellten Ausführungsbeispiel eine oder mehrere Beleuchtungen 188 auf, mittels derer der Barcode 110 beleuchtet werden kann. Die Beleuchtung 188 kann beispielsweise mittels einer oder mehrerer Leuchtdioden, Leuchtdiodenzeilen, Glühlampen oder anderen Arten von Beleuchtungseinrichtungen realisiert werden. Insbesondere kann, wie in den Figuren 12a und 12b angedeutet, eine zeilenförmige Beleuchtung eingesetzt werden, oder es können mehrere einzelne Lichtquellen in einer oder mehreren Zeilen angeordnet sein.

Die Beleuchtung 188 ist in diesem Ausführungsbeispiel unterteilt in eine Code-Beleuchtung 190 sowie eine Referenz-Beleuchtung 192, die gegenüber der Code-Beleuchtung 190 um einen Versatz in y-Richtung angeordnet ist. Die Code-Beleuchtung dient zur Beleuchtung des Informationsfeldes 118, optional einschließlich der Taktspur 128, wohingegen die Referenz-Beleuchtung 192 zur Beleuchtung der Referenzspur 132 dient. Auch andere Ausgestaltungen sind jedoch möglich, so dass beispielsweise zusätzlich eine Takt-Beleuchtung vorgesehen sein kann oder dass auch die Referenz-Beleuchtung 192 in die Code-Beleuchtung 190 integriert sein kann.

Das von der Beleuchtung 188 emittierte Licht wird an dem Barcode 110 reflektiert, entsprechend der Reflexionseigenschaften der Module 116, 130, 134. Das reflektierte Licht wird vom Barcodeleser 124 wieder aufgenommen. Dies kann unmittelbar erfolgen oder durch "Fenster", durch welche das reflektierte Licht wieder in den Barcodeleser 124 eintreten kann. In den Figuren 12a und 12b sind derartige Fenster optional in Form von Codefenstem 194 für das reflektierte Licht der Code-Beleuchtung 190 und in Form von Referenzfenstern 196 für das reflektierte Licht der Referenz-Beleuchtung 192 dargestellt. Diese Fenster 194, 196 können beispielsweise als reale Öffnungen in einer dem Barcode 110 zuweisenden Oberfläche des Barcodelesers 124 ausgestaltet sein oder können auch einfache virtuelle Eintrittsgebiete der jeweiligen reflektierten Strahlen sein. Gleichzeitig können diese Referenzfenster 196 bzw. Codefenster 194 den virtuellen oder realen Ort der jeweiligen Detektoren darstellen, d.h. beispielsweise das Code-Fenster 194 den jeweiligen Ort der Barcode-Detektoren 140 bzw. Taktspur-Detektoren 142 und der Ort der Referenzfenster 196 den Ort der Referenz-Detektoren 144. Dementsprechend kann der Abstand in y-Richtung zwischen dem Codefenster 194 und dem Referenzfenster 196 beispielsweise dem Versatz 180 gemäß den Ausgestaltungen in den Figuren 10 und 11 entsprechen. Alternativ könnte auch der Abstand der Code-Beleuchtung 190 von der Referenz-Beleuchtung 192 in y-Richtung als Versatz 180 betrachtet werden.

In dem dargestellten Ausführungsbeispiel gemäß den Figuren 12a und 12b ist weiterhin eine Abbildungsoptik 198 als optionales Element vorgesehen. Diese Abbildungsoptik 198 kann ausgestaltet sein, um diejenigen reflektierten Strahlen von über den jeweiligen Fenstern 194, 196 positionierten Bereichen des Barcodes 110 auf jeweilige Abschnitte der Sensorzeile 186 zu lenken und/oder abzubilden. Zu diesem Zweck kann die Abbildungsoptik 198 beispielsweise ein oder mehrere Umlenkelemente 200 umfassen. Diese Umlenkelemente 200 sind exemplarisch in Figur 12b als Prismen ausgestaltet. Alternativ oder zusätzlich können jedoch eines oder mehrere der Umlenkelemente 200 in anderer Form ausgestaltet sein, beispielsweise in Form von Spiegeln oder ähnlichen, dem Fachmann bekannten Umlenkelementen. In dem dargestellten Ausführungsbeispiel sind Code-Umlenkelemente 202 vorgesehen, um die von der Code-Beleuchtung 190 stammenden, reflektierten Lichtstrahlen umzulenken, und Referenz-Umlenkelemente 204, um die von der Referenz-Beleuchtung 192 stammenden, reflektierten Lichtstrahlen in horizontaler Richtung umzulenken. Weiterhin sind oberhalb der Sensorzeile 186 Sensor-Umlenkelemente 206 vorgesehen, um die Lichtstrahlen auf die Sensorzeile 186 zu lenken.

Weiterhin kann die Abbildungsoptik 198 ein oder mehrere Lichtleiterelemente und/oder abbildende Elemente umfassen. Beispielsweise kann es sich hierbei um kombinierte Lichtleiter-Linsenelemente handeln, beispielsweise in Form von so genannten Stab-Linsen, welche in den Figuren 12a und 12b mit der Bezugsziffer 208 bezeichnet sind. Beispielsweise können pro nachzuweisendem Modul 114 in x-Richtung jeweils ein oder mehrere derartiger Stab-Linsen 208 vorgesehen sein. Die Stab-Linsen 208 können beispielsweise als so genannte Gradientenindex-Linsen ausgestaltet sein.

Mittels der optionalen Ausgestaltungen des Barcodelesers 124 gemäß den Figuren 12a und 12b lässt sich insbesondere ein optischer Kontaktleser 184 darstellen. Dieser wird beispielsweise durch einen gekröpften Strahleneingang, aufweisend jeweils die Fenster 194 und 196 sowie das zusätzliche optische Sensorelement in Form des Referenz-Detektors 144, beschrieben. Das Codefenster 194 wird durch die Code-Beleuchtung 190 und über die zugehörige Abbildungsoptik 196 auf die optische Sensorzeile 186 abgebildet. Das Referenzfenster 196 wiederum wird beleuchtet durch die Referenz-Beleuchtung 192 und über die zugehörige Abbildungsoptik 198 ebenso auf ein anderes Teilstück derselben optischen Sensorzeile 186 abgebildet.

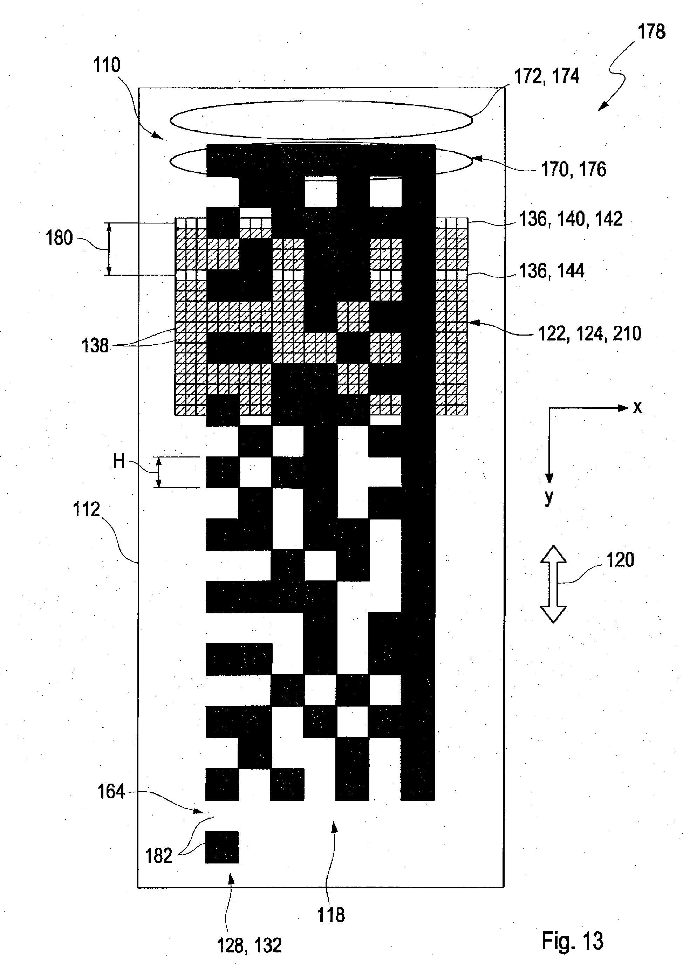

In Figur 13 ist ein weiteres Ausführungsbeispiel einer vorliegend nicht beanspruchten Vorrichtung 178, eines Barcodelesers 124 und eines Barcodes 110 auf einem Träger 112 dargestellt, bei welchem der Barcodeleser 124 alternativ zu dem in Figur 10 dargestellten Ausführungsbeispiel ausgestaltet ist. In diesem Ausführungsbeispiel umfasst der Detektor 122 einen optischen Feldsensor 210 mit einer Mehrzahl von in zwei Dimensionen (parallel zur x-Achse und parallel zur y-Achse) ausgerichteten optischen Sensoren 138. Aus diesem Feldsensor 210 werden zwei Sensorzeilen (d.h. jeweils Sensoren mit gleicher yKoordinate) als Zeilendetektoren 136 verwendet, welche zueinander einen Versatz 180 in y-Richtung aufweisen. Beispielsweise kann es sich bei dem optischen Feldsensor 210 um einen CCD-Kamerachip handeln und/oder um einen kostengünstigen Maus-Sensor. Während der obere Zeilendetektor 136 beispielsweise, analog zur Beschreibung der Figur 10, den Barcode-Detektor 140 und den Taktspur-Detektor 142 bereitstellen kann, stellt der untere der Zeilendetektoren 136 in Figur 13 den Referenz-Detektor 144 bereit. Alternativ zu der zwei-zeiligen Ausgestaltung könnten auch weitere Zeilen herangezogen werden. Der Versatz 180 der Zeilendetektoren 136 kann beispielsweise wiederum analog zu dem Versatz 180 gemäß Figur 10 gewählt werden. Beispielsweise kann ein Versatz gewählt werden, welcher der Bedingung $n \cdot H + \frac{1}{2} \cdot H$ genügt, wobei n wiederum eine ganze Zahl sein kann. Beispielsweise kann dieser Versatz einer Phasenverschiebung von 90° entsprechen, bezogen auf eine Periode von 2H, oder 180°, bezogen auf eine Periode H.

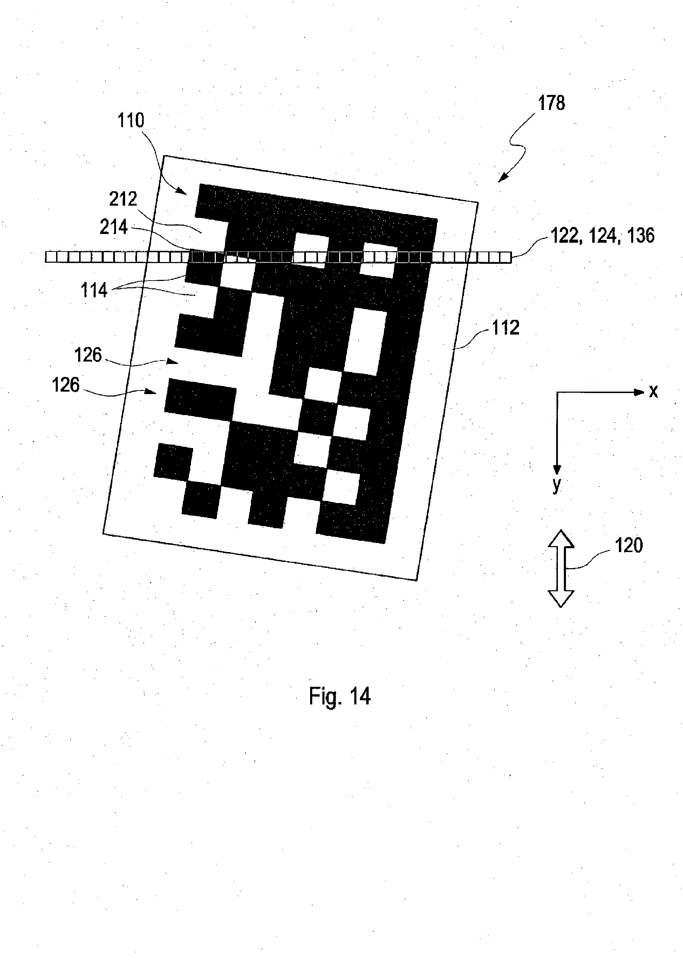

Typischerweise benötigt ein Barcodeleser 124, welcher als Schub- oder Zugleser ausgestaltet ist, also als Barcodeleser 124, bei welchem der Träger 112 relativ zu dem Detektor 122 bewegt wird, ein gewisses Spiel bezüglich der Bewegung des Trägers 112. Dies ist exemplarisch in Figur 14 dargestellt, welche auf erfindungsgemäße und auf nicht erfindungsgemäße Ausführungsformen angewandt werden kann. Durch dieses Spiel kann es zu einem Winkelversatz zwischen den Zeilen 126 und der senkrecht zur Bewegungsrichtung 120 ausgerichteten x-Achse kommen. Dies äußerst sich dadurch, dass ein Codemodul-Sollwert 212, also dasjenige Modul 114, welches tatsächlich ausgelesen werden sollte, von einem Codemodul-Istwert 214 abweicht. Der Codemodul-Sollwert 212 in Form einer Weiß- oder High-Repräsentation wird in Figur 14 exemplarisch fehlerhaft als Codemodul-Istwert 214 in Form einer Schwarz- oder Low-Repräsentation durch den Zeilendetektor 136 wiedergegeben.

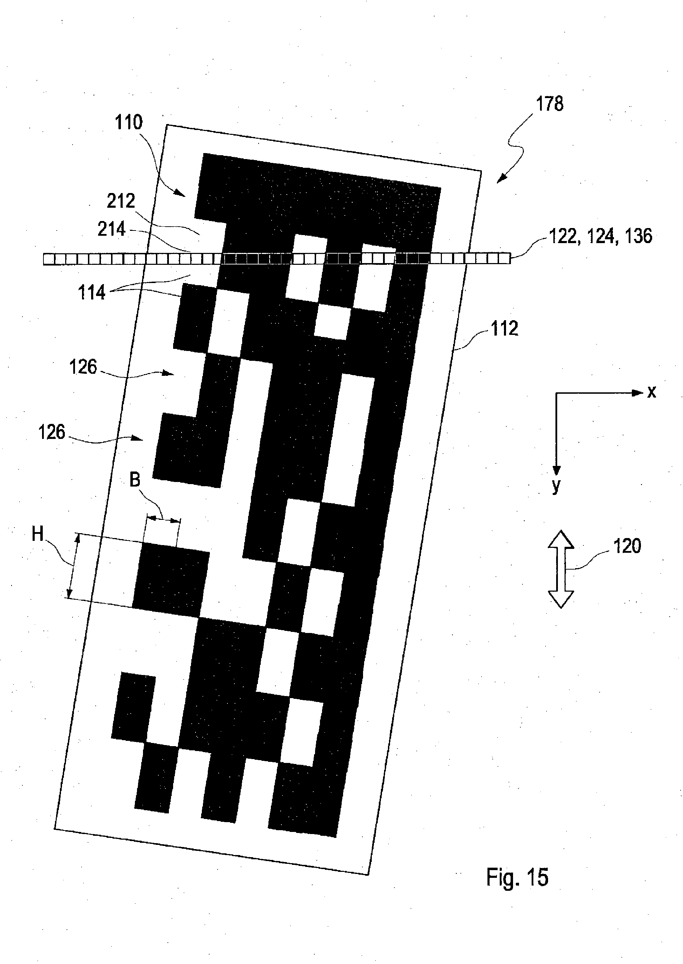

Dieser Fehler kann dadurch verringert werden, dass die Module 114 vollständig oder teilweise in ihrem Höhen-zu-Breiten-Verhältnis verändert werden. So kann die Modulhöhe H gegenüber der Modulbreite B vergrößert werden. Dies ist exemplarisch in Figur 15 dargestellt. Wie anhand der Figur 15 zu erkennen ist, stimmen zumindest bei einer ungefähr mittigen Ablesung der Module 114 der Codemodul-Sollwert 212 und der Codemodul-Istwert 214 überein.

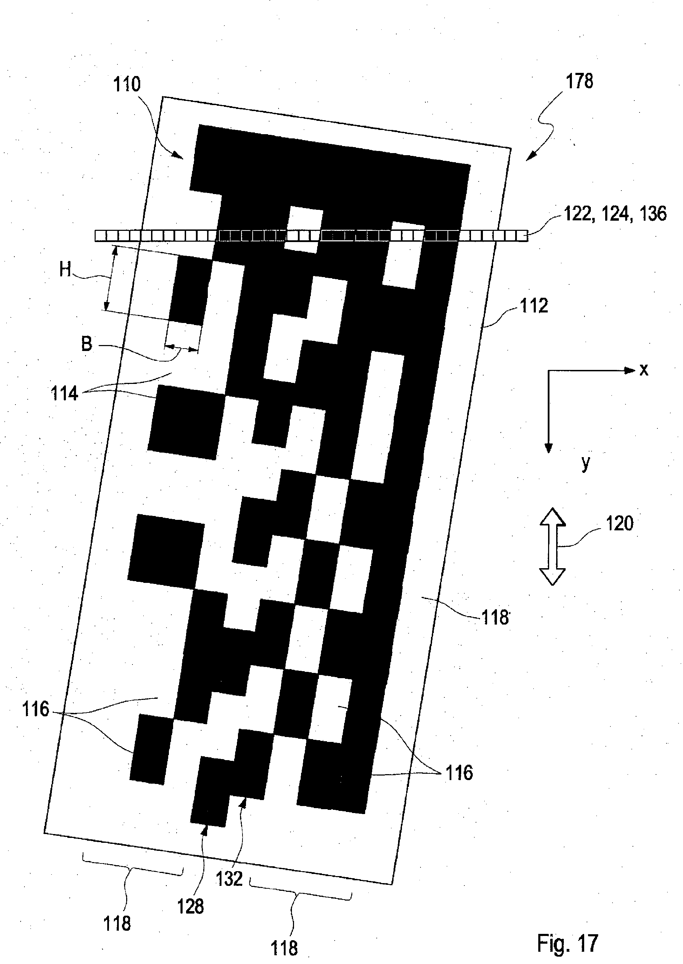

In Figur 17 ist ein zu Figur 15 alternatives erfindungsgemäßes Ausführungsbeispiel eines Barcodes 110 und einer Vorrichtung 178 dargestellt. Der Barcode 110 kann grundsätzlich analog beispielsweise zu Figur 15 ausgestaltet sein. Alternativ sind jedoch auch andere Ausführungsbeispiele gemäß der in Figur 17 dargestellten Idee modifizierbar. Der Barcode 110 in Figur 17 berücksichtigt die Erkenntnis, dass der anhand der Figur 14 beschriebene Fehler aufgrund eines Winkelversatzes naturgemäß in der Mitte des Barcodes 110, bezogen auf eine Richtung senkrecht zur Bewegungsrichtung 120, sich am geringsten auswirkt. Dementsprechend wird in dem Ausführungsbeispiel gemäß Figur 17 vorgeschlagen, die Taktspur 128 und/oder die optionale Referenzspur 132 in die Mitte des Barcodes 110 zu verlegen. Dies bedeutet, dass die Taktspur 128 und optional die Referenzspur 132 beidseitig, wenn eine Richtung senkrecht zur Bewegungsrichtung 120, von Informations-Modulen 116 und Informationsfeldern 118 umgeben sind, also dass sich beidseitig jeweils mindestens eine Spalte von Informations-Modulen 116 an die Taktspur 128 und optional an die Referenzspur 132 anschließt. Da die Taktspur 128 und optional die Referenzspur 132 für den Zeitpunkt der Erfassung der Modul-Information verantwortlich sind, bietet das Ausführungsbeispiel gemäß Figur 17 mit der Verlegung der Spuren 128 und optional 132 in die Codemitte den Vorteil einer präzisen Referenzierung. In der Codemitte ist naturgemäß die geringste Auswirkung eines Winkelversatzes zu erwarten.

Das Ausführungsbeispiel gemäß Figur 17 kann grundsätzlich auf andere Ausführungsbeispiele der vorliegenden Erfindung übertragen werden. So ist in Figur 17 exemplarisch die Idee der Figur 15 umgesetzt, dass die Module 114 in Bewegungsrichtung 120 lang gestreckt sind, also eine Modulhöhe $H$ aufweisen, welche eine Modulbreite B überschreitet. Alternativ sind jedoch auch andere Ausgestaltungen möglich, beispielsweise Ausgestaltungen mit quadratischen Modulen. Weiterhin ist die Referenzspur 132 nicht notwendigerweise erforderlich, da, beispielsweise analog zu Figur 11, ein Phasenversatz, alternativ oder zusätzlich, auch durch den Detektor 122 erzeugt werden kann. Weiterhin ist es nicht unbedingt erforderlich, dass die Taktspur 128 und die Referenzspur 132 nebeneinander angeordnet sind, sondern es können sich beispielsweise auch Informationsmodule 116 zwischen diesen Spuren 128, 132 befinden. Verschiedene andere Ausgestaltungen sind möglich.

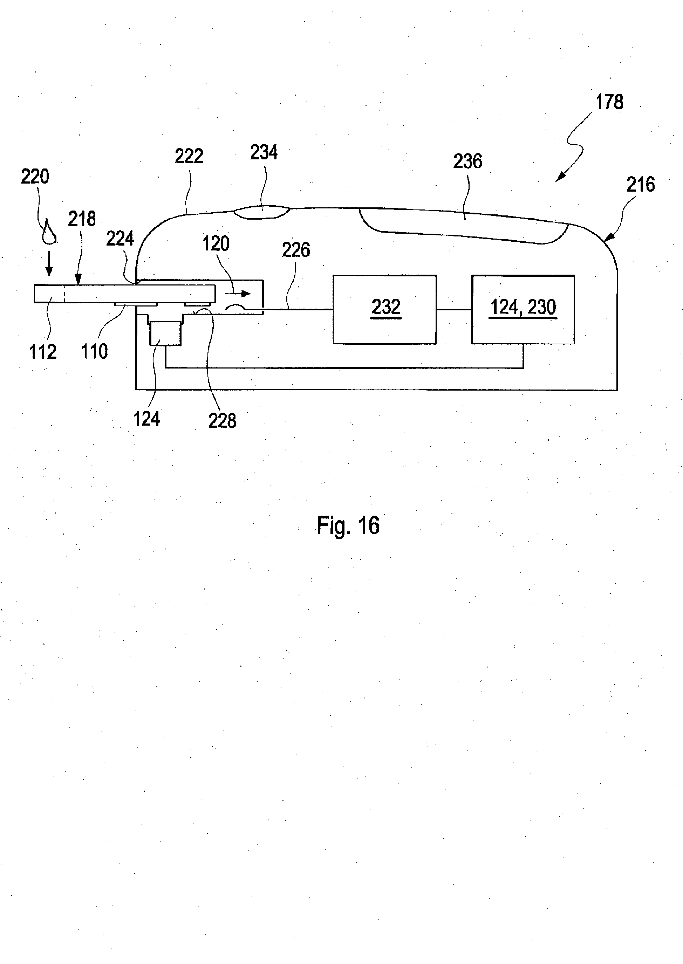

In Figur 16 ist in einer schematischen Schnittdarstellung schließlich ein mögliches Ausführungsbeispiel einer erfindungsgemäßen Vorrichtung 178 dargestellt. Die Vorrichtung umfasst in diesem Ausführungsbeispiel 216 exemplarisch ein medizinisches Messgerät, welches beispielsweise als Blutglucose-Messgerät ausgestaltet sein kann, und welches eingerichtet ist, um mit einem medizinischen Verbrauchsartikel 218, beispielsweise einem Teststreifen zur Analyse einer flüssigen Probe 220, zusammenzuwirken. Der Teststreifen selbst umfasst einen streifenförmigen Träger 212, auf welchem beispielsweise ein oder mehrere Testfelder aufgebracht sind, die in Figur 16 nicht dargestellt sind und welche beispielsweise eine oder mehrere Testchemien zum qualitativen und/oder quantitativen Nachweis mindestens eines Analyten in der Probe 220 umfassen.

Die Vorrichtung 178 kann beispielsweise ein Gehäuse 222 umfassen, in welchem mindestens eine Aufnahme 224 zur Aufnahme des Trägers 212 bzw. des medizinischen Verbrauchsartikels 218 vorgesehen ist. Beispielsweise kann diese Aufnahme 224 einen Aufnahmeschlitz umfassen. In dieser Aufnahme 224 kann auch beispielsweise mindestens ein elektrischer Kontakt 226 vorgesehen sein, um den medizinischen Verbrauchsartikel 218 an einer oder mehreren Kontaktflächen 228 elektrisch zu kontaktieren. Diese Ausgestaltung ist insbesondere bei einer Verwendung elektrochemischer Teststreifen als medizinische Verbrauchsartikel 218 denkbar. Alternativ oder zusätzlich kann es sich jedoch auch beispielsweise um optisch auslesbare Teststreifen handeln. In diesem Fall können die elektrischen Kontakte 226 beispielsweise durch eine optische Lesevorrichtung ersetzt werden, beispielsweise eine optische Lesevorrichtung, welche eingerichtet ist, um Farbänderungen eines oder mehrerer Testfelder, welche auf den Analyten zurückzuführen sind, auszulesen.

Weiterhin umfasst die Vorrichtung 178 in dem in Figur 16 dargestellten Ausführungsbeispiel einen oder mehrere Barcodeleser 124, welche eingerichtet sind, um einen Barcode 110, der in die Aufnahme 224 in einer Bewegungsrichtung 120 eingeschoben wird, auszulesen. Bezüglich der möglichen Ausgestaltungen des Barcodelesers 124 kann auf die oben beschriebenen Ausgestaltungen oder andere mögliche Ausgestaltungen im Rahmen der vorliegenden Erfindung verwiesen werden. Der Barcodeleser 124 kann beispielsweise mit einer zentralen Steuerung 230 verbunden sein. Alternativ oder zusätzlich können jedoch auch Bestandteile des Barcodelesers 124 in der zentralen Steuerung 230 und/oder in anderen Teilen der Vorrichtung 178 implementiert sein. So kann beispielsweise im Bereich der Aufnahme 224 lediglich ein optischer Bestandteil des Barcodelesers 124 angeordnet sein, wohingegen Datenspeicher und/oder Auswertevorrichtungen des Barcodelesers 124 ganz oder teilweise in der zentralen Steuerung 230 implementiert sein können. So können beispielsweise eine oder mehrere Auswertungsvorrichtungen des Barcodelesers 124 als Software- oder Hardware-Bausteine in der zentralen Steuerung 230 implementiert sein. Die zentrale Steuerung 230 kann beispielsweise eine Datenverarbeitungsvorrichtung umfassen, gegebenenfalls mit einem oder mehreren flüchtigen oder nicht flüchtigen Speicherelementen. Darüber hinaus kann die Vorrichtung 178 weitere Komponenten umfassen, beispielsweise eine Auswertungsvorrichtung 232, welche beispielsweise eingerichtet sein kann, um die eigentliche Messung der Vorrichtung 178 vorzunehmen, beispielsweise einen Analytnachweis. Auch diese Auswertungsvorrichtung 232 kann jedoch auch ganz oder teilweise in der zentralen Steuerung 230 implementiert sein. Die zentrale Steuerung 230 kann als ein einzelner Baustein ausgestaltet sein oder kann jedoch auch mehrteilig ausgestaltet sein, gegebenenfalls auch verteilt über verschiedene Bereiche der Vorrichtung 178. Weiterhin kann die Vorrichtung 178 ein oder mehrere Bedienelemente 234, beispielsweise zur Eingabe von Befehlen und/oder Steuerdaten und/oder anderen Informationen, und/oder eine oder mehrere Anzeigevorrichtungen 236, beispielsweise ein oder mehrere Displays, umfassen. Auch andere Arten von Benutzerschnittstellen können grundsätzlich vorgesehen sein.

Bei der in Figur 16 exemplarisch dargestellten Vorrichtung mit dem medizinischen Messgerät 216 und dem medizinischen Verbrauchsartikel 218, beispielsweise einem analytischen Testelement 238, wird der medizinische Verbrauchsartikel 218 mit dem Barcode 110 vorzugsweise manuell in die Aufnahme 224 eingeschoben, so dass ein rein manueller Vorschub vorliegt. In diesem Fall ist es besonders günstig, einen erfindungsgemäß ausgestalteten Barcodeleser 124 einzusetzen. Wie oben dargestellt, kann der Barcodeleser 124 insbesondere derart ausgestaltet sein, dass während der Bewegung des Trägers 112 in oder entgegen der Bewegungsrichtung 120 der Barcode 110 mittels eines oder mehrerer Detektoren 122 in Form eines oder mehrerer Zeilendetektoren 136 zeilenweise ausgelesen wird. In diesem Fall macht sich aufgrund der Stabilität des oben beschriebenen Verfahrens und der oben beschriebenen Vorrichtung 178 hinsichtlich möglicher Unregelmäßigkeiten während des Vorschubs, insbesondere des manuellen Vorschubs, das oben vorgeschlagene Verfahren besonders vorteilhaft bemerkbar.

Bezugszeichenliste

| | | | | |
|---|---|---|---|---|
| 110 | Barcode | | 184 | optischer Kontaktleser |
| 112 | Träger | | 186 | Sensorzeile |
| 114 | Module | | 188 | Beleuchtung |
| 116 | Informations-Module | | 190 | Code-Beleuchtung |
| 118 | Informationsfeld | | 192 | Referenz-Beleuchtung |
| 120 | Bewegungsrichtung | | 194 | Codefenster |
| 122 | Detektor | | 196 | Referenzfenster |
| 124 | Barcodeleser | | 198 | Abbildungsoptik |
| 126 | Zeile | | 200 | Umlenkelemente |
| 128 | Taktspur | | 202 | Code-Umlenkelemente |
| 130 | Taktspur-Module | | 204 | Referenz-Umlenkelemente |
| 132 | Referenzspur | | 206 | Sensor-Umlenkelemente |
| 134 | Referenzspur-Module | | 208 | Stab-Linsen |
| 136 | Zeilendetektor | | 210 | optischer Feldsensor |
| 138 | optische Sensoren | | 212 | Codemodul-Sollwert |
| 140 | Barcode-Detektor | | 214 | Codemodul-Istwert |
| 142 | Taktspur-Detektor | | 216 | medizinisches Messgerät |
| 144 | Referenz-Detektor | | 218 | medizinischer Verbrauchsartikel |
| 146 | Low-Modul | | 220 | Probe |
| 148 | High-Modul | | 222 | Gehäuse |
| 150 | Zustandswechsel | | 224 | Aufnahme |
| 152 | Übergangsflanke | | 226 | elektrischer Kontakt |
| 154 | positive Flanke | | 228 | Kontaktflächen |
| 156 | negative Flanke | | 230 | zentrale Steuerung |
| 158 | Zustand der Referenzspur | | 232 | Auswertungsvorrichtung |
| 160 | Datenspeicher | | 234 | Bedienelemente |
| 162 | Adresse | | 236 | Anzeigevorrichtung |
| 164 | Ruhezone | | 238 | analytisches Testelement |
| 166 | zusätzliche Taktspur in x-Richtung | | | |
| 168 | Längsbalken | | | |
| 170 | Querbalken | | | |
| 172 | Weißwert-Referenz | | | |
| 174 | weitere Ruhezone | | | |
| 176 | Schwarzwert-Referenz | | | |
| 178 | Vorrichtung zur Übertragung einer Information | | | |
| 180 | Versatz | | | |
| 182 | zusätzliches Taktmodul | | | |

**Patentansprüche**

1. Barcode (110), umfassend eine Mehrzahl von Informations-Modulen (116), wobei der Barcode (110) weiterhin eine Taktspur (128) zur Taktung eines Auslesens der Informations-Module (116) mittels mindestens eines einen Referenz-Detektor (144) und einen Taktspur-Detektor (142) umfassenden Barcodelesers (124) umfasst, wobei zwischen dem Barcode (110) und dem Barcodeleser (124) eine Relativbewegung in einer Bewegungsrichtung (120) erfolgt, wobei der Barcode (110) weiterhin mindestens eine von der Taktspur (128) getrennt ausgestaltete Referenzspur (132) umfasst, **dadurch gekennzeichnet, dass** die Referenzspur (132) gegenüber der Taktspur (128) einen Phasenversatz aufweist, wobei die Taktspur (128) eine Mehrzahl von aufeinanderfolgenden Taktspur-Modulen (130) aufweist, welche nacheinander in einer geraden oder auch gekrümmten Linie in dem Barcode (110) angeordnet sind und welche nicht gleichzeitig als Informations-Module (116) des Barcodes (110) dienen, sondern welche ausschließlich dem Zweck einer Taktung dienen, wenn der Barcode (110) relativ zu dem Barcodeleser (124) bewegt wird, wobei die Referenzspur (132) als zweite Taktspur (128) ausgestaltet ist, wobei die Referenzspur (132) dieselbe Periodizität aufweist wie die Taktspur (128), so dass der Referenz-Detektor (144) bei der Bewegung des Barcodes (110) relativ zu dem Barcodeleser (124) Signale aufnimmt, welche eine Periodizität aufweisen, die gegenüber einer Periodizität von Signalen, die der Taktspur-Detektor (142) aufnimmt, phasenverschoben sind.

2. Vorrichtung (178) zur Übertragung mindestens einer Information, wobei die Vorrichtung (178) mindestens einen Träger (112) mit mindestens einem Barcode (110) nach Anspruch 1 umfasst, wobei die Vorrichtung (178) weiterhin mindestens einen Barcodeleser (124) zur Erfassung des mit dem bewegten Träger (112) verbundenen Barcodes (110) umfasst, wobei der Barcodeleser (124) mindestens einen optischen Barcode-Detektor (140) zur mindestens eindimensionalen Erfassung von Informations-Modulen (116) des Barcodes (110) umfasst, wobei der Barcodeleser (124) weiterhin mindestens einen optischen Taktspur-Detektor (142) zur Erfassung von Taktspur-Modulen (130) einer Taktspur (128) des Barcodes (110) sowie mindestens einen optischen Referenz-Detektor (144) zur Erfassung mindestens einer Referenz-Information des Barcodes (110) umfasst, wobei der Barcodeleser (124) eingerichtet ist, um aus mindestens einem Signal des Taktspur-Detektors (142) und mindestens einem Signal des Referenz-Detektors (144) auf eine Bewegungsrichtung (120) des Trägers (112) zu schließen, wobei die Vorrichtung (178) derart eingerichtet ist, dass die Taktspur-Module (130) nicht gleichzeitig als Informations-Module (116) des Barcodes (110) dienen, sondern dass die Taktspur-Module (130) ausschließlich dem Zweck einer Taktung dienen, wenn der Barcode (110) relativ zu dem Barcodeleser (124) bewegt wird.

3. Vorrichtung (178) nach dem vorhergehenden Anspruch, wobei der Barcodeleser (124) eingerichtet ist, um mindestens eine durch die Taktspur (128) bedingte Signal-Änderung in dem Signal des Taktspur-Detektors (142) zu erfassen, insbesondere eine positive oder negative Flanke (154, 156).

4. Vorrichtung (178) nach einem der Ansprüche 2 oder 3, wobei der Barcodeleser (124) eingerichtet ist, um aus einem Vorzeichen einer von dem Taktspur-Detektor (142) erfassten Signal-Änderung und einem Absolutwert des Signals des Referenz-Detektors (144), insbesondere einem koinzidenten Signal des Referenz-Detektors (144), auf die Bewegungsrichtung (120) zu schließen.

5. Vorrichtung (178) nach dem vorhergehenden Anspruch, wobei der Barcodeleser (124) eingerichtet ist, um

   - bei Erkennung einer negativen Flanke (156) im Signal des Taktspur-Detektors (142) und einem ersten Signalpegel des Signals des Referenz-Detektors (144) oder einer positiven Flanke (154) im Signal des Taktspur-Detektors (142) und einem zweiten Signalpegel des Signals des Referenz-Detektors (144) auf eine erste Bewegungsrichtung (120) zu schließen und
   - bei Erkennung einer positiven Flanke (154) im Signal des Taktspur-Detektors (142) und dem ersten Signalpegel des Signals des Referenz-Detektors (144) oder einer negativen Flanke (156) im Signal des Taktspur-Detektors (142) und dem zweiten Signalpegel des Signals des Referenz-Detektors (144) auf eine der ersten Bewegungsrichtung (120) entgegengesetzte zweite Bewegungsrichtung (120) zu schließen.

6. Vorrichtung (178) nach einem der Ansprüche 2 bis 5, weiterhin umfassend einen Datenspeicher (160), wobei die Informations-Module (116) in mindestens einem Informationsfeld (118) des Barcodes (110) angeordnet sind, wobei das Informationsfeld als rechteckiges Feld mit Zeilen (126) und Spalten von Informations-Modulen (116) ausgestaltet ist, wobei der Barcodeleser (124) eingerichtet ist, um in den Zeilen (126) des Barcodes (110) enthaltene Informationen auszulesen und in dem Datenspeicher (160) jeweils mit einem der Zeile (126) entsprechenden Adresszähler (162) zu speichern, wobei der Barcodeleser (124) eingerichtet ist, um entsprechend der erkannten Bewegungsrichtung (120) den Adresszähler (162) zu inkrementieren oder zu dekrementieren.

**7.** Vorrichtung (178) nach einem der Ansprüche 2 bis 6, wobei der optische Taktspur-Detektor (142) Bestandteil des Barcode-Detektors (140) ist.

**8.** Vorrichtung (178) nach einem der Ansprüche 2 bis 7, wobei der Referenz-Detektor (144) in einer Richtung senkrecht zur Bewegungsrichtung (120) neben dem Taktspur-Detektor (142) angeordnet ist.

**9.** Vorrichtung (178) nach einem der Ansprüche 2 bis 8, umfassend mindestens ein optisches Sensorelement (138), insbesondere eine Sensorzeile (186), wobei der Taktspur-Detektor (142) und der Referenz-Detektor (144) eingerichtet sind, um das optische Sensorelement (138) zu verwenden.

**10.** Vorrichtung (178) nach einem der Ansprüche 2 bis 9, weiterhin umfassend eine Aufnahme (224) zum Aufnehmen des Trägers (112), wobei die Aufnahme (224) eingerichtet ist, um eine Bewegung des Trägers (112) relativ zu dem Barcodeleser (124) zu ermöglichen, wobei der Barcodeleser (124) derart eingerichtet ist, dass während der Bewegung des Trägers (112) in der Aufnahme (224) der Barcode (110) mittels des Barcodelesers (124) ausgelesen werden kann.

**11.** Vorrichtung (178) nach einem der Ansprüche 2 bis 10, wobei die Taktspur (128) eine Mehrzahl von periodisch alternierenden Taktspur-Modulen (130) aufweist, wobei die alternierenden Taktspur-Module (130) eingerichtet sind, um bei Passieren des Taktspur-Detektors (142) in dem Taktspur-Detektor (142) alternierend mindestens zwei unterschiedliche Signalpegel zu erzeugen.

**12.** Vorrichtung (178) nach einem der Ansprüche 2 bis 11, wobei der Barcode (110) ein zweidimensionaler Barcode (110) ist.

**13.** Vorrichtung (178) nach einem der Ansprüche 2 bis 12, wobei die Referenzspur (132) parallel zu der Bewegungsrichtung (120) angeordnet ist.

**14.** Vorrichtung (178) nach einem der Ansprüche 2 bis 13, wobei die Referenzspur (132) eine Mehrzahl von periodisch alternierenden Referenzspur-Modulen (134) aufweist, wobei die alternierenden Referenzspur-Module (134) eingerichtet sind, um bei Passieren des Referenz-Detektors (144) in dem Referenz-Detektor (144) alternierend mindestens zwei unterschiedliche Signalpegel zu erzeugen, wobei eine Periodizität der Referenzspur (132) phasenverschoben gegenüber einer Periodizität der Taktspur (128) ist.

**15.** Verwendung einer Vorrichtung (178) nach einem der Ansprüche 2 bis 14 zur Übertragung Verbrauchsartikel-spezifischer Informationen von mindestens einem medizinischen Verbrauchsartikel (218) auf ein mit dem medizinischen Verbrauchsartikel (218) zusammenwirkendes medizinisches Gerät, insbesondere ein medizinisches Messgerät (216) und/oder Therapiegerät.

**16.** Verfahren zur Erfassung eines mit einem bewegten Träger (112) verbundenen optischen Barcodes (110), wobei der Barcode (110) gemäß Anspruch 1 verwendet wird, wobei bei dem Verfahren mindestens eindimensional die Informations-Module (116) des Barcodes (110) erfasst werden, wobei mit mindestens einem Taktspur-Detektor (142) die Taktspur-Module (130) erfasst werden, wobei bei dem Verfahren die Taktspur-Module (130) nicht gleichzeitig als Informations-Module (116) des Barcodes (110) dienen, sondern ausschließlich dem Zweck einer Taktung dienen, wobei weiterhin mindestens eine Referenz-Information des Barcodes (110) mittels mindestens eines Referenz-Detektors (144) erfasst wird, wobei aus mindestens einem Signal des Taktspur-Detektors (142) und mindestens einem Signal des Referenz-Detektors (144) auf eine Bewegungsrichtung (120) des Trägers (112) geschlossen wird.

## Claims

**1.** Barcode (110) comprising a plurality of information modules (116), the barcode (110) also comprising a clock track (128) for clocking reading of the information modules (116) using at least one barcode reader (124) comprising a reference detector (144) and a clock track detector (142), a relative movement being carried out in a direction of movement (120) between the barcode (110) and the barcode reader (124), the barcode (110) also comprising at least one reference track (132) which is separate from the clock track (128), **characterized in that** the reference track (132) has a phase shift with respect to the clock track (128), the clock track (128) having a plurality of successive clock track modules (130) which are arranged in succession in a straight or else curved line in the barcode (110) and are not simultaneously used as information modules (116) of the barcode (110) but rather are used solely for the purpose of clocking when the barcode (110) is moved relative to the barcode reader (124), the reference track (132) being in the form of a second clock track (128), the reference track (132) having the same periodicity as the clock track (128), with the result that, when the barcode (110) is moved relative to the barcode reader (124), the reference detector (144) records signals having a periodicity which has a phase shift with respect to a periodicity of signals recorded by the clock track detector (142).

2. Apparatus (178) for transmitting at least one item of information, the apparatus (178) comprising at least one carrier (112) having at least one barcode (110) according to Claim 1, the apparatus (178) also comprising at least one barcode reader (124) for detecting the barcode (110) associated with the moving carrier (112), the barcode reader (124) comprising at least one optical barcode detector (140) for the at least one-dimensional detection of information modules (116) of the barcode (110), the barcode reader (124) also comprising at least one optical clock track detector (142) for detecting clock track modules (130) of a clock track (128) of the barcode (110) and at least one optical reference detector (144) for acquiring at least one item of reference information relating to the barcode (110), the barcode reader (124) being set up to infer a direction of movement (120) of the carrier (112) from at least one signal from the clock track detector (142) and at least one signal from the reference detector (144), the apparatus (178) being set up in such a manner that the clock track modules (130) are not simultaneously used as information modules (116) of the barcode (110) but rather the clock track modules (130) are used solely for the purpose of clocking when the barcode (110) is moved relative to the barcode reader (124).

3. Apparatus (178) according to the preceding claim, the barcode reader (124) being set up to detect at least one signal change caused by the clock track (128) in the signal from the clock track detector (142), in particular a positive or negative edge (154, 156).

4. Apparatus (178) according to either of Claims 2 and 3, the barcode reader (124) being set up to infer the direction of movement (120) from a mathematical sign of a signal change detected by the clock track detector (142) and an absolute value of the signal from the reference detector (144), in particular a coincident signal from the reference detector (144).

5. Apparatus (178) according to the preceding claim, barcode reader (124) being set up

- to infer a first direction of movement (120) upon the detection of a negative edge (156) in the signal from the clock track detector (142) and a first signal level of the signal from the reference detector (144) or a positive edge (154) in the signal from the clock track detector (142) and a second signal level of the signal from the reference detector (144), and
- to infer a second direction of movement (120) opposite the first direction of movement (120) upon the detection of a positive edge (154) in the signal from the clock track detector (142) and the first signal level of the signal from the reference detector (144) or a negative edge (156) in the signal from the clock track detector (142) and the second signal level of the signal from the reference detector (144).

6. Apparatus (178) according to one of Claims 2 to 5, also comprising a data memory (160), the information modules (116) being arranged in at least one information field (118) of the barcode (110), the information field being in the form of a rectangular field having rows (126) and columns of information modules (116), the barcode reader (124) being set up to read information contained in the rows (126) of the barcode (110) and to store said information in the data memory (160) in each case with an address counter (162) corresponding to the row (126), the barcode reader (124) being set up to increment or decrement the address counter (162) according to the detected direction of movement (120).

7. Apparatus (178) according to one of Claims 2 to 6, the optical clock track detector (142) being part of the barcode detector (140).

8. Apparatus (178) according to one of Claims 2 to 7, the reference detector (144) being arranged beside the clock track detector (142) in a direction perpendicular to the direction of movement (120).

9. Apparatus (178) according to one of Claims 2 to 8, comprising at least one optical sensor element (138), in particular a sensor row (186), the clock track detector (142) and the reference detector (144) being set up to use the optical sensor element (138).

10. Apparatus (178) according to one of Claims 2 to 9, also comprising a holder (224) for holding the carrier (112), the holder (224) being set up to enable a movement of the carrier (112) relative to the barcode reader (124), the barcode reader (124) being set up in such a manner that the barcode (110) can be read using the barcode reader (124) during the movement of the carrier (112) in the holder (224).

11. Apparatus (178) according to one of Claims 2 to 10, the clock track (128) having a plurality of periodically alternating clock track modules (130), the alternating clock track modules (130) being set up to alternately generate at least two different signal levels in the clock track detector (142) when passing the clock track detector (142).

12. Apparatus (178) according to one of Claims 2 to 11, the barcode (110) being a two-dimensional barcode (110).

13. Apparatus (178) according to one of Claims 2 to 12, the reference track (132) being arranged parallel to the direction of movement (120).

14. Apparatus (178) according to one of Claims 2 to 13, the reference track (132) having a plurality of periodically alternating reference track modules (134), the alternating reference track modules (134) being set up to alternately generate at least two different signal levels in the reference detector (144) when passing the reference detector (144), a periodicity of the reference track (132) having a phase shift with respect to a periodicity of the clock track (128).

15. Use of an apparatus (178) according to one of Claims 2 to 14 to transmit commodity-specific information from at least one medical commodity (218) to a medical device interacting with the medical commodity (218), in particular a medical measuring device (216) and/or a therapy device.

16. Method for detecting an optical barcode (110) associated with a moving carrier (112), the barcode (110) according to Claim 1 being used, the information modules (116) of the barcode (110) being detected at least in a one-dimensional manner in the method, the clock track modules (130) being detected using at least one clock track detector (142), the clock track modules (130) not being simultaneously used as information modules (116) of the barcode (110) in the method but being used solely for the purpose of clocking, at least one item of reference information relating to the barcode (110) also being acquired using at least one reference detector (144), a direction of movement (120) of the carrier (112) being inferred from at least one signal from the clock track detector (142) and at least one signal from the reference detector (144).

**Revendications**

1. Code à barres (110) comprenant plusieurs modules d'information (116), le code à barres (110) comprenant en outre une piste de cadençage (128) qui cadence la lecture des modules d'information (116) au moyen d'au moins un détecteur de référence (144) et d'un lecteur (124) de code à barres comprenant un détecteur (142) de piste de cadençage,
un déplacement relatif entre le code à barres (110) et le lecteur (124) de code à barres s'effectuant dans une direction de déplacement (120),
le code à barres (110) comportant en outre au moins une piste de référence (132) formée séparément de la piste de cadençage (128),
**caractérisé en ce que**
la piste de référence (132) présente un déphasage par rapport à la piste de cadençage (128),
**en ce que** la piste de cadençage (128) présente plusieurs modules (130) successifs de piste de cadençage disposés les uns après les autres sur une ligne droite ou courbe dans le code à barres (110) et ne servant pas simultanément de modules d'information (116) du code à barres (110) mais servant uniquement au cadençage lorsque le code à barres (110) est déplacé par rapport au lecteur (124) de code à barres,
**en ce que** la piste de référence (132) est configurée comme deuxième piste de cadençage (128) et
**en ce que** la piste de référence (132) présente la même périodicité que la piste de cadençage (128) de telle sorte que lors du déplacement du code à barres (110) par rapport au lecteur (124) de code à barres, le détecteur de référence (144) reçoive des signaux dont la périodicité est déphasée par rapport à la périodicité des signaux reçus par le détecteur (142) de piste de cadençage.

2. Ensemble (178) de transmission d'au moins une information, l'ensemble (178) comportant au moins un support (112) doté d'au moins un code à barres (110) selon la revendication 1, l'ensemble (178) comprenant en outre au moins un lecteur (124) de code à barres qui saisit le code à barres (110) relié au support (112) déplacé,

le lecteur (124) de code à barres comportant au moins un détecteur optique (140) de code à barres qui permet de saisir suivant au moins une dimension des modules d'information (116) du code à barres (110),

le lecteur (124) de code à barres comportant en outre au moins un détecteur optique (142) de piste de cadençage qui saisit des modules (130) de piste de cadençage d'une piste de cadençage (128) du code à barres (110) ainsi qu'au moins un détecteur optique (144) de référence qui saisit au moins une information de référence du code à barres (110),

le lecteur (124) de code à barres étant conçu pour conclure sur une direction de déplacement (120) du support (112) à partir d'au moins un signal du détecteur (142) de piste de cadençage et d'au moins un signal du détecteur de référence (144), l'ensemble (178) étant conçu de telle sorte que les modules (130) de piste de cadençage ne servent pas en même temps de modules d'information (116) du code à barres (110) mais que les modules (130) de piste de cadençage servent uniquement au cadençage lorsque le code à barres (110) est déplacé par rapport au lecteur (124) de code à barres.

3. Ensemble (178) selon la revendication précédente, dans lequel le lecteur (124) de code à barres est conçu pour saisir au moins une modification du signal du détecteur (142) de piste de cadençage provoquée par la piste de cadençage (128), et en particulier par un flanc positif ou un flanc négatif (154, 156).

4. Ensemble (178) selon l'une des revendications 2 ou 3, dans lequel le lecteur (124) de code à barres est conçu pour conclure sur la direction de déplacement (120) à partir du signe d'une modification du signal détectée par le détecteur (142) de piste de cadençage et de la valeur absolue du signal du détecteur de référence (144), en particulier d'un signal coïncident du détecteur de référence (144).

5. Ensemble (178) selon la revendication précédente, dans lequel le lecteur (124) de code à barres est conçu pour conclure sur une première direction de déplacement (120) lors de la détection d'un flanc négatif (156) dans le signal du détecteur (142) de piste de cadençage et d'un premier niveau du signal du détecteur de référence (144) ou d'un flanc positif (154) du signal du détecteur (142) de piste de cadençage et d'un deuxième niveau du signal du détecteur de référence (144) et

conclure sur une deuxième direction de déplacement (120) opposée à la première direction de déplacement (120) lors de la détection d'un flanc positif (154) du signal du détecteur (142) de piste de cadençage et du premier niveau du signal du détecteur de référence (144) ou d'un flanc négatif (156) du signal du détecteur (142) de piste de cadençage et du deuxième niveau du signal du détecteur de référence (144).

6. Ensemble (178) selon l'une des revendications 2 à 5, comprenant en outre une mémoire (160) de données, les modules d'information (116) étant disposés dans au moins un champ d'informations (118) du code à barres (110), le champ d'information étant configuré comme champ rectangulaire doté de lignes (126) et de colonnes de modules d'information (116),

le lecteur (124) de code à barres étant conçu pour lire les informations contenues dans les lignes (126) du code à barres (110) et les conserver dans la mémoire (160) de données, chacune avec un compteur d'adresse (162) correspondant à la ligne (126),

le lecteur (124) de code à barres étant conçu pour incrémenter ou décrémenter le compteur d'adresse (162) en fonction de la direction de déplacement (120) qui a été saisie.

7. Ensemble (178) selon l'une des revendications 2 à 6, dans lequel le détecteur optique (142) de piste de cadençage fait partie du détecteur (140) de code à barres.

8. Ensemble (178) selon l'une des revendications 2 à 7, dans lequel le détecteur de référence (144) est disposé dans une direction perpendiculaire à la direction de déplacement (120) à côté du détecteur (142) de piste de cadençage.

9. Ensemble (178) selon l'une des revendications 2 à 8, comprenant au moins un élément optique de capteur (138), en particulier une ligne (186) de capteurs, le détecteur (142) de piste de cadençage et le détecteur de référence (144) étant conçus pour utiliser l'élément optique de détecteurs (138).

10. Ensemble (178) selon l'une des revendications 2 à 9, comprenant en outre un logement (224) qui loge le support (112), le logement (224) étant conçu pour permettre un déplacement du support (112) par rapport au lecteur (124) de code à barres, le lecteur (124) de code à barres étant conçu de telle sorte que le code à barres (110) puisse être lu au moyen du lecteur (124) de code à barres pendant le déplacement du support (112) dans le logement (224).

11. Ensemble (178) selon l'une des revendications 2 à 10, dans lequel la piste de cadençage (128) présente plusieurs

**EP 2 622 536 B1**

modules (130) de piste de cadençage alternant périodiquement, les modules (130) de piste de cadençage alternés étant conçus pour former en alternance au moins deux niveaux différents de signal, lors du passage du détecteur (142) de piste de cadençage dans le détecteur (142) de piste de cadençage.

**12.** Ensemble (178) selon l'une des revendications 2 à 11, dans lequel le code à barres (110) est un code à barres (110) bidimensionnel.

**13.** Ensemble (178) selon l'une des revendications 2 à 12, dans lequel la piste de référence (132) est disposée parallèlement à la direction de déplacement (120).

**14.** Ensemble (178) selon l'une des revendications 2 à 13, dans lequel la piste de référence (132) présente plusieurs modules (134) de piste de référence alternant périodiquement, les modules (134) de piste de référence alternés étant conçus pour former en alternance au moins deux niveaux différents de signal lors du passage du détecteur de référence (144) dans le détecteur de référence (144), la périodicité de la piste de référence (132) étant déphasée par rapport à la périodicité de la piste de cadençage (128).

**15.** Utilisation d'un ensemble (178) selon l'une des revendications 2 à 14 pour la transmission d'informations spécifiques à au moins un article de consommation médicale (218) sur un appareil médical coopérant avec l'article de consommation médicale (218), en particulier un appareil de mesure médicale (216) et/ou un appareil thérapeutique.

**16.** Procédé de saisie d'un code à barres optique (110) relié à un support (112) déplacé, le code à barres (110) étant utilisé selon la revendication 1,
les modules d'information (116) du code à barres (110) étant saisis suivant au moins une dimension dans le procédé,
les modules (130) de piste de cadençage étant saisis à l'aide d'au moins un détecteur (142) de piste de cadençage,
les modules (130) de piste de cadençage n'étant pas utilisés en même temps comme modules d'information (116) du code à barres (110) dans le procédé mais uniquement pour un cadençage,
au moins une information de référence du code à barres (110) étant saisie au moyen d'au moins un détecteur de référence (144),
une conclusion sur la direction de déplacement (120) du support (112) étant tirée d'au moins un signal du détecteur (142) de piste de cadençage et d'au moins un signal du détecteur de référence (144).

Fig. 1

Fig. 2

114, 146 ⎯ ▪ L = 0

114, 148 ⎯ ☐ H = 1

Fig. 3 a

128, 130, 146

150 ⎯ ⎫ 152, 154

128, 130, 148

Fig. 3 b

128, 130, 148

150 ⎯ ⎫ 152, 156

128, 130, 146

Fig. 3 c

Fig. 4

150

158

152 ⌐ L i

Fig. 5 a

150

158

152 ⌐ H i

Fig. 5 b

150

158

152 ⌐ H d

Fig. 5 c

150

158

152 ⌐ L d

Fig. 5 d

Fig. 6

Fig. 7 a

L0

Fig. 7 b

Fig. 7 c

Fig. 7 d

Fig. 7 e

Fig. 7 f

Fig. 7 g

Fig. 7 h

Fig. 7 i

Fig. 7 j

Fig. 7 k

Fig. 7 L

Fig. 7 m

Fig. 7 n

Fig. 7 o

Fig. 8

Fig. 9

Fig. 10

Fig. 11

124, 184

194 198 208 200, 206

122, 138, 186

188, 190

140

142

144

200, 202

188, 192

180 196

200, 204 208

y

x

**Fig. 12 a**

110 112 116, 130, 134 178

124, 184 208 200, 206

h

122, 140, 142, 144, 186

188, 190 200, 204

200, 202 198 188, 192

**Fig. 12 b**

Fig. 13

Fig. 14

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0180283 A2
- EP 0379017 A2
- EP 0492326 A2